(19) Europäisches Patentamt
European Patent Office
Office européen des brevets

(11) **EP 4 295 536 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **22710966.7**

(22) Anmeldetag: **17.02.2022**

(51) Internationale Patentklassifikation (IPC):
*H04L 9/40* (2022.01)    *G06F 16/9535* (2019.01)
*H04W 12/02* (2009.01)    *G06F 21/62* (2013.01)

(52) Gemeinsame Patentklassifikation (CPC):
**H04L 63/104; G06F 21/6245; H04L 63/02; H04L 63/0428; H04W 12/02**

(86) Internationale Anmeldenummer:
**PCT/EP2022/053981**

(87) Internationale Veröffentlichungsnummer:
**WO 2022/175397 (25.08.2022 Gazette 2022/34)**

(54) **AUSLESEN LOKAL GESPEICHERTER VERSCHLÜSSELTER IDENTITÄTSATTRIBUTE**

READING OUT LOCALLY STORED ENCRYPTED IDENTITY ATTRIBUTES

LECTURE D'ATTRIBUTS D'IDENTITÉ CHIFFRÉS MIS EN MÉMOIRE LOCALEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2021 DE 102021103996**

(43) Veröffentlichungstag der Anmeldung:
**27.12.2023 Patentblatt 2023/52**

(73) Patentinhaber: **Bundesdruckerei GmbH 10969 Berlin (DE)**

(72) Erfinder:
• **DIETRICH, Frank**
  **12437 Berlin (DE)**
• **SCHWAN, Matthias**
  **13086 Berlin (DE)**

(74) Vertreter: **Richardt Patentanwälte PartG mbB Wilhelmstraße 7 65185 Wiesbaden (DE)**

(56) Entgegenhaltungen:
DE-A1- 102019 100 335    US-A1- 2018 176 017

EP 4 295 536 B1

**Beschreibung**

Die Erfindung betrifft ein Verfahren zum Auslesen ein oder mehrerer Identitätsattribute einer auf einem mobilen Endgerät gespeicherten elektronischen Identität. Ferner betrifft die Erfindung ein mobiles Endgerät sowie ein verteiltes System mit einem entsprechenden mobilen Endgerät zum Auslesen einer entsprechenden von Identitätsattributen einer entsprechenden elektronischen Identität.

Mobile Endgeräte, wie beispielsweise Smartphones, sind allgegenwärtig. Sie werden in vielen Lebensbereichen und Situationen zur Erfüllung verschiedenster Aufgaben im digitalen Bereich verwendet. Dabei kommen mobile Endgeräte auch als Identitätsnachweis, Authentisierungs- und Autorisierungstoken, etwa in elektronischen Geschäftsprozessen, zum Einsatz. Diese Endgeräte unterscheiden sich jedoch sowohl sehr stark in ihrer Hardwareausstattung als auch in dem jeweils verwendeten Betriebssystem und dessen Varianten und Versionen. Eine gemeinsame Basis für den kryptographischen Schutz von auf diesen Geräten zur Verfügung gestellten elektronischen Identitäten bzw. von den entsprechenden elektronischen Identitäten umfassten Identitätsattributen ist somit auf Basis dieser schwierig. Insbesondere ist es schwierig ein kryptographisch gesichertes Verfahren zum Auslesen der Identitätsattribute zu implementieren.

Die DE 10 2019 100335 A1 beschreibt ein Verfahren zum sicheren Bereitstellen eines personalisierten elektronischen Identität auf einem Endgerät, die von einem Nutzer zum Identifizieren bei Inanspruchnahme einer Online-Dienstleistung nutzbar ist, wobei bei dem Verfahren in einem System mit Datenverarbeitungseinrichtungen und einem Endgerät, welches einem Nutzer zugeordnet ist, eine Identifikations-Applikation auf dem Endgerät und weiterhin eine Personalisierungs-Applikation und eine Identitätsprovider-Applikation ausgeführt werden. Das Verfahren umfasst hierbei Folgendes: Übertragen einer Anfrage zum Übermitteln eines dem Nutzer zugeordneten Identitätsattributs von der Personalisierungs-Applikation an die Identitätsprovider-Applikation; Übertragen des Identitätsattributs von der Identitätsprovider-Applikation an die Personalisierungs-Applikation, nachdem von dem Nutzer eine Zustimmung zum Übertragen des Identitätsattributs durch die Identitätsprovider-Applikation empfangen wurde; Erzeugen eines asymmetrischen Schlüsselpaares mit einem öffentlichen und einem privaten Schlüssel durch die Identifikations-Applikation auf dem Endgerät; Übertragen des öffentlichen Schlüssels von der Identifikations-Applikation auf dem Endgerät an die Personalisierungs-Applikation; Erzeugen eines elektronischen Zertifikats für den öffentlichen Schlüssel durch die Personalisierungs-Applikation und Speichern des elektronischen Zertifikats zu einer ersten Public-Key-Infrastruktur der Personalisierungs-Applikation in einem Datenspeicher, weiterhin umfassend: Erzeugen eines Hash-Werts für das Identitätsattribut und Aufnehmen des Hash-Werts in das elektronische Zertifikat. Das Identitätsattributs wird verschlüsselt und zusammen mit dem elektronischen Zertifikat von der Personalisierungs-Applikation an die Identifikations-Applikation auf dem Endgerät übertragen. Beides wird dort in einer lokalen Speichereinrichtung des Endgeräts gespeichert.

Der Erfindung liegt die Aufgabe zugrunde, ein verbessertes Verfahren zum Auslesen von Identitätsattribute zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Auslesen ein oder mehrerer Identitätsattribute einer elektronischen Identität. Die elektronische Identität ist auf einem mobilen Endgerät gespeichert und wird von einer auf dem mobilen Endgerät installierten Applikation verwaltet. Für die elektronische Identität wird auf einem Server ein entferntes Sicherheitselement bereitgestellt. Der Server kommuniziert mit dem mobilen Endgerät über ein Netzwerk.

Die elektronische Identität umfasst einen auf dem mobilen Endgerät gespeicherten ersten Satz Identitätsattribute, welcher ein oder mehrere Identitätsattribute umfasst. Die Identitätsattribute in dem ersten Satz Identitätsattribute sind jeweils individuell unter Verwendung eines ersten kryptographischen Schlüssels des entfernten Sicherheitselements verschlüsselt. Den Identitätsattributen in dem ersten Satz Identitätsattribute ist jeweils ein Attributsidentifikator zugeordnet. Die unter Verwendung des ersten kryptographischen Schlüssels verschlüsselten Identitätsattribute des ersten Satzes Identitätsattribute sind ferner unter Verwendung eines zweiten kryptographischen Schlüssels des mobilen Endgeräts verschlüsselt.

Das Verfahren umfasst durch die Applikation auf dem mobilen Endgerät:

- Empfangen einer Leseanfrage eines auslesenden Computersystems, welche Attributsidentifikatoren ein oder mehrere auszulesende Identitätsattribute umfasst,
- Auswählen der auszulesenden Identitätsattribute aus dem ersten Satz Identitätsattribute, wobei im Zuge des Auswählens die unter Verwendung des zweiten kryptographischen Schlüssels erstellte Verschlüsselung zumindest teilweise entschlüsselt wird, während die unter Verwendung des ersten kryptographischen Schlüssels erstellte Verschlüsslung aufrechterhalten wird,
- Erstellen eines zweiten Satzes Identitätsattribute, welcher die ausgewählten auszulesenden Identitätsattribute umfasst, die unter Verwendung des ersten kryptographischen Schlüssels verschlüsselt sind,
- Senden des zweiten Satzes Identitätsattribute an den Server,

- in Antwort auf das Senden des zweiten Satzes Identitätsattribute, Empfangen des unter Verwendung eines dritten kryptographischen Schlüssels des auslesenden Computersystems verschlüsselten zweiten Satzes Identitätsattribute von dem Server, wobei die unter Verwendung des ersten kryptographischen Schlüssels erstellte Verschlüsselung der ausgewählten auszulesenden Identitätsattribute in dem empfangenen zweiten Satz Identitätsattribute durch das entfernte Sicherheitselement vor dem Verschlüsseln mit dritten kryptographischen Schlüssel entschlüsselt wurde,
- Weiterleiten des unter Verwendung des dritten kryptographischen Schlüssels verschlüsselten zweiten Satzes Identitätsattribute an das auslesende Computersystem.

Ausführungsformen können den Vorteil haben, dass sie eine kryptographische Absicherung auszulesender Identitätsattribute einer auf dem mobilen Endgerät gespeicherten elektronischen Identität unter Verwendung eines entfernten Sicherheitselements ermöglichen. Dabei besitzt beispielsweise das mobile Endgerät die Verfügungshoheit über die Identitätsattribute, während die kryptographische Absicherung der Identitätsattribute bzw. des Bereitstellens der entsprechenden Identitätsattribute durch das entfernte Sicherheitselement gewährleistet wird.

Ausführungsformen können den Vorteil haben, dass Identitätsattribute einer elektronischen Identität lokal auf einem mobilen Endgerät bereitgestellt werden können. Durch das lokale Bereitstellen liegt die Verfügungshoheit über die Verwendung der entsprechenden Identität lokal bei dem mobilen Endgerät bzw. einem autorisierten Nutzer des mobilen Endgeräts. Zugleich werden die Identitätsattribute lokal aber nur in verschlüsselter Form bereitgestellt, d.h. verschlüsselt unter Verwendung des ersten kryptographischen Schlüssels des entfernten Sicherheitselements. Somit können die Identitätsattribute lokal auch in einer unsicheren Umgebung gespeichert werden, da für einen Zugriff auf die Identitätsattribute, d.h. für ein Entschlüsseln der Identitätsattribute, das entfernte Sicherheitselement notwendig ist. Neben einer kryptographischen Absicherung der lokalen Speicherung auf dem mobilen Endgerät, hat dies den Vorteil, dass eine Bindung der verschlüsselten Identitätsattribute an das entfernte Sicherheitselement implementiert werden kann. Mittels dieser Bindung kann beispielsweise sicherstellen werden, dass das entfernte Sicherheitselement mit seinen kryptographischen Schlüsseln und kryptographischen Mitteln stets in das Auslesen der lokal gespeicherten Identitätsattribute involviert wird.

Ferner können Ausführungsformen den Vorteil haben, dass anhand der Attributsidentifikatoren auszulesende Identitätsattribute identifiziert und ausgewählt werden können, selbst wenn die Identitätsattribute lokal ausschließlich in verschlüsselter Form zur Verfügung stehen. Beispielsweise umfasst der erste Satz Identitätsattribute, welche beispielsweise einen Vornamen, einen Nachnamen, eine Straße, eine Hausnummer, eine Postleitzahl, einen Wohnort, ein Geburtsdatum, einen Geburtsort und/oder eine Staatsangehörigkeit des Nutzers eines mobilen Endgeräts angeben in verschlüsselter Form. Anhand der Attributsidentifikatoren kann beispielsweise identifiziert werden, welcher der verschlüsselten Datenwerte den Vornamen, den Nachnamen, die Straße, die Hausnummer, die Postleitzahl, den Wohnort, das Geburtsdatum, den Geburtsort oder die Staatsangehörigkeit des Nutzers eines mobilen Endgeräts angibt. Somit kann beispielsweise der verschlüsselte Datenwerte des Geburtsdatums des Nutzers von der Applikation bzw. dem mobilen Endgerät aus dem ersten Satz Identitätsattribute als auszulesendes Identitätsattribut ausgewählt werden, ohne dass die Applikation bzw. das mobilen Endgerät Kenntnis von dem Geburtsdatum besitzt oder erlangt. Im Ergebnis erhält noch nicht einmal der autorisierte Nutzer des mobilen Endgeräts selbst Zugriff auf die Identitätsattribute des ersten Satzes Identitätsattribute in unverschlüsselter Form. Er kann die Identitätsattribute zwar nutzen und auf Leseanfragen hin für auslesende Computersysteme zur Verfügung stellen, er selbst kann aber keinen Zugriff auf die Identitätsattribute erlangen. Somit kann sichergestellt werden, dass auch ein unautorisierter Dritter, welcher sich unberechtigter Weise Zugriff auf das mobile Endgerät und den darauf gespeicherten Satz von Identitätsattribute verschafft, keinen Zugriff auf die Identitätsattribute in unverschlüsselter Form erhält. Es folglich in effektiver Weise verhindert werden, dass ein entsprechender unautorisierter Dritter Kenntnis vom konkreten Inhalt der Identitätsattribute erhält.

Beispielsweise kann der erste Satz Identitätsattribute eine Datenstruktur in Form einer Tabelle aufweisen. Die Datenstruktur kann dabei beispielsweise zeilenorientiert oder spaltenorientiert sein. Beispielsweise wird der erste Satz Identitätsattribute in Form einer Tabelle bereitgestellt, welche eine erste Spalte oder Zeile mit den Attributsidentifikatoren, wie etwa Attributnamen, umfasst und eine zugehörige zweite Spalte bzw. Zeile mit verschlüsselten Attributwerten, d.h. mit dem Identitätsattribut in verschlüsselter Form, welches der jeweilige Attributsidentifikator identifiziert.

Bei der Verschlüsselung der Identitätsattribute unter Verwendung des ersten kryptographischen Schlüssels des entfernten Sicherheitselements handelt es sich um eine Verschlüsselung, welche lokal auf dem mobilen Endgerät nicht entschlüsselt werden kann, sondern welche beispielsweise ausschließlich auf dem Sicherheitselement des Servers entschlüsselt werden kann.

Die zusätzliche Verschlüsselung unter Verwendung des zweiten kryptographischen Schlüssels des mobilen Endgeräts kann den Vorteil haben, dass ein Beitrag des mobilen Endgeräts zur Entschlüsselung der Identitätsattribute notwendig ist. Beispielsweise sind die individuellen Identitätsattribute zusätzlich zu der Verschlüsselung unter Verwendung des ersten kryptographischen Schlüssels des entfernten Sicherheitselements zusätzlich unter Verwendung des zweiten kryptographischen Schlüssels des mobilen Endgeräts verschlüsselt. Alternativ kann der erste Satz Identitätsattribute, etwa in Form einer Tabelle, als Ganzes unter Verwendung des zweiten kryptographischen Schlüssels des mobilen Endgeräts verschlüsselt sein. In beiden Fällen muss zunächst die Verschlüsselung unter Verwendung des zweiten kryptographischen Schlüssels durch das mobile Endgerät entschlüsselt werden, damit das entfernte Sicherheitselement in die Lage zur abschließenden Entschlüsselung der ausgewählten Identitätsattribute versetzt wird. Abschließende Entschlüsselung meint hier, dass die Identitätsattribute in Klartext vorliegen. Zum Senden an das auslesende Computersystem, können die Identitätsattribute in Klartext unter Verwendung des dritten kryptographischen Schlüssels des auslesenden Computersystems verschlüsselt werden. Somit kann sichergestellt werden, dass das mobile Endgerät aktiv in Form der Entschlüsselung der unter Verwendung des zweiten kryptographischen Schlüssels erstellten Verschlüsslung zum Bereitstellen ausgewählter Identitätsattribute für das auslesende Computersystem beitragen muss. Beispielsweise kann so ein einfaches Senden des ersten Satzes Identitätsattribute quasi vorbei an dem Nutzer des mobilen Endgeräts verhindert werden. Der erste Satz Identitätsattribute wäre nach Ausführungsformen für das Sicherheitselement beispielsweise nicht zu entschlüsseln.

Eine Umverschlüsselung der ausgewählten Identitätsattribute des zweiten Satzes Identitätsattribute, wobei die unter Verwendung des ersten kryptographischen Schlüssels erstellte Verschlüsselung entschlüsselt wird und die Identitätsattribute in Klartext mit dem dritten kryptographischen Schlüssel verschlüsselt werden, kann sicherstellen, dass der umverschlüsselte zweite Satz Identitätsattribute beispielsweise nur von dem empfangenden auslesenden Computersystem entschlüsselt werden kann und nicht von dem weiterleitenden mobilen Endgerät.

Ausführungsformen können den Vorteil haben, dass eine Möglichkeit zur Verwendung eines entfernten Sicherheitselements, d.h. eine Remote Security Elements, zum Bereitstellen kryptographischer Funktionen für eine auf einem mobilen Endgerät installierte Applikation bereitgestellt werden kann. Eine entsprechendes Sicherheitselement umfasst beispielsweise kryptographische Schlüssel zum Ausfüllen kryptographischer Protokolle, wie beispielsweise Verschlüsselungen, Entschlüsselungen und/oder Signaturen. Ein entsprechendes Sicherheitselement muss somit nicht auf dem mobilen Endgerät selbst implementiert sein, sondern kann durch einen Server, welcher mit dem mobilen Endgerät über ein Netzwerk kommuniziert, für das mobile Endgerät bereitgestellt werden.

Beispielsweise kann das entfernte Sicherheitselement für eine verschlüsselte Kommunikation zwischen der auf dem mobilen Endgerät installierten Applikation und dem auslesenden Computersystem verwendet werden. Beispielsweise sind auf dem mobilen Endgerät ein oder mehrere elektronische Identitäten gespeichert. Die elektronischen Identitäten umfassen jeweils ein oder mehrere Identitätsattribute. Die entsprechenden Identitätsattribute sind beispielsweise in verschlüsselter Form auf den mobilen Endgeräten gespeichert. Beispielsweise verfügt das mobile Endgerät nicht über einen oder mehrere kryptographische Schlüssel zum Entschlüsseln der verschlüsselten Identitätsattribute. Beispielsweise sind in den Identitätsattributen verschiedener elektronischer Identitäten mit verschiedenen kryptographischen Schlüsseln verschlüsselt. Der oder die kryptographischen Schlüssel zum Entschlüsseln der Identitätsattribute sind beispielsweise in dem entfernten Sicherheitselement gespeichert. Somit besitzt das mobile Endgerät und damit der Nutzer des mobilen Endgeräts die Verfügungshoheit über die Identitätsattribute, während deren kryptographische Sicherung durch das entfernte Sicherheitselement erfolgt. Somit kann einerseits die kryptographische Sicherung der Identitätsattribute auf einen entfernten Server ausgelagert werden, während der Nutzer nach wie vor die Verfügungshoheit über die Identitätsattribute behält, d.h. der Nutzer kann entscheiden, welche Identitätsattribute welchem Computersystem zum Auslesen zur Verfügung gestellt werden. Ohne Einbeziehung des mobilen Endgeräts und damit des Nutzers des mobilen Endgeräts können keine Identitätsattribute zur Verfügung gestellt werden.

Sollen Identitätsattribute ausgelesen werden, so empfängt der Server die entsprechenden auszusenden Identitätsattribute von der auf dem mobilen Endgerät installierten Applikation, welche die zugehörige elektronische Identität verwaltet. Das entfernte Sicherheitselement des Servers entschlüsselt die auszulesenden Identitätsattribute unter Verwendung eines der elektronischen Identität zugeordneten kryptographischen Schlüssels. Bei dem kryptographischen Schlüssel handelt es sich beispielsweise um einen symmetrischen kryptographischen Schlüssel, welcher in dem entfernten Sicherheitselement gespeichert ist. Beispielsweise ist das Sicherheitsmodul in Form eines Hardwaresicherheitsmoduls (HSM) des Servers implementiert. Das entsprechende Sicherheitselement kann beispielsweise ein der entsprechenden Applikation zugeordnetes Applet umfassen. In einer der elektronischen Identität zugeordneten Sub-Security-Domain des Sicherheitselements ist beispielsweise der entsprechende kryptographische Schlüssel zur Entschlüsselung der Identitätsattribute gespeichert. Die entschlüsselten auszulesenden Identitätsattribute werden durch das Sicherheitselement unter Verwendung eines ephemeren symmetrischen Schlüssels verschlüsselt. Der entsprechende ephemere symmetrische kryptographische Schlüssel wurde beispielsweise im Zuge eines Aufbaus eines kryptographisch gesicherten Kommunikationskanals zwischen dem entfernten Sicherheitselement und dem auslesenden Computersystem erzeugt. Der entsprechende ephemere symmetrische kryptographische Schlüssel ist beispielsweise zur Sicherung der Kommunikation mit dem auslesenden Computersystem in den entfernten Sicherheitselementen gespeichert. Die Kommunikation zwischen dem entfernten Sicherheitselement bzw. dem Server einerseits und dem auslesenden Computersystem andererseits erfolgt beispielsweise über die Applikation bzw. das mobile Endgerät. Der Server sendet unter Verwendung des ephemeren symmetrischen Schlüssels verschlüsselte Identitätsattribute an das auslesende Computersystem.

Ausführungsformen können den Vorteil haben, dass eine hardwarebasierte Sicherung elektronischer Identitäten auf vom mobilen Endgerät unabhängiger Hardware, d.h. unter Verwendung des entfernten Sicherheitselements ("remote secure element"), unabhängig von der Hard- und Softwareausstattung des mobilen Endgeräts selbst bereitgestellt werden kann. Beispielsweise können Integrität, Authentizität, Zurechenbarkeit der elektronischen Identitäten, etwa durch eine Authentisierung unter Verwendung des entfernten Sicherheitselements bereitgestellt werden. Ferner kann eine dezentrale Speicherung der Identitätsdaten auf dem mobilen Endgerät ermöglicht werden, bei welcher der Nutzer des mobilen Endgeräts die Verfügungshoheit über die Identitätsattribute seiner elektronischen Identitäten behält. Ferner kann eine sichere Verifikation der elektronischen Identitäten auf dem mobilen Endgerät mittels geeigneter kryptographischer Verfahren sichergestellt werden. Schließlich kann eine variable und austauschbare Nutzung von Authentisierungsverfahren ermöglicht werden.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale. Beispielsweise wird der entsprechende Nachweis durch einen Authentifizierungssensor des mobilen Endgeräts in Form von Authentifizierungsdaten des Nutzers erfasst und von einem Sicherheitselement des mobilen Endgeräts mit einem oder mehreren hinterlegten Referenzwerten verglichen. Bei dem die erfassten Authentifizierungsdaten auswertenden Sicherheitselement handelt es sich beispielsweise um ein Sicherheitselement des Betriebssystems des mobilen Endgeräts. Im Falle einer ausreichenden Übereinstimmung zwischen den erfassten Authentifizierungsdaten und den hinterlegten Referenzwerten, bestätigt das Sicherheitselement eine erfolgreiche Authentifizierung des Nutzers. Beispielsweise umfasst eine Bestätigung der erfolgreichen Authentifizierung des Nutzers ein Ausführen eines Challenge-Response-Verfahrens durch das bestätigende Sicherheitselement. Beispielsweise bestätigt das bestätigende Sicherheitselement auf eine erfolgreiche Authentifizierung des Nutzers hin diese erfolgreiche Authentifizierung gegenüber einem weiteren Sicherheitselement, wie etwa dem entfernten Sicherheitselement mittels einer korrekten Response auf eine Challenge des entfernten Sicherheitselements.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise eine Kamera des mobilen Endgeräts umfassen. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort, umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird ein erstes Sicherheitselement, etwa ein Sicherheitselement des Betriebssystems des mobilen Endgeräts, durch ein zweites Sicherheitselement, etwa das entfernte Sicherheitselement, unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das erste Sicherheitselement erzeugt wird. Somit weiß das zweite Sicherheitselement, im Falle eines erfolgreichen Challenge-Response-Verfahrens nicht nur, dass die Nutzerauthentifizierung bestätigt wurde, sondern dass diese durch das erste Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss.

Beispielsweise erzeugt die erste Instanz eine Zufallszahl ("Nonce") und sendet diese an die zweite Instanz. Die zweite Instanz verwendet beispielsweise ein gemeinsames Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Alternativer Weise kann das gemeinsame Geheimnis, etwa ein symmetrischer kryptographischer Schlüssel, zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert.

Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Unter einem Sicherheitselement, auch "Secure Element" oder "SE" genannt, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE (Trusted Excecution Environment). Beispielsweise kann das erste Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständige Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Nutzer-Computersystem" wird hier ein Computersystem verstanden, auf welches der Nutzer Zugriff hat. Hierbei kann es sich zum Beispiel um einen Desktop-Computer (PC), ein Serviceterminal, oder ein mobiles tragbares Kommunikationsgerät, wie etwa ein Laptop, ein Tablet, ein Smartphone oder einen anderen Smart Device handeln.

Unter einem "Dienst-Server" wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Sender oder Empfänger von Daten, weitergegeben werden darf, sowie einem privaten Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten Schlüssels zu verschlüsseln oder mit dem privaten Schlüssel erstellte digitale Signaturen zu prüfen. Ein privater Schlüssel ermöglicht es seinem Inhaber mit dem öffentlichen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnet Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikataussteller zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen Schlüssel der Allgemeinheit zur Verfügung stellt, ermöglicht sie es den Nutzern asymmetrischer Kryptosysteme den öffentlichen Schlüssel einer Identität, beispielsweise einer Person, einer Organisation, oder Computersystem, zuzuordnen.

Nach Ausführungsformen kann die elektronische Identität eine offiziell anerkannte Identität, wie zum Beispiel eine auf Grundlage eines offiziellen Ausweisdokuments, etwa eines Personalausweises oder Reisepasses, erstellte elektronische Identität umfassen.

Die elektronische Identität eines Nutzers ist eindeutig, d.h. einzigartig und unverwechselbar. Sie wird auf der Grundlage von Merkmalen, sog. Identitätsattributen, definiert. Eine elektronische Identität umfasst beispielsweise personenbezogenen Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen elektronischen Identitäten verfügen. Diese elektronischen Identitäten können unterschiedlichen Sicherheitsanforderungen entsprechen.

Nach Ausführungsformen kann eine auf dem mobilen Endgerät gespeicherte und von dem ID-Anwendungsprogramm bereitgestellte bzw. verwaltete elektronische Identität ohne zusätzliche Hardware neben dem mobilen Endgerät zur Identifizierung und Authentifizierung des Nutzers des mobilen Endgeräts verwendet werden.

Identitätsattribute werden beispielsweise von Service-Providern bzw. Dienstanbietern für Online-Dienste nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider ausgelesen und dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen handelt es sich bei dem ersten kryptographischen Schlüssel des Sicherheitselements um einen der elektronischen Identität zugeordneten symmetrischen kryptographischen Schlüssel, welcher in dem entfernten Sicherheitselement gespeichert ist. Ausführungsformen können den Vorteil haben, dass der symmetrische kryptographische Schlüssel das Sicherheitselement nicht verlässt und damit ausschließlich das Sicherheitselement zum Entschlüsseln der unter Verwendung des ersten kryptographischen Schlüssels in Form des symmetrischen kryptographischen Schlüssels des Sicherheitselements in der Lage ist.

Nach Ausführungsformen handelt es sich bei dem ersten kryptographischen Schlüssel des Sicherheitselements um einen der elektronischen Identität zugeordneten öffentlichen kryptographischen Schlüssel, welchem ein in dem entfernten Sicherheitselement gespeicherter privater kryptographischer Schlüssel der elektronischen Identität zugeordnet ist. Ausführungsformen können den Vorteil haben, dass der private kryptographische Schlüssel das Sicherheitselement nicht verlässt und damit ausschließlich das Sicherheitselement zum Entschlüsseln der unter Verwendung des ersten kryptographischen Schlüssels in Form des öffentlichen kryptographischen Schlüssels des Sicherheitselements in der Lage ist.

Nach Ausführungsformen ist die Verschlüsselung der unter Verwendung des ersten kryptographischen Schlüssels verschlüsselten Identitätsattribute des ersten Satzes Identitätsattribute, welche unter Verwendung des zweiten kryptographischen Schlüssels erstellt ist, eine individuelle Verschlüsselung jeweils der einzelnen Identitätsattribute. Das Entschlüsseln im Zuge des Auswählens umfasst ein selektives Entschlüsseln der unter Verwendung des zweiten kryptographischen Schlüssels erstellten Verschlüsselungen der ausgewählten Identitätsattribute. Ausführungsformen können den Vorteil haben, dass bei den ausgewählten Identitätsattribute die unter Verwendung des zweiten kryptographischen Schlüssels erstellten Verschlüsselungen von dem mobilen Endgerät entschlüsselt werden. Bei den nicht ausgewählten Identitätsattributen bleiben die unter Verwendung des zweiten kryptographischen Schlüssels erstellten Verschlüsselungen bestehen. Somit kann durch das mobile Endgerät und/oder einen das mobile Endgerät bedienenden autorisierten Nutzer selektiv gesteuert werden, für welche Identitätsattribute die unter Verwendung des zweiten kryptographischen Schlüssels erstellten Verschlüsselungen entschlüsselt werden. Somit kann ein Zugriff seitens des mobilen Endgeräts bzw. des Nutzers des mobilen Endgeräts effektiv auf die ausgewählten Identitätsattribute beschränkt werden. Dabei ist ein Zugriff auf die Attributsidentifikatoren beispielsweise ohne Entschlüsselung der unter Verwendung des zweiten kryptographischen Schlüssels erstellten Verschlüsselungen möglich.

Nach Ausführungsformen ist die Verschlüsselung der unter Verwendung des ersten kryptographischen Schlüssels verschlüsselten Identitätsattribute des ersten Satzes Identitätsattribute, welche unter Verwendung des zweiten kryptographischen Schlüssels erstellt ist, eine Verschlüsselung des ersten Satzes Identitätsattribute als Ganzes. Das Entschlüsseln im Zuge des Auswählens umfasst ein Entschlüsseln der unter Verwendung des zweiten kryptographischen Schlüssels erstellten Verschlüsselung des ersten Satzes Identitätsattribute als Ganzes. Die Auswahl der Identitätsattribute erfolgt unter Verwendung des resultierenden entschlüsselten ersten Satzes Identitätsattribute. Ausführungsformen können den Vorteil haben, dass ein Zugriff auf die Attributsidentifikatoren beispielsweise nur nach einer Entschlüsselung der unter Verwendung des zweiten kryptographischen Schlüssels erstellten Verschlüsselung des ersten Satzes Identitätsattribute als Ganzes möglich ist. Somit muss zuerst der erste Satz Identitätsattribute als Ganzes entschlüsselt werden, bevor Identitätsattribute für den zweiten Satz Identitätsattribute ausgewählt werden können. Somit ist das Entschlüsselung der unter Verwendung des zweiten kryptographischen Schlüssels erstellten Verschlüsselung eine notwendige Voraussetzung, damit überhaupt eine Auswahl getroffen und damit ein zweiter Satz Identitätsattribute erzeugt werden kann.

Nach Ausführungsformen werden Kopien der Identitätsattribute, deren Verschlüsselung, die unter Verwendung des zweiten kryptographischen Schlüssels erstellt ist, im Zuge des Auswählens entschlüsselt wurde, von dem mobilen Endgerät gelöscht. Beispielsweise erfolgt das Löschen nach dem Senden des zweiten Satzes Identitätsattribute an den Server. Ausführungsformen können den Vorteil, dass Identitätsattribute nur im Zuge eines Erstellens eines zweiten Satzes Identitätsattribute auf dem mobilen Endgerät ohne Verschlüsselung unter Verwendung des zweiten kryptographischen Schlüssels vorhanden sind. Beispielsweise erfolgt eine Speicherung von Identitätsattribute auf dem mobilen Endgerät ohne Verschlüsselung unter Verwendung des zweiten kryptographischen Schlüssels nur als Zwischenspeicherung in einem flüchtigen Speicher des mobilen Endgeräts. Im Ergebnis kann mithin sichergestellt werden, dass zum Bereitstellen eines Identitätsattribute auf dem mobilen Endgerät ohne Verschlüsselung unter Verwendung des zweiten kryptographischen Schlüssels stets eine aktive Entschlüsselung der entsprechenden Identitätsattribute durch das mobile Endgerät notwendig ist.

Nach Ausführungsformen handelt es sich bei dem zweiten kryptographischen Schlüssel des mobilen Endgeräts um einen privaten kryptographischen Schlüssel des mobilen Endgeräts, welchen das mobile Endgerät zusammen mit einem öffentlichen kryptographischen Schlüssel des entfernten Sicherheitselements oder einem öffentlichen kryptographischen Schlüssel eines Servers eines Personalisierungsdienstes zum Berechnen eines symmetrischen kryptographischen Schlüssels verwendet, mit welchem das mobile Endgerät die unter Verwendung des zweiten kryptographischen Schlüssels erstellte Verschlüsselung der Identitätsattribute des ersten Satzes Identitätsattribute entschlüsselt.

Ausführungsformen können den Vorteil haben, dass es dem mobilen Endgerät unter Verwendung seines privaten kryptographischen Schlüssels ermöglicht wird den symmetrischen kryptographischen Schlüssel zum Entschlüsseln zu berechnen. Hierzu benötigt das mobile Endgerät lediglich einen weiteren öffentlichen Schlüssel, welcher per Definition dazu vorgesehen ist, öffentlich zugänglich zu sein. Der öffentliche kryptographische Schlüssel des entfernten Sicherheitselements wird dem mobilen Endgerät beispielsweise von dem entfernten Sicherheitselement bereitgestellt. Der öffentliche kryptographische Schlüssel des Servers des Personalisierungsdienstes wird dem mobilen Endgerät beispielsweise von dem entsprechenden Server bereitgestellt. Alternativ kann der entsprechende öffentliche kryptographische Schlüssel beispielsweise Teil der Applikation sein, etwa in Form eines Zertifikats.

Im Zuge der Personalisierung der Applikation wird in dem Kanal zwischen Applikation und Personalisierungsdienst ein öffentlicher kryptographischer Schlüssel des mobilen Endgeräts an den Personalisierungsdienst übertragen. Auf dem mobilen Endgerät ist ein zu diesem übertragenen öffentlichen kryptographischen Schlüssel zugehöriger privater kryptographischer Schlüssel hinterlegt. Der übertragene öffentliche kryptographische Schlüssel und der zugehörige private kryptographische Schlüssel gehören zu demselben asymmetrischen kryptographischen Schlüsselpaar. Der zugehörige private kryptographische Schlüssel ist in einem geschützten Speicherbereich auf dem mobilen Endgerät gespeichert. Beispielsweise ist der zugehörige private kryptographische Schlüssel geschützt in einem Hardware-Key-Store, in einer Trusted Execution Environment (TEE), in einer Secure Enclave. Beispielsweise kann zu dem asymmetrischen Schlüsselpaar auch ein Zertifikat bereitgestellt werden, welches den öffentlichen kryptographischen Schlüssel des entsprechenden asymmetrischen Schlüsselpaars umfasst und zur Anmeldung am Personalisierungsdienst verwendet wird. Beispielsweise erfolgt die Anmeldung mittels gegenseitiger Transport-Layer-Security-Authentifizierung ("mutual Transport Layer Security authentication"/mTLS Authentifizierung). Auf diese Weise kann der öffentlichen kryptographischen Schlüssel beispielsweise mit dem Zertifikat an den Personalisierungsdienst übertragen werden würde.

Im Falle eines symmetrischen kryptographischen Schlüssels ist der Schlüssel zum Verschlüsseln identisch mit dem Schlüssel zum Entschlüsseln. Ferner kann so eine Verschlüsselung der Identitätsattribute unter Verwendung des zweiten kryptographischen Schlüssels im Zuge eines Bereitstellens der Identitätsattribute bzw. des ersten Satzes Identitätsattribute ermöglicht werden. Beispielsweise kann der entsprechende symmetrische kryptographische Schlüssel von dem entfernten Sicherheitselement unter Verwendung des privaten kryptographischen Schlüssels des entfernten Sicherheitselement und des öffentlichen kryptographischen Schlüssels des mobilen Endgeräts berechnet und zur Verschlüsselung verwendet werden. Beispielsweise kann der entsprechende symmetrische kryptographische Schlüssel von dem Server des Personalisierungsdienstes unter Verwendung eines privaten kryptographischen Schlüssels des Servers des Personalisierungsdienstes und des öffentlichen kryptographischen Schlüssels des mobilen Endgeräts berechnet und zur Verschlüsselung verwendet werden.

Nach Ausführungsformen handelt es sich bei dem zweiten kryptographischen Schlüssel des mobilen Endgeräts um einen öffentlichen kryptographischen Schlüssel des mobilen Endgeräts. Das mobile Endgerät verwendet zur Entschlüsselung der unter Verwendung des zweiten kryptographischen Schlüssels erstellten Verschlüsselung der Identitätsattribute des ersten Satzes Identitätsattribute den privaten kryptographischen Schlüssel des mobilen Endgeräts.

Ausführungsformen können den Vorteil haben, dass ausschließlich das mobile Endgerät mit seinem privaten kryptographischen Schlüssel dazu in der Lage ist, die unter Verwendung des zweiten kryptographischen Schlüssels, d.h. des öffentlichen kryptographischen Schlüssels des mobilen Endgeräts, erstellte Verschlüsselung zu entschlüsseln. Zugleich wird beispielsweise der Server des Personalisierungsdienstes oder das entfernte Sicherheitselement in die Lage versetzt zum Verschlüsseln der Identitätsattribute mit dem zweiten kryptographischen Schlüssel.

Nach Ausführungsformen setzt eine Verwendung des privaten kryptographischen Schlüssels des mobilen Endgeräts zum Entschlüsseln der unter Verwendung des zweiten kryptographischen Schlüssels erstellten Verschlüsselung im Zuge des Auswählens eine Freigabe durch einen autorisierten Nutzer des mobilen Endgeräts voraus, welche eine erfolgreiche Authentifizierung des autorisierten Nutzers durch das mobile Endgerät erfordert.

Ausführungsformen können den Vorteil haben, dass eine Verwendung des privaten kryptographischen Schlüssels des mobilen Endgeräts und damit eine Verwendung der Identitätsattribute zum Erstellen des zweiten Satzes Identitätsattribute eine Freigabe durch einen autorisierten Nutzer des mobilen Endgeräts voraussetzt. Die Freigabe und damit sein Einverständnis erteilt der autorisierte Nutzer, indem er sich gegenüber dem mobilen Endgerät authentisiert. Ist die Authentifizierung des Nutzers seitens des mobilen Endgeräts erfolgreich, kann der private kryptographische Schlüssel des mobilen Endgeräts verwendet werden. Eine entsprechende erfolgreiche Authentifizierung wird beispielsweise mittels eines erfolgreichen Challenge-Response-Verfahrens bestätigt.

Nach Ausführungsformen werden dem Nutzer des mobilen Endgeräts die von der Leseanfrage umfassten Attributsidentifikatoren der auszulesende Identitätsattribute als Auswahlvorschlag auf einer Anzeigevorrichtung des mobilen Endgeräts zur Bestätigung angezeigt. Die Bestätigung umfasst ein Authentisieren des Nutzers gegenüber dem mobilen Endgerät zur Freigabe der Verwendung des privaten kryptographischen Schlüssels des mobilen Endgeräts. Ausführungsformen können den Vorteil haben, dass dem Nutzer explizit angezeigt wird, welche Identitätsattribute mit der Leseanfrage zum Auslesen durch das auslesende Computersystem angefragt werden. Der Nutzer kann anhand der angezeigten Attributsidentifikatoren entscheiden, ob er die zugehörigen bzw. von diesen identifizierten Identitätsattribute tatsächlich zum Auslesen freigeben möchte.

Nach Ausführungsformen kann der Nutzer Attributsidentifikatoren aus dem Auswahlvorschlag entfernen, wobei aus dem Auswahlvorschlag Identitätsattribute, deren Attributsidentifikatoren aus dem Auswahlvorschlag entfernt wurden, beim Auswählen nicht berücksichtigt werden. Ausführungsformen können den Vorteil haben, dass der Nutzer entscheiden kann ob alle bzw. welche der angefragten Identitätsattribute dem auslesenden Computersystem zur Verfügung gestellt werden.

Nach Ausführungsformen kann der Nutzer zusätzliche Attributsidentifikatoren zusätzlicher Identitätsattribute des ersten Satzes Identitätsattribute zu dem Auswahlvorschlag hinzufügen, wobei zusätzlich Identitätsattribute, deren Attributsidentifikatoren dem Auswahlvorschlag hinzugefügt wurden, beim Auswählen mitberücksichtigt werden. Ausführungsformen können den Vorteil haben, dass es dem Nutzer ermöglicht wird dem auslesenden Computersystem zusätzliche Identitätsattribute im Zuge des Auslesens zur Verfügung zu stellen.

Nach Ausführungsformen handelt es sich bei dem dritten kryptographischen Schlüssel des auslesenden Computersystems um einen ephemeren öffentlichen kryptographischen Schlüssel des auslesenden Computersystems. Der zweite Satz Identitätsattribute ist mit dem ephemeren öffentlichen kryptographischen Schlüssel des auslesenden Computersystems verschlüsselt, welchem ein ephemerer privater kryptographischer Schlüssel des auslesenden Computersystems zum Entschlüsseln zugeordnet ist. Ausführungsformen können den Vorteil haben, dass ausschließlich das auslesende Computersystem mit seinem ephemeren privaten kryptographischen Schlüssel dazu in die Lage versetzt ist, die unter Verwendung des dritten kryptographischen Schlüssels erstellte Verschlüsselung des zweiten Satzes Identitätsattribute zu entschlüsseln. Somit kann allein das auslesende Computersystem die Identitätsattribute des zweiten Satzes Identitätsattribute entschlüsseln und mithin in Klartextform nutzen.

Alternativ ist der zweite Satz Identitätsattribute mit einem ersten ephemeren symmetrischen kryptographischen Schlüssel verschlüsselt, welcher unter Verwendung des in dem entfernten Sicherheitselement gespeicherten privaten kryptographischen Schlüssel des Sicherheitselements in Verbindung mit dem ephemeren öffentlichen kryptographischen Schlüssel des auslesenden Computersystems berechenbar ist. Der erste ephemere symmetrische kryptographische Schlüssel ist zum Entschlüsseln ferner unter Verwendung des ephemeren privaten kryptographischen Schlüssels des auslesenden Computersystems in Verbindung mit dem öffentlichen kryptographischen Schlüssel des Sicherheitselements berechenbar ist.

Ausführungsformen können den Vorteil haben, dass das entfernte Sicherheitselement unter Verwendung seines privaten kryptographischen Schlüssels in Verbindung mit dem ephemeren öffentlichen kryptographischen Schlüssel des auslesenden Computersystems dazu in die Lage versetzt wird den dritten kryptographischen Schlüssel des auslesenden Computersystems in Form des ersten ephemeren symmetrischen kryptographischen Schlüssels zu berechnen und mithin zum Verschlüsseln des zweiten Satzes Identitätsattribute zu verwenden. Den entsprechenden ephemeren öffentlichen kryptographischen Schlüssel des auslesenden Computersystems empfängt das mobile Endgerät beispielsweise im Zuge eines Authentisierens des auslesenden Computersystems gegenüber dem entfernten Sicherheitselements. Zugleich wird das auslesende Computersystem dazu in die Lage versetzt, unter Verwendung des ephemeren privaten kryptographischen Schlüssels des auslesenden Computersystems in Verbindung mit dem öffentlichen kryptographischen Schlüssel des Sicherheitselements den verschlüsselten zweiten Satzes Identitätsattribute zu entschlüsseln und die entsprechenden Identitätsattribute in Klartext zur Nutzung bereitzustellen.

Nach Ausführungsformen wird der zweite Satz Identitätsattribute von dem mobilen Endgerät vor dem Senden an den Server unter Verwendung eines vierten kryptographischen Schlüssels verschlüsselt. Ausführungsformen können den Vorteil haben, dass der zweite Satz Identitätsattribute vor dem Senden zusätzlich gesichert werden kann, sodass beispielsweise nur das entfernte Sicherheitselement auf diesen zugreifen kann.

Nach Ausführungsformen handelt es sich bei dem vierten kryptographischen Schlüssel um den der elektronischen Identität zugeordneten öffentlichen kryptographischen Schlüssel des Sicherheitselements, welchem der in dem entfernten Sicherheitselement gespeicherte private kryptographische Schlüssel des Sicherheitselements zum Entschlüsseln zugeordnet ist. Ausführungsformen können den Vorteil haben, dass ein Zugriff auf den zweiten Satz Identitätsattribute ausschließlich mit dem privaten kryptographischen Schlüssel des Sicherheitselements möglich ist.

Nach Ausführungsformen handelt es sich bei dem vierten kryptographischen Schlüssel um einen zweiten ephemeren symmetrischen kryptographischen Schlüssel, welchen das mobile Endgerät unter Verwendung des privaten kryptographischen Schlüssels des mobilen Endgeräts und dem der elektronischen Identität zugeordneten öffentlichen kryptographischen Schlüssel des Sicherheitselements berechnet. Der zweite ephemere symmetrische kryptographische Schlüssel ist zum Entschlüsseln ferner unter Verwendung des öffentlichen kryptographischen Schlüssels des mobilen Endgeräts und des der elektronischen Identität zugeordneten privaten kryptographischen Schlüssels des Sicherheitselements berechenbar.

Ausführungsformen können den Vorteil haben, dass das entfernte Sicherheitselement unter Verwendung seines privaten kryptographischen Schlüssels in Verbindung mit dem der elektronischen Identität zugeordneten öffentlichen kryptographischen Schlüssel des Sicherheitselements dazu in die Lage versetzt wird den vierten kryptographischen Schlüssel in Form des zweiten ephemeren symmetrischen kryptographischen Schlüssels zu berechnen und mithin zum Verschlüsseln des zweiten Satzes Identitätsattribute zu verwenden. Zugleich wird das entfernte Sicherheitselement dazu in die Lage versetzt, unter Verwendung des der elektronischen Identität zugeordneten privaten kryptographischen Schlüssels des Sicherheitselements in Verbindung mit dem öffentlichen kryptographischen Schlüssel des mobilen Endgeräts den verschlüsselten zweiten Satzes Identitätsattribute zu entschlüsseln. Wird zusätzlich die unter Verwendung des ersten kryptographischen Schlüssels erstellte Verschlüsselung entschlüsselt, können die entsprechenden Identitätsattribute in Klartext zur Nutzung bereitzustellen.

Nach Ausführungsformen ist den auszulesenden Identitätsattributen in dem zweiten Satz Identitätsattribute jeweils ein Attributsidentifikator zugeordnet. Ausführungsformen können den Vorteil haben, dass die Struktur des zweiten Satzes Identitätsattribute beispielsweise identisch mit der Struktur des ersten Satzes Identitätsattribute sein kann. Beispielsweise stellt der zweiten Satzes Identitätsattribute eine Teilmenge des ersten Satzes Identitätsattribute. Wird beispielsweise der erste Satze Identitätsattribute in Form einer Tabelle bereitgestellt, kann der zweite Satz Identitätsattribute beispielsweise als eine verkürzte Tabelle bereitgestellt werden.

Nach Ausführungsformen umfasst der erste Satz Identitätsattribute ferner den öffentlichen kryptographischen Schlüssel des mobilen Endgeräts, welcher unter Verwendung des ersten kryptographischen Schlüssels verschlüsselt ist. Der unter Verwendung des ersten kryptographischen Schlüssels verschlüsselte öffentliche kryptographische Schlüssel des mobilen Endgeräts wird zu dem zweiten Satz Identitätsattribute hinzugefügt zum Nachweis eines Zugriffs des mobilen Endgeräts auf den ersten Satz Identitätsattribute. Ausführungsformen können den Vorteil haben, dass der erste und zweite Satz Identitätsattribute mittels des verschlüsselten öffentlichen kryptographischen Schlüssels des mobilen Endgeräts jeweils zusätzlich an das mobile Endgerät gebunden werden können. Ferner kann somit eines Zugriffs des mobilen Endgeräts auf den ersten Satz Identitätsattribute belegt werden. Falls das mobile Endgerät nicht über die notwendigen Mittel, d.h. den ersten kryptographischen Schlüssel verfügt, kann es den öffentlichen kryptographischen Schlüssel des mobilen Endgeräts nicht selbst verschlüsseln, sondern muss diesen dem ersten Satz Identitätsattribute entnehmen.

Nach Ausführungsformen empfängt das mobile Endgerät den ersten Satz Identitätsattribute im Zuge einer Personalisierung durch den Server des Personalisierungsdienstes von dem entfernten Sicherheitselement. Die Verschlüsselung der Identitätsattribute des ersten Satzes erfolgt unter Verwendung des ersten und des zweiten kryptographischen Schlüssels durch den Server des Personalisierungsdienstes oder durch das entfernte Sicherheitselement.

Ausführungsformen können den Vorteil haben, dass der erste Satz Identitätsattribute im Zuge einer Personalisierung in sicherer Form bereitgestellt werden kann. Durch die Verschlüsslung der Identitätsattribute mit dem ersten kryptographischen Schlüssel kann die Sicherheit der Identitätsattribute selbst im Falle einer unsicheren Umgebung auf dem mobilen Endgerät gewährleistet werden. Handelt es sich bei dem ersten kryptographischen Schlüssel beispielsweise um den öffentlichen kryptographischen Schlüssel des entfernten Sicherheitselements, kann die Verschlüsselung beispielsweise durch den Server des Personalisierungsdienstes erfolgen. Handelt es sich bei dem ersten kryptographischen Schlüssel beispielsweise um einen symmetrischen kryptographischen Schlüssel des entfernten Sicherheitselements, kann die Verschlüsselung beispielsweise durch das entfernte Sicherheitselement erfolgen.

Nach Ausführungsformen umfasst das Verfahren ferner ein Authentifizieren des auslesenden Computersystems durch die Applikation. Die Applikation empfängt im Zuge des Authentifizierens des auslesenden Computersystems den ephemeren öffentlichen kryptographischen Schlüssel des auslesenden Computersystems und leitet den empfangenen ephemeren öffentlichen kryptographischen Schlüssel an den Server weiter.

Ausführungsformen können den Vorteil haben, dass das Authentifizieren des auslesenden Computersystems durch die Applikation erfolgen kann, im Zuge dessen ein öffentlicher kryptographischer Schlüssel des auslesenden Computersystems zum Aushandeln von Sitzungsschlüsseln zur Verschlüsselung einer Kommunikation zwischen dem entfernten Sicherheitselement und dem auslesenden Computersystem unter Vermittlung der Applikation für das entfernte Sicherheitselement bereitgestellt werden kann.

Nach Ausführungsformen umfasst das Verfahren ferner ein Authentisieren der elektronischen Identität gegenüber dem auslesenden Computersystem. Das Authentisieren der elektronischen Identität umfasst ein Empfangen des der elektronischen Identität zugeordneten öffentlichen kryptographischen Schlüssels des entfernten Sicherheitselements von dem Server durch die Applikation, welche den empfangenen öffentlichen kryptographischen Schlüssel des entfernten Sicherheitselements an das auslesende Computersystem weiterleitet.

Ausführungsformen können den Vorteil haben, dass durch das Sicherheitselement ein öffentlicher kryptographischer Schlüssel der elektronischen Identität für das Authentisieren der elektronischen Identität gegenüber dem auslesenden Computersystem unter Vermittlung der Applikation bzw. des mobilen Endgeräts für das auslesende Computersystem bereitgestellt werden kann.

Nach Ausführungsformen wird der öffentliche kryptographische Schlüssel zusammen mit einem Zertifikat empfangen und an das auslesende Computersystem weitergeleitet.

Nach Ausführungsformen umfasst das Authentisieren der elektronischen Identität ferner ein Empfangen einer ersten von dem entfernten Sicherheitselement erzeugten Zufallszahl zusammen mit einem von dem entfernten Sicherheitselement erzeugten Authentisierungstoken von dem Server durch die Applikation, welche die empfangenen Zufallszahl zusammen mit dem Authentifizierungstoken an das auslesende Computersystem weiterleitet.

Ausführungsformen können den Vorteil haben, dass ein Authentisierungstoken zusammen mit einer Zufallszahl zum Authentisieren der elektronischen Identität unter Vermittlung der Applikation bzw. des mobilen Endgeräts für das auslesende Computersystem bereitgestellt werden kann. Anhand des Authentisierungstokens und der entsprechenden Zufallszahl wird das auslesende Computersystem beispielsweise dazu in die Lage versetzt, die elektronische Identität zu authentifizieren, d.h. zu prüfen, ob die entsprechende elektronische Identität Zugriff auf einen der entsprechenden elektronischen Identität zugeordneten privaten kryptographischen Schlüssel besitzt.

Nach Ausführungsformen empfängt die Applikation auf das Weiterleiten des öffentlichen kryptographischen Schlüssels des Sicherheitselements von dem auslesenden Computersystem eine zweite Kopie des ephemeren öffentlichen kryptographischen Schlüssels des auslesenden Computersystems, welche die Applikation zum Vergleichen mit der ersten Kopie des ephemeren öffentlichen kryptographischen Schlüssels des auslesenden Computersystems an den Server weiterleitet.

Ausführungsformen können den Vorteil haben, dass anhand der zweiten Kopie des ephemeren öffentlichen kryptographischen Schlüssels geprüft werden kann, ob es sich bei dem auslesenden Computersystem, gegenüber dem sich die elektronische Identität authentisiert, um dasselbe aus diesem Computersystem handelt, welches zuvor durch die Applikation des mobilen Endgeräts authentifiziert wurde.

Nach Ausführungsformen empfängt die Applikation den unter Verwendung des dritten kryptographischen Schlüssels verschlüsselten zweiten Satzes Identitätsattribute zusammen mit einem Prüfcodes des zweiten Satzes Identitätsattribute, welchen die Applikation an das auslesende Computersystem weiterleitet.

Ausführungsformen können den Vorteil haben, dass anhand des Prüfcodes die Authentizität von des verschlüsselten zweiten Satzes Identitätsattribute durch das auslesende Computersystem geprüft werden kann, welches das entsprechende auslesende Computersystem von dem entfernten Sicherheitselement empfängt.

Nach Ausführungsformen setzt das Authentisieren der elektronischen Identität gegenüber dem auslesenden Computersystem ferner ein erfolgreiches Authentisieren der Applikation gegenüber dem Server voraus.

Ausführungsformen können den Vorteil haben, dass sich die Applikation gegenüber dem Server durch das erfolgreiche Authentisieren eine Autorisierung, d.h. eine Nutzungsberechtigung des entfernten Sicherheitselements bzw. einer Sub-Security-Domain des entfernten Sicherheitselements, welches der elektronischen Identität zugeordnet ist, nachweist.

Nach Ausführungsformen umfasst das Authentisieren der Applikation gegenüber dem Server:

- Sende einer Challenge-Anfrage an den Server,
- Empfangen einer durch das entfernte Sicherheitselement erzeugten zweiten Zufallszahl als Challenge von dem Server in Antwort auf die Challenge-Anfrage,

- Erzeugen einer Response, wobei die empfangende Challenge durch ein Sicherheitselement des Betriebssystems des mobilen Endgeräts unter Verwendung eines der elektronischen Identität zugeordneten kryptographischen Schlüssel verschlüsselt wird, wobei der der elektronischen Identität kryptographischen Schlüssel in dem Sicherheitselement des Betriebssystems des mobilen Endgeräts gespeichert ist,

- Senden der erzeugten Response in Antwort auf die Challenge an den Server.

Ausführungsformen können den Vorteil haben, dass durch das entsprechende Challenge-Response-Verfahren in effektiver und effizienter Weise ein Authentisieren der Applikation gegenüber dem Server ermöglicht wird.

Nach Ausführungsformen handelt es sich bei dem der elektronischen Identität zugeordneten kryptographischen Schlüssel um einen symmetrischen kryptographischen Schlüssel, mit welchem die Response erzeugt wird. Die Response kann in diesem Fall empfängerseitig beispielsweise mittels des symmetrischen kryptographischen Schlüssels auf ihre Korrektheit hin überprüft werden.

Nach Ausführungsformen handelt es sich bei dem der elektronischen Identität zugeordneten kryptographischen Schlüssel um einen privaten kryptographischen Schlüssel, mit welchem die Response erzeugt wird. Beispielsweise umfasst die erzeugte Response eine Signatur der Challenge mit dem privaten kryptographischen Schlüssel als Signaturschlüssel. Beispielsweise wird die Challenge oder ein Hashwert der Challenge unter Verwendung des privaten kryptographischen Schlüssels verschlüsselt. Die Response kann in diesem Fall empfängerseitig beispielsweise mittels des zugehörigen öffentlichen kryptographischen Schlüssels als Signaturprüfschlüssel auf ihre Korrektheit hin überprüft werden.

Nach Ausführungsformen setzt das Erzeugen der Response durch die Applikation ein erfolgreiches Authentifizieren des Nutzers durch das mobile Endgerät voraus.

Ausführungsformen können den Vorteil haben, dass durch die Notwendigkeit eines erfolgreichen Authentifizierens des Nutzers zum einen sichergestellt werden kann, dass tatsächlich ein berechtigter Nutzer das mobile Endgerät zum Bereitstellen der Identitätsattribute nutzt, welcher kryptographisch mit der elektronischen Identität bzw. den Identitätsattribute gekoppelt ist. Andererseits kann sichergestellt werden, dass der Nutzer dem Bereitstellen der Identitätsattribute tatsächlich zustimmt.

Nach Ausführungsformen führt der Server mit dem entfernten Sicherheitselement beispielsweise ein Verfahren aus, welches umfasst:

- Empfangen des zweiten Satzes Identitätsattribute von der Applikation,

- Entschlüsseln der unter Verwendung des ersten kryptographischen Schlüssels erstellten Verschlüsselung der ausgewählten auszulesenden Identitätsattribute in dem empfangenen zweiten Satz Identitätsattribute durch das entfernte Sicherheitselement,

- Verschlüsseln des zweiten Satzes Identitätsattribute mit den entschlüsselten auszulesenden Identitätsattribute unter Verwendung des dritten kryptographischen Schlüssels durch das entfernte Sicherheitselement,

- Senden des unter Verwendung des dritten kryptographischen Schlüssels verschlüsselten zweiten Satzes Identitätsattribute an das mobile Endgerät zum Weiterleiten an das auslesende Computersystem.

Nach Ausführungsformen umfasst das Senden der unter Verwendung des ephemeren symmetrischen kryptographischen Schlüssels verschlüsselten auszulesenden Identitätsattribute an das auslesende Computersystem ein Senden an die Applikation zum Weiterleiten an das auslesende Computersystem.

Ausführungsformen können den Vorteil haben, dass die Kommunikation zwischen dem Server und dem auslesenden Computersystem über die Applikation bzw. das mobile Endgerät erfolgt. Dabei leitet das mobile Endgerät bzw. die Applikation Nachrichten zwischen dem auslesenden Computersystem und dem Server weiter. Umfassen die entsprechenden Nachrichten beispielsweise verschlüsselte Identitätsattribute, welche unter Verwendung eines ephemeren kryptographischen Schlüssels verschlüsselt sind, welcher nur dem Server bzw. dem von dem Server bereitgestellten Sicherheitselement einerseits und dem auslesenden Computersystem andererseits bekannt sind, kann eine Ende-zu-Ende-Verschlüsselung zwischen dem Server und dem auslesenden Computersystem implementiert werden.

Nach Ausführungsformen handelt es sich bei dem der elektronischen Identität zugeordneten kryptographischen Schlüssel um einen symmetrischen kryptographischen Schlüssel, welcher in dem entfernten Sicherheitselement gespeichert ist.

Nach Ausführungsformen handelt es sich bei dem der elektronischen Identität zugeordneten kryptographischen Schlüssel um einen öffentlichen kryptographischen Schlüssel eines asymmetrischen Schlüsselpaars. Ein privater Schlüssel des asymmetrischen Schlüsselpaars ist in dem entfernten Sicherheitselement gespeichert.

Ausführungsformen können den Vorteil haben, dass eine symmetrische Verschlüsselung eine effiziente und effektive Verschlüsselung ermöglicht. Ist der bzw. sind die symmetrischen kryptographischen Schlüssel in Sicherheitselementen gespeichert, so können diese effizient und effektiv vor unberechtigten Zugriffen geschützt werden.

Nach Ausführungsformen umfasst das Verfahren ferner ein Erzeugen des mit dem auslesenden Computersystem geteilten ephemeren symmetrischen kryptographischen Schlüssels.

Ausführungsformen können den Vorteil haben, dass der Server bzw. das von dem Server bereitgestellte entfernte Sicherheitselement den für die verschlüsselte Kommunikation mit dem auslesenden Computersystem notwendigen ephemeren symmetrischen kryptographischen Schlüssel erzeugen kann. Bei dem ephemeren symmetrischen kryptographischen Schlüssel handelt es sich beispielsweise um einen sitzungsspezifischen symmetrischen kryptographischen Schlüssel, welche einer Sitzung zugeordnet ist. Soll eine neue Sitzung gestartet werden, so muss beispielsweise ein neuer ephemerer kryptographischer Schlüssel erzeugt werden.

Nach Ausführungsformen erzeugt das entfernte Sicherheitselement den ephemeren symmetrischen kryptographischen Schlüssel unter Verwendung eines mit dem auslesenden Computersystem geteilten Geheimnisses und einer ersten Zufallszahl.

Ausführungsformen können den Vorteil haben, dass ein effektives und effizientes Verfahren zum Erzeugen des ephemeren symmetrischen kryptographischen Schlüssels bereitgestellt werden kann. Da die Erzeugung des ephemeren symmetrischen kryptographischen Schlüssels auf einem mit dem auslesenden Computersystem geteilten Geheimnis beruht, kann der entsprechende kryptographische Schlüssel beispielsweise effektiv und effizient vor Zugriffen unberechtigter Dritter geschützt werden. Zum Erzeugen des entsprechenden Schlüssels ist eine Kenntnis des geteilten Geheimnisses notwendig.

Nach Ausführungsformen setzt das Erzeugen des mit dem auslesenden Computersystem geteilten ephemeren symmetrischen kryptographischen Schlüssels ein erfolgreiches Authentisieren der elektronischen Identität gegenüber dem auslesenden Computersystem unter Verwendung des entfernten Sicherheitselements voraus.

Ausführungsformen können den Vorteil haben, dass durch die Authentisierung der elektronischen Identität gegenüber dem auslesenden Computersystem sichergestellt werden kann, dass die entsprechenden Identitätsattribute der korrekten elektronischen Identität ausgelesen werden. Das Authentisieren erfolgt dabei unter Verwendung des entfernten Sicherheitselements, welches von dem Server bereitgestellt wird. Auf den entfernten Sicherheitselement ist beispielsweise ein privater kryptographischer Schlüssel eines der elektronischen Identität zugeordneten asymmetrischen Schlüsselpaars gespeichert. Dieser private kryptographische Schlüssel wird beispielsweise zum Authentifizieren der elektronischen Identität gegenüber dem auslesenden Computersystem verwendet.

Nach Ausführungsformen umfasst das Authentisieren der elektronischen Identität gegenüber dem auslesenden Computersystem durch den Server:

- Senden eines öffentlichen kryptographischen Schlüssels eines der elektronischen Identität zugeordneten asymmetrischen Schlüsselpaars an das auslesende Computersystem, wobei ein privater kryptographischen Schlüssel des asymmetrischen Schlüsselpaars in dem entfernten Sicherheitselement gespeichert ist,
- Berechnen des mit dem auslesenden Computersystem geteilten Geheimnisses durch das entfernte Sicherheitselement unter Verwendung des privaten kryptographischen Schlüssels der elektronischen Identität und eines ephemeren öffentlichen kryptographischen Schlüssels des auslesenden Computersystems,
- Erzeugen der ersten Zufallszahl durch das entfernte Sicherheitselement,
- Erzeugen eines gemeinsamen ephemeren Authentisierungsschlüssels zum Authentisieren von Informationen im Zuge von Kommunikationen gegenüber dem auslesenden Computersystem unter Verwendung des geteilten Geheimnisses und der erzeugten ersten Zufallszahl,
- Erzeugen eines Authentisierungstoken durch das entfernte Sicherheitselement unter Verwendung des ephemeren Authentisierungsschlüssels und des ephemeren öffentlichen kryptographischen Schlüssels des auslesenden Computersystems zum Authentisieren der elektronischen Identität gegenüber dem auslesenden Computersystem,
- Senden der ersten Zufallszahl zusammen mit dem Authentisierungstoken zum Authentisieren der elektronischen Identität gegenüber dem auslesenden Computersystem an das auszulesende Computersystem.

Ausführungsformen können den Vorteil haben, dass die entsprechenden Applikationen gegenüber dem auslesenden Computersystem authentisiert werden können, beispielsweise unter Verwendung der in den Sicherheitselementen installierten Applets der Applikationen, welche die elektronischen Identitäten verwalten. Das auslesende Computersystem empfängt den öffentlichen kryptographischen Schlüssel in der Applikation und kann unter Verwendung dieses öffentlichen kryptographischen Schlüssels sowie eines ephemeren zweiten privaten kryptographischen Schlüssels des den ephemeren zweiten öffentlichen kryptographischen Schlüssel umfassenden asymmetrischen Schlüsselpaars ebenfalls das geteilte Geheimnis berechnen. Auf den Empfang der Zufallszahl hin kann das auslesende Computersystem ebenfalls den gemeinsamen Authentifizierungsschlüssel berechnen. Unter Verwendung des so berechneten Authentifizierungsschlüssels und der empfangenen Zufallszahl kann das auslesende Computersystem den empfangenen Authentisierungstoken validieren. Stimmt beispielsweise ein von dem auslesenden Computersystem unter Verwendung des berechneten Authentisierungsschlüssels und der empfangenen Zufallszahl berechnetes Authentisierungstoken mit dem empfangenen Authentisierungstoken überein, weist das auslesende Computersystem, das sich die Applikation tatsächlich im Besitz des entsprechenden privaten kryptographischen Schlüssels des der Applikation zugeordneten asymmetrischen Schlüsselpaars befindet. Mithin ist die Applikation authentifiziert.

Das entfernte Sicherheitselement verwaltet den privaten kryptographischen Schlüssel für die elektronische Identität bzw. verwahrt diesen sicher. Unter Verwendung des von dem entfernten Sicherheitselement verwahrten privaten kryptographischen Schlüssels der elektronischen Identität wird der Authentisierungstoken erzeugt und dem auslesenden Computersystem zum Authentisieren der elektronischen Identität zur Verfügung gestellt. Anhand des Authentisierungstokens kann das auslesende Computersystem prüfen, ob die elektronische Identität über den entsprechenden privaten kryptographischen Schlüssel verfügt bzw. Zugriff auf diesen hat. Falls dies der Fall ist, gilt die elektronische Identität als authentifiziert.

Nach Ausführungsformen wird der ephemere symmetrische kryptographische Schlüssel durch das entfernte Sicherheitselement zusammen mit dem ephemeren Authentisierungsschlüssels berechnet.

Nach Ausführungsformen umfasst das Senden des öffentlichen kryptographischen Schlüssels der elektronischen Identität an das auslesende Computersystem ein Senden an die Applikation zum Weiterleiten an das auslesende Computersystem.

Ausführungsformen können den Vorteil haben, dass die Kommunikation zwischen dem Server und dem auslesenden Computersystem über das mobile Endgerät erfolgt. Dabei leitet das mobile Endgerät bzw. die Applikation Nachrichten zwischen dem auslesenden Computersystem und dem Server weiter. Umfassen die entsprechenden Nachrichten beispielsweise verschlüsselte Identitätsattribute, welche unter Verwendung eines ephemeren kryptographischen Schlüssels verschlüsselt sind, welcher nur dem Server bzw. dem von dem Server bereitgestellten Sicherheitselement einerseits und dem auslesenden Computersystem andererseits bekannt sind, kann eine Ende-zu-Ende-Verschlüsselung zwischen dem Server und dem auslesenden Computersystem implementiert werden.

Ausführungsformen können den Vorteil haben, dass die Kommunikation zwischen dem Server und dem auslesenden Computersystem über die Applikation bzw. das mobile Endgerät erfolgt. Dabei leitet das mobile Endgerät bzw. die Applikation Nachrichten zwischen dem auslesenden Computersystem und dem Server weiter. Im Zuge dieser Kommunikation wird beispielsweise der öffentliche kryptographische Schlüssel der elektronischen Identität von dem Server bzw. dem entfernten Sicherheitselement an das auslesende Computersystem über die Applikation bzw. das mobile Endgerät gesendet. Nur der entsprechende öffentliche kryptographische Schlüssel ermöglicht es dem auslesenden Computersystem die elektronische Identität zu authentifizieren.

Nach Ausführungsformen wird der öffentliche kryptographische Schlüssel zusammen mit einem Zertifikat an das auslesende Computersystem gesendet. Nach Ausführungsformen hat das auslesende Computersystem Zugriff auf ein Zertifikat, beispielsweise ist das Zertifikat in einem Speicher des auslesenden Computersystems gespeichert oder das Zertifikat ist von einem online zugänglichen Register abrufbar.

Nach Ausführungsformen umfasst das Senden der ersten Zufallszahl zusammen mit dem Authentisierungstoken an das auslesende Computersystem ein Senden an die Applikation zum Weiterleiten an das auslesende Computersystem.

Ausführungsformen können den Vorteil haben, dass die Kommunikation zwischen dem Server und dem auslesenden Computersystem über die Applikation bzw. das mobile Endgerät erfolgt. Dabei leitet das mobile Endgerät bzw. die Applikation Nachrichten zwischen dem auslesenden Computersystem und dem Server weiter. Beispielsweise wird die erste Zufallszahl zusammen mit dem Authentisierungstoken zum Authentisieren der elektronischen Identität über die Applikation bzw. das mobile Endgerät an das auslesende Computersystem gesendet.

Nach Ausführungsformen setzt das Authentisieren der elektronischen Identität gegenüber dem auslesenden Computersystem ein erfolgreiches Authentifizieren des auslesenden Computersystems durch die Applikation voraus.

Ausführungsformen können den Vorteil haben, dass eine Authentifizierung des auslesenden Computersystems durch die Applikation, d.h. das mobile Endgerät, erfolgen kann. Durch das Authentifizieren des auslesenden Computersystems kann einerseits das auslesende Computersystem authentifiziert werden und andererseits können Zugriffsrechte des auslesenden Computersystems auf die auszulesenden Identitätsattribute validiert werden. Ist das auslesende Computersystem erfolgreich authentifiziert, bedeutet dies, dass es beispielsweise die Berechtigung besitzt, angefragte Identitätsattribute auszulesen. Im Zuge des Authentifizierens des auslesenden Computersystems wird beispielsweise der ephemere öffentliche kryptographische Schlüssel des auslesenden Computersystems von dem mobilen Endgerät empfangen und dem Server bzw. entfernen Sicherheitselement zur Verfügung gestellt.

Nach Ausführungsformen empfängt der Server den ephemeren öffentlichen kryptographischen Schlüssel des auslesenden Computersystems von der Applikation, welche den ephemeren öffentlichen kryptographischen Schlüssel im Zuge des Authentifizierens des auslesenden Computersystems empfängt und an den Server weiterleitet.

Ausführungsformen können den Vorteil haben, dass die Applikation bzw. das mobile Endgerät dem Server den ephemeren öffentlichen kryptographischen Schlüssel zur Verfügung stellt.

Nach Ausführungsformen empfängt der Server in Antwort auf das Senden des der elektronischen Identität zugeordneten öffentlichen kryptographischen Schlüssels von dem auslesenden Computersystem eine zweite Kopie des ephemeren öffentlichen kryptographischen Schlüssels des auslesenden Computersystems, welche der Server mit der ersten Kopie des ephemeren öffentlichen kryptographischen Schlüssels des auslesenden Computersystems vergleicht, welche die Applikation im Zuge des Authentifizierens des auslesenden Computersystems empfangen und an den Server weitergeleitet hat. Eine Übereinstimmung beider Kopien ist eine Voraussetzung für das Berechnen des geteilten Geheimnisses.

Ausführungsformen können den Vorteil haben, dass unter Verwendung der zweiten Kopie des ephemeren öffentlichen kryptographischen Schlüssels des auslesenden Computersystems seitens des Servers geprüft werden kann, ob es sich beim auslesenden Computersystem, gegenüber dem das Authentisieren der elektronischen Identität ausgeführt wird, um dasselbe auslesende Computersystem handelt, welches zuvor durch die Applikation bzw. das mobile Endgerät authentifiziert wurde.

Nach Ausführungsformen umfasst das Verfahren ferner ein Berechnen eines Prüfcodes der entschlüsselten auszulesenden Identitätsattribute unter Verwendung des ephemeren Authentisierungsschlüssel, welcher zusammen mit den unter Verwendung des ephemeren symmetrischen kryptographischen Schlüssels verschlüsselten auszulesenden Identitätsattribute an das auslesende Computersystem gesendet wird.

Ausführungsformen können den Vorteil haben, dass anhand des Prüfcodes die Authentizität der verschlüsselten auszulesenden Identitätsattribute für das auslesende Computersystem nachgewiesen werden kann. Denn das ausführende Computersystem verfügt beispielsweise ebenfalls über den entsprechend ephemeren Authentisierungsschlüssel, mithilfe dessen der Prüfcode validiert werden kann.

Nach Ausführungsformen handelt es sich bei dem ephemeren Authentisierungsschlüssel um einen Schlüssel zum Erzeugen eines Message Authentication Codes. Bei dem Prüfcode handelt es sich um einen unter Verwendung des ephemeren Authentisierungsschlüssels erzeugten MAC-Code der auszulesenden Identitätsattribute.

Die Authentizität der übertragen Identitätsattribute kann beispielsweise durch Verwendung eines Message Authentication Codes (MAC) sichergestellt werden. Ein MAC wird beispielsweise unter Verwendung eines MAC-Algorithmus berechnet, welchem zu schützende Daten, d.h. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptographische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise das Applet, und Empfänger, beispielsweise einem auslesenden Computersystem, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC berechnet ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Nach Ausführungsformen handelt es sich bei dem Authentisierungstoken um einen unter Verwendung des ephemeren Authentisierungsschlüssels erzeugten MAC-Code der ersten Zufallszahl.

Nach Ausführungsformen setzt das Authentisieren der elektronischen Identität gegenüber dem auslesenden Computersystem ferner ein erfolgreiches Authentifizieren der Applikation durch den Server voraus.

Ausführungsformen können den Vorteil haben, dass unter Verwendung der Authentifizierung der Applikation und durch den Server sichergestellt werden kann, dass die Kommunikation tatsächlich mit der entsprechenden Applikation erfolgt.

Nach Ausführungsformen umfasst das Authentifizieren durch den Server:

- Empfangen einer Challenge-Anfrage von der Applikation,
- Erzeugen einer zweiten Zufallszahl als Challenge durch das entfernte Sicherheitselement,
- Senden der erzeugten Challenge in Antwort auf die Challenge-Anfrage an die Applikation,
- Empfangen einer Response in Antwort auf das Senden der Challenge, wobei es sich bei der Response um die unter Verwendung eines der elektronischen Identität zugeordneten kryptographischen Schlüssels verschlüsselte Challenge handelt,
- Validieren der Response durch das entfernte Sicherheitselement unter Verwendung eines der elektronischen Identität zugeordneten weiteren kryptographischen Schlüssels, der in dem entfernten Sicherheitselement gespeichert ist.

Nach Ausführungsformen handelt es sich bei dem kryptographischen Schlüssel und dem weiteren kryptographischen Schlüssel der elektronischen Identität um denselben symmetrischen kryptographischen Schlüssel. Mit diesem symmetrischen kryptographischen Schlüssel wird die Response erzeugt. Die Response kann in diesem Fall empfängerseitig beispielsweise mittels desselben symmetrischen kryptographischen Schlüssels auf ihre Korrektheit hin überprüft werden.

Nach Ausführungsformen handelt es sich bei dem der elektronischen Identität zugeordneten kryptographischen Schlüssel um einen privaten kryptographischen Schlüssel, mit welchem die Response erzeugt wird. Bei dem der elektronischen Identität zugeordneten zweiten kryptographischen Schlüssel handelt es sich beispielsweise um einen öffentlichen kryptographischen Schlüssel, mit welchem die Response überprüft wird. Beispielsweise umfasst die erzeugte Response eine Signatur der Challenge mit dem privaten kryptographischen Schlüssel als Signaturschlüssel. Beispielsweise wird die Challenge oder ein Hashwert der Challenge unter Verwendung des privaten kryptographischen Schlüssels verschlüsselt. Die Response kann in diesem Fall empfängerseitig beispielsweise mittels des zugehörigen öffentlichen kryptographischen Schlüssels als Signaturprüfschlüssel auf ihre Korrektheit hin überprüft werden.

Ausführungsformen können den Vorteil haben, dass unter Verwendung des Challenge-Response-Verfahrens sichergestellt werden kann, dass es sich bei der Applikation tatsächlich um die die entsprechende elektronische Identität verwaltende Applikation handelt. Bei dem der elektronischen Identität zugeordneten kryptographischen Schlüssel, welcher von den mobilen Endgeräten zur Verschlüsselung der Challenge verwendet wird, handelt es sich beispielsweise um einen kryptographischen Schlüssel, welcher in einem Sicherheitselement des Betriebssystems des mobilen Endgeräts gespeichert ist.

Nach Ausführungsformen umfasst das Validieren der Response ein Entschlüsseln der Response durch das entfernte Sicherheitselement unter Verwendung des der elektronischen Identität zugeordneten weiteren kryptographischen Schlüssels, beispielsweise eines symmetrischen oder öffentlichen kryptographischen Schlüssels, und ein Vergleichen des Ergebnisses mit der gesendeten Challenge, welche das entfernte Sicherheitselement erzeugt hat. Im Falle einer Übereinstimmung ist das Validieren erfolgreich.

Nach Ausführungsformen umfasst das Validieren der Response ein Verschlüsseln der gesendeten Challenge, welche das entfernte Sicherheitselement erzeugt hat, durch das entfernte Sicherheitselement unter Verwendung des der elektronischen Identität zugeordneten symmetrischen kryptographischen Schlüssels und ein Vergleichen des Ergebnisses mit der Response Challenge. Im Falle einer Übereinstimmung ist das Validieren erfolgreich.

Nach Ausführungsformen setzt das Erzeugen der Response durch die Applikation ein erfolgreiches Authentifizieren des Nutzers durch das mobile Endgerät voraus.

Ausführungsformen können den Vorteil haben, dass durch das Challenge-Response-Verfahren nicht nur die Applikation authentifiziert werden kann, sondern ferner auch der Nutzer des mobilen Endgeräts. Mit anderen Worten kann somit sichergestellt werden, dass ein berechtigter Nutzer das mobile Endgerät nutzt und der Übertragung der Identitätsattribute an das auslesende Computersystem explizit zustimmt. Hierfür werden beispielsweise Authentifizierungsdaten des aktuellen Nutzers durch ein oder mehrere Sensoren des mobilen Endgeräts erfasst. Bei den entsprechenden Authentifizierungsdaten handelt es sich beispielsweise um eine PIN des Nutzers, biometrische Daten des Nutzers, wie etwa ein Fingerabdruck oder ein Gesichtsbild, oder verhaltensbasierte Daten, wie beispielsweise grobmotorische Bewegungsdaten der Bewegungen des mobilen Endgeräts, welches der Nutzer mit sich trägt. Die entsprechenden Authentifizierungsdaten werden an das Sicherheitselement des Betriebssystems gesendet, welches diese mit den gespeicherten Referenzdaten, die im Zuge der Personalisierung des mobilen Endgeräts in dem Sicherheitselement des Betriebssystems hinterlegt wurden, vergleicht. Bei einer ausreichenden Übereinstimmung zwischen den erfassten Authentifizierungsdaten und den hinterlegten Referenzdaten ist die Authentifizierung des Nutzers des mobilen Endgeräts erfolgreich. Auf eine erfolgreiche Authentifizierung des Nutzers des mobilen Endgeräts hin erfolgt eine Verschlüsselung der zuvor empfangenen Challenge durch den entsprechenden symmetrischen oder privaten kryptographischen Schlüssel der elektronischen Identität, welche im Zuge des Einrichtens der elektronischen Identität auf dem mobilen Endgerät in dem Sicherheitselement des Betriebssystems hinterlegt wurde. Beispielsweise wurde der entsprechende symmetrische oder private kryptographische Schlüssel im Zuge der Personalisierung hinterlegt, um den Nutzer des mobilen Endgeräts an die elektronische Identität zu binden.

Ausführungsformen umfassen ferner ein mobiles Endgerät. Auf dem mobilen Endgerät ist eine elektronische Identität gespeichert, die von einer auf dem mobilen Endgerät installierten Applikation verwaltet wird. Das mobile Endgerät umfasst einen Prozessor, einen Speicher mit ausführbaren Programminstruktionen und eine Kommunikationsschnittstelle zur Kommunikation mit einem Server über ein Netzwerk, welcher ein entferntes Sicherheitselement für die elektronische Identität bereitstellt.

Die elektronische Identität umfasst einen auf dem mobilen Endgerät gespeicherten ersten Satz Identitätsattribute, welcher ein oder mehrere Identitätsattribute umfasst. Die Identitätsattribute in dem ersten Satz Identitätsattribute sind jeweils individuell unter Verwendung eines ersten kryptographischen Schlüssels des entfernten Sicherheitselements verschlüsselt. Den Identitätsattributen in dem ersten Satz Identitätsattribute ist jeweils ein Attributsidentifikator zugeordnet. Die unter Verwendung des ersten kryptographischen Schlüssels verschlüsselten Identitätsattribute des ersten Satzes Identitätsattribute sind ferner unter Verwendung eines zweiten kryptographischen Schlüssels des mobilen Endgeräts verschlüsselt. Der ist Prozessor dazu konfiguriert, auf ein Ausführen der Programminstruktionen das mobile Endgerät zum Ausführen eines Verfahrens zum Auslesen ein oder mehrerer Identitätsattribute der elektronischen Identität zu steuern.

Das Verfahren umfasst durch die Applikation auf dem mobilen Endgerät:

- Empfangen einer Leseanfrage eines auslesenden Computersystems, welche Attributsidentifikatoren ein oder mehrere auszulesende Identitätsattribute umfasst,
- Auswählen der auszulesenden Identitätsattribute aus dem ersten Satz Identitätsattribute, wobei im Zuge des Auswählens die unter Verwendung des zweiten kryptographischen Schlüssels erstellte Verschlüsselung zumindest teilweise entschlüsselt wird, während die unter Verwendung des ersten kryptographischen Schlüssels erstellte Verschlüsselung aufrechterhalten wird,
- Erstellen eines zweiten Satzes Identitätsattribute, welcher die ausgewählten auszulesenden Identitätsattribute umfasst, die unter Verwendung des ersten kryptographischen Schlüssels verschlüsselt sind,
- Senden des zweiten Satzes Identitätsattribute an den Server,
- in Antwort auf das Senden des zweiten Satzes Identitätsattribute, Empfangen des unter Verwendung eines dritten kryptographischen Schlüssels des auslesenden Computersystems verschlüsselten zweiten Satzes Identitätsattribute von dem Server, wobei die unter Verwendung des ersten kryptographischen Schlüssels erstellte Verschlüsselung der ausgewählten auszulesenden Identitätsattribute in dem empfangenen zweiten Satz Identitätsattribute durch das entfernte Sicherheitselement vor dem Verschlüsseln mit dritten kryptographischen Schlüssel entschlüsselt wurde,
- Weiterleiten des unter Verwendung des dritten kryptographischen Schlüssels verschlüsselten zweiten Satzes Identitätsattribute an das auslesende Computersystem.

Nach Ausführungsformen ist das mobile Endgerät dazu konfiguriert jede der vorangehend beschriebenen Ausführungsformen des Verfahrens zum Auslesen ein oder mehrerer Identitätsattribute auszuführen.

Ausführungsformen umfassen ferner einen Server, welcher das entfernte Sicherheitselement für die elektronische Identität bereitstellt, welche auf einem mobilen Endgerät gespeichert ist und von der auf dem mobilen Endgerät installierten Applikation verwaltet wird. Der Server umfasst ferner einen Prozessor, einen Speicher mit ausführbaren Programminstruktionen und eine Kommunikationsschnittstelle zur Kommunikation mit dem mobilen Endgerät über ein Netzwerk. Der Prozessor ist dazu konfiguriert, auf ein Ausführen der Programminstruktionen den Server zum Ausführen eines Verfahrens zum Auslesen ein oder mehrerer Identitätsattribute der elektronischen Identität zu steuern. Das Verfahren umfasst:

- Empfangen des zweiten Satzes Identitätsattribute von der Applikation,
- Entschlüsseln der unter Verwendung des ersten kryptographischen Schlüssels erstellten Verschlüsselung der ausgewählten auszulesenden Identitätsattribute in dem empfangenen zweiten Satz Identitätsattribute durch das entfernte Sicherheitselement,
- Verschlüsseln des zweiten Satzes Identitätsattribute mit den entschlüsselten auszulesenden Identitätsattribute unter Verwendung des dritten kryptographischen Schlüssels durch das entfernte Sicherheitselement,
- Senden des unter Verwendung des dritten kryptographischen Schlüssels verschlüsselten zweiten Satzes Identitätsattribute an das mobile Endgerät zum Weiterleiten an das auslesende Computersystem.

Nach Ausführungsformen ist der Server dazu konfiguriert jede der vorangehend beschriebenen Ausführungsformen des Verfahrens zum Auslesen ein oder mehrerer Identitätsattribute auszuführen.

Ausführungsformen umfassen ferner ein verteiltes System, welches ein mobiles Endgeräts nach einer der vorgenannten Ausführungsformen eines mobilen Endgeräts umfasst. Ferner umfasst das verteilte System einen Server, welcher das entfernte Sicherheitselement für die elektronische Identität bereitstellt, welche auf einem mobilen Endgerät gespeichert ist und von der auf dem mobilen Endgerät installierten Applikation verwaltet wird. Der Server umfasst ferner einen Prozessor, einen Speicher mit ausführbaren Programminstruktionen und eine Kommunikationsschnittstelle zur Kommunikation mit dem mobilen Endgerät über ein Netzwerk. Der Prozessor ist dazu konfiguriert, auf ein Ausführen der Programminstruktionen den Server zum Ausführen eines Verfahrens zum Auslesen ein oder mehrerer Identitätsattribute der elektronischen Identität zu steuern.

Das Verfahren umfasst:

- Empfangen des zweiten Satzes Identitätsattribute von der Applikation,
- Entschlüsseln der unter Verwendung des ersten kryptographischen Schlüssels erstellten Verschlüsselung der ausgewählten auszulesenden Identitätsattribute in dem empfangenen zweiten Satz Identitätsattribute durch das entfernte Sicherheitselement,
- Verschlüsseln des zweiten Satzes Identitätsattribute mit den entschlüsselten auszulesenden Identitätsattribute unter Verwendung des dritten kryptographischen Schlüssels durch das entfernte Sicherheitselement,
- Senden des unter Verwendung des dritten kryptographischen Schlüssels verschlüsselten zweiten Satzes Identitätsattribute an das mobile Endgerät zum Weiterleiten an das auslesende Computersystem.

Nach Ausführungsformen ist das System dazu konfiguriert jede der vorangehend beschriebenen Ausführungsformen des Verfahrens zum Auslesen ein oder mehrerer Identitätsattribute auszuführen.

Nach Ausführungsformen umfasst das verteilte System ferner einen Server eines Personalisierungsdienstes. Der Server des Personalisierungsdienstes umfasst ferner einen Prozessor, einen Speicher mit ausführbaren Programminstruktionen und eine Kommunikationsschnittstelle zur Kommunikation über das Netzwerk mit dem Server, welcher das entfernte Sicherheitselement für die elektronische Identität bereitstellt. Der Prozessor ist dazu konfiguriert, auf ein Ausführen der Programminstruktionen den Server des Personalisierungsdienstes zum Einbringen des ersten Satzes Identitätsattribute in das mobile Endgerät zu steuern.

Das Einbringen umfasst:

- Bereitstellen der Identitätsattribute des erste Satzes Identitätsattribute mit den Attributsidentifikatoren zur Personalisierung des mobilen Endgeräts,
- Nachweisen einer Berechtigung zum Einbringen von Identitätsattributen in das mobile Endgerät,

- Senden der bereitgestellten Identitätsattribute über das mobile Endgerät an den Server mit dem entfernten Sicherheitselement zum Weiterleiten an das mobile Endgerät.

Nach Ausführungsformen erstellte der Server des Personalisierungsdienstes den ersten Satz Identitätsattribute unter Verwendung der bereitgestellten Identitätsattribute mit den Attributsidentifikatoren. Das Erstellen des ersten Satz Identitätsattribute umfasst ein Verschlüsseln der bereitgestellten Identitätsattribute unter Verwendung des ersten und/oder des zweiten kryptographischen Schlüssels. Die Identitätsattribute werden in Form des ersten Satz Identitätsattribute an den Server mit dem entfernten Sicherheitselement gesendet.

Nach Ausführungsformen erstellt das Sicherheitselement den ersten Satz Identitätsattribute unter Verwendung der von dem Server des Personalisierungsdienstes empfangenen Identitätsattribute mit den Attributsidentifikatoren. Das Erstellen des ersten Satz Identitätsattribute umfasst ein Verschlüsseln der bereitgestellten Identitätsattribute unter Verwendung des ersten und/oder des zweiten kryptographischen Schlüssels. Die Identitätsattribute werden in Form des ersten Satz Identitätsattribute an das mobile Endgerät weitergeleitet.

Im Weiteren werden Ausführungsformen der Erfindung mit Bezugnahme auf die Zeichnungen näher erläutert. Es zeigen:

Figur 1 ein schematisches Diagramm eines exemplarischen mobilen Endgeräts,

Figur 2 ein schematisches Diagramm eines exemplarischen Satzes Identitätsattribute,

Figur 3 ein schematisches Diagramm eines exemplarischen Servers, welcher ein entferntes Sicherheitselement bereitstellt,

Figur 4 ein Flussdiagramm eines exemplarischen Verfahrens zum Auslesen von Identitätsattributen,

Figur 5 ein Flussdiagramm eines exemplarischen Verfahrens zum Auslesen von Identitätsattributen,

Figur 6 ein Flussdiagramm eines exemplarischen Verfahrens zum Initialisieren applikationsspezifischer kryptographischer Sicherheitsfunktionen,

Figur 7 ein Flussdiagramm eines exemplarischen Verfahrens zum Initialisieren applikationsspezifischer kryptographischer Sicherheitsfunktionen,

Figur 8 ein Flussdiagramm eines exemplarischen zentralen Authentisierens eines auslesenden Computersystems,

Figur 9 ein Flussdiagramm eines exemplarischen Authentifizierens eines Applets eines entfernten Sicherheitselements,

Figur 10 ein schematisches Diagramm eines exemplarischen mobilen Endgeräts,

Figur 11 ein schematisches Diagramm eines exemplarischen Servers, welcher ein entferntes Sicherheitselement bereitstellt und

Figur 12 ein schematisches Diagramm eines exemplarischen Systems.

Elemente der nachfolgenden Ausführungsformen, die einander entsprechen, werden mit denselben Bezugszeichen gekennzeichnet.

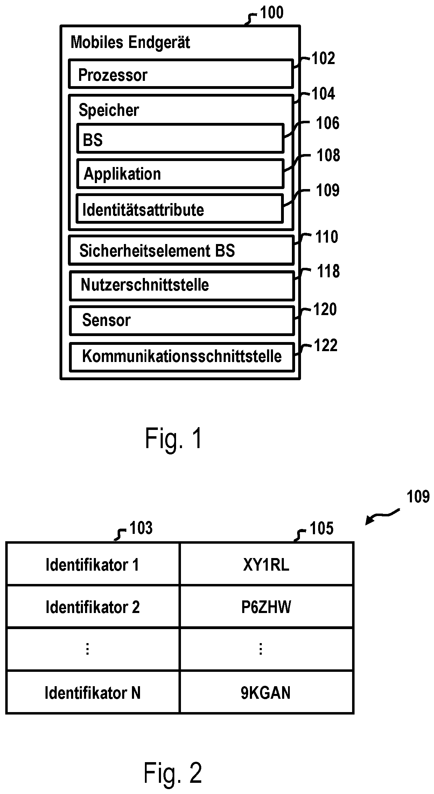

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installierten Betriebssystems 106 und ein oder mehrerer Applikationen bzw. Anwendungsprogramme 108 umfassen. Beispielsweise umfasst das mobile Endgerät 100 ein Sicherheitselement 110, welches dem Betriebssystem 106 zugeordnet ist und für dieses kryptographische Mittel bereitstellt, wie beispielsweise kryptographische Schlüssel, kryptographische Funktionen und/oder kryptographische Protokolle. Das Sicherheitselement 110 des Betriebssystems 106 stellt beispielsweise einen Key Store bzw. Schlüsselspeicher zum Speichern von kryptographischen Schlüsseln bereit, wie etwa symmetrische, öffentliche und/oder private kryptographische Schlüssel, und von Zertifikaten, wie beispielsweise Berechtigungszertifikate, Public-Key-Zertifikate und/oder Attributzertifikate. Die von dem ersten Sicherheitselement 110 bereitgestellten kryptographischen Mittel versetzten das Betriebssystem 106 beispielsweise dazu in die Lage, Daten zu verschlüsseln und/oder zu entschlüsseln, sowie Signaturen zu erstellen und/oder zu prüfen. Beispielsweise versetzen die von dem ersten Sicherheitselement 110 bereitgestellten kryptographischen Mittel das Betriebssystem 106 dazu in die Lage, ein Challenge Response-Verfahrens auszuführen bzw. an diesem teilzunehmen.

Ferner umfasst das mobile Endgerät 100 eine Nutzerschnittelle 118, welche beispielsweise ein Display, insbesondere ein Touchscreen, umfasst. Unter Verwendung des Nutzerschnittelle 118, kann der Nutzer mit dem mobiles Endgerät 100 interagieren. Beispielsweise kann der Nutzer zum Bereitstellen von Authentifizierungsdaten bzw. Authentifizierungsmerkmalen aufgefordert werden. Zum Erfassen von Authentifizierungsdaten des Nutzers umfasst das mobile Endgerät 100 einen Sensor bzw. Authentifizierungssensor 120, welcher beispielsweise in die Nutzerschnittstelle 118 integriert oder als eigenständige Komponente implementiert sein kann. Die Authentifizierungsdaten können beispielsweise biometrische Daten des Nutzers umfassen, wie beispielsweise: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Die Authentifizierungsdaten können beispielsweise ein Wissen des Nutzers umfassen, wie eine PIN oder Passwort. Ferner können die Authentifizierungsdaten beispielsweise Verhaltensmerkmale bzw. Verhaltensdaten des Nutzers umfassen, wie beispielsweise Bewegungsdaten des mobile Endgerät 100, welche durch von grob- und/oder feinmotorische Bewegungen des Nutzers verursacht werden, wenn dieser das des mobile Endgerät 100 bei sich trägt und/oder nutzt. Ein entsprechendes Authentifizieren des Nutzers kann beispielsweise Voraussetzung für ein Freigeben von Identitätsattributen der elektronischen Identität zum Auslesen durch ein auslesendes Computersystem sein. Durch eine entsprechende Nutzerauthentifizierung kann zum einen sichergestellt werden, dass das mobile Endgerät 100 von einem berechtigten Nutzer genutzt wird. Zum andern kann das Bereitstellen von Authentifizierungsdaten durch den Nutzer ein Einverständnis des Nutzers zum Auslesen der Identitätsattributen der elektronischen Identität durch das auslesende Computersystem darstellen. Schließlich umfasst das mobile Endgerät 100 eine Kommunikationsschnittstelle 122, etwa eine Antenne, welche konfiguriert ist für eine kontaktlose oder kontaktbehaftete Kommunikation etwa mit dem auslesenden Computersystem. Beispielsweise kann die Kommunikation mit dem auslesenden Computersystem über ein Netzwerk, wie etwa ein Intranet oder das Internet, erfolgen.

In dem Speicher des mobilen Endgeräts 100 ist ferner ein Satz Identitätsattribute 109 einer von der Applikation 108 verwalteten elektronischen Identität gespeichert, welcher ein oder mehrere Identitätsattribute in verschlüsselter Form umfasst. Ferner umfasst der Satz Identitätsattribute 109 beispielsweise Attributsidentifikatoren, welche die verschlüsselten Identitätsattribute identifizieren. Hierbei verfügt das mobile Endgerät 100 beispielsweise über die verschlüsselten Identitätsattribute des Satzes 109, ohne diese entschlüsseln zu können, während ein von einem Server bereitgestelltes entferntes Sicherheitselement beispielsweise über einen kryptographischen Schlüssel zum Entschlüsseln der Identitätsattribute 109 verfügt. Somit kann die kryptographische Sicherung der Identitätsattribute des Satzes 109 auf den Server bzw. das von diesem bereitgestellte entferntes Sicherheitselement ausgelagert werden, während das mobile Endgerät 100 bzw. der Nutzer des mobilen Endgeräts 100 die Verfügungshoheit über die Identitätsattribute des Satzes 109 und damit seine entsprechende elektronische Identität behält. Das mobile Endgerät 100 ist beispielsweise dazu konfiguriert ein Auslesen von Identitätsattributen des Satzes 109, welche die Applikation 108 verwaltet, durch ein auslesendes Computersystem zu ermöglichen. Beispielsweise empfängt das mobile Endgerät 100 über die Kommunikationsschnittstelle 122 eine Leseanfrage des auslesenden Computersystems nach auszulesenden Identitätsattributen des Satzes 109. Die Leseanfrage umfasst Attributsidentifikatoren, welche die auszulesenden Identitätsattribute des Satzes 109 identifizieren. Das mobile Endgerät 100 wählt unter Verwendung der Attributsidentifikatoren die auszulesenden Identitätsattribute aus Satzes 109 in verschlüsselter Form aus, erstellt einen zweiten Satz Identitätsattribute mit den ausgewählten verschlüsselten Identitätsattribute aus Satzes 109 und sendet diesen zweiten Satz über die Kommunikationsschnittstelle 122 an den Server. In Antwort auf das Senden der auszulesenden Identitätsattribute, empfängt das mobile Endgerät 100 die auszulesenden Identitätsattribute 109 über die Kommunikationsschnittstelle 122 zum Weiterleiten an das auslesende Computersystem. Die weiterzuleitenden Identitätsattribute wurden von dem Server entschlüsselt und unter Verwendung eines dritten kryptographischen Schlüssels, etwa eines ephemeren symmetrischen kryptographischen Schlüssels, umverschlüsselt. Das entfernte Sicherheitselement des Servers entschlüsselt dabei beispielsweise die unter Verwendung des ersten kryptographischen Schlüssels erstellte Verschlüsselung der ausgewählten auszulesenden Identitätsattribute in dem empfangenen zweiten Satz Identitätsattribute vor dem Verschlüsseln mit dem dritten kryptographischen Schlüssel. Das mobile Endgerät 100 leitet die unter Verwendung des dritten kryptographischen Schlüssels verschlüsselten auszulesenden Identitätsattribute 109 über die Kommunikationsschnittstelle 122 an das auslesende Computersystem weiter.

Figur 2 zeigt ein schematisches Diagramm eines exemplarischen Satzes Identitätsattribute. Der Satzes Identitätsattribute weist beispielsweise eine Datenstruktur in Form einer Tabelle 109 aufweisen. In einer ersten Spalte 103 sind Attributsidentifikatoren, wie etwa Attributnamen, gespeichert, welche das jeweils zugehörige Identitätsattribut in der zweiten Spalte 105 identifizieren. Die Identitätsattribut in der zweiten Spalte 105 sind jeweils individuell verschlüsselt, beispielsweise mit einem ersten kryptographischen Schlüssel. Dennoch ermöglichen es die unverschlüsselten Attributsidentifikatoren in der ersten Spalte 103 die jeweiligen Identitätsattribut zu identifizieren. Zwar bleibt der Inhalt der Identitätsattribute unbekannt, dennoch können die bestimmte auszulesende Identitätsattribute, wie etwa ein Vorname, ein Nachname, eine Straße, eine Hausnummer, eine Postleitzahl, ein Wohnort, ein Geburtsdatum, ein Geburtsort und/oder eine Staatsangehörigkeit, ausgewählt und zum Auslesen bereitgestellt werden. Hierzu werden beispielsweise die Zeilen der Tabelle 109, deren Attributsidentifikatoren von der Leseanforderung umfasst sind aus der ersten Tabelle 109 ausgewählt und kopiert, sodass ein zweiter Satz Identitätsattribute in Form einer zweiten Tabelle erzeugt wird, bei welcher es sich um eine Teilmenge der Zeilen der Tabelle 109 handelt. Zusätzlich zu der Verschlüsselung unter Verwendung des ersten kryptographischen Schlüssels kann der Satz Identitätsattribute in Form der Tabelle 109 mit einem zweiten kryptographischen Schlüssel verschlüsselt sein. Diese zweite Verschlüsselung unter Verwendung des zweiten kryptographischen Schlüssels wird beispielsweise im Zuge eines Auswählens von Identitätsattributen aus der Tabelle 109 durch das mobile Endgerät entschlüsselt werden. Beispielsweise sind die einzelnen Identitätsattributen in Spalte 105 der Tabelle 109 zusätzlich individuell mit dem zweiten kryptographischen Schlüssel verschlüsselt oder die Tabelle 109 kann beispielsweise als Ganzes mit dem zweiten kryptographischen Schlüssel verschlüsselt sein.

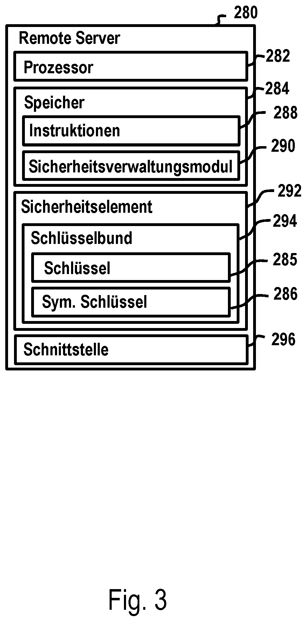

Figur 3 zeigt einen exemplarischen Server 280, welcher als Remote Server ein entferntes Sicherheitselement 292 zur Nutzung für ein mobiles Endgerät bzw. für eine von einer Applikation des mobilen Endgeräts verwaltete elektronische Identität über ein Netzwerk bereitstellt. Der Server 280 umfasst beispielsweise ferner einen Prozessor 282, einen Speicher 284 und eine Kommunikationsschnittstelle 296. In dem Speicher 284 sind Programminstruktionen 288 gespeichert zum Auslesen von auf dem mobilen Endgerät gespeicherten Identitätsattributen, welche die Applikation verwaltet. Die auszulesenden Identitätsattribute werden einem auslesenden Computersystem zur Verfügung gestellt. Bei Ausführung der Programminstruktionen 288 steuert der Prozessor 282 den Server 280 beispielsweise zum Empfangen der auszulesenden Identitätsattribute von der Applikation unter Verwendung der Kommunikationsschnittstelle 296. Die Identitätsattribute sind unter Verwendung eines der elektronischen Identität zugeordneten ersten kryptographischen Schlüssels verschlüsselt. Das Sicherheitselement 292 verfügt über einen kryptographischen Schlüssel 285 zum Entschlüsseln der Identitätsattribute. Im Falle einer symmetrischen Verschlüsslung handelt es sich bei dem kryptographischen Schlüssel 285 beispielsweise um den entsprechenden symmetrischen Schlüssel. Im Falle einer asymmetrischen Verschlüsslung sind die Identitätsattribute beispielsweise mit einem öffentlichen kryptographischen Schlüssel verschlüsselt, dessen zugehöriger privater kryptographischen Schlüssel als der kryptographische Schlüssel 285 in dem entfernten Sicherheitselement 292 gespeichert ist. Das entfernte Sicherheitselement 292 entschlüsselt die auszulesenden Identitätsattribute unter Verwendung kryptographischen Schlüssels 285. Ferner verschlüsselt das entfernte Sicherheitselement 292 die entschlüsselten auszulesenden Identitätsattribute unter Verwendung eines in dem entfernten Sicherheitselement 292 gespeicherten kryptographischen Schlüssels 286, beispielsweise eines ephemeren symmetrischen kryptographischen Schlüssels. Diesen ephemeren symmetrischen kryptographischen Schlüssels 286 teilt sich das entfernte Sicherheitselement 292 beispielsweise mit dem auslesenden Computersystem zur Kommunikationsverschlüsselung. Schließlich sendet der Server 280 die verschlüsselten auszulesenden Identitätsattribute an das auszulesende Computersystem unter Verwendung der Kommunikationsschnittstelle 296. Beispielsweise sendet der Server 280 die verschlüsselten auszulesenden Identitätsattribute an das mobile Endgerät zum Weiterleiten an das auszulesende Computersystem.

Das entfernte Sicherheitselement 292 umfasst beispielsweise einen der Applikation und/oder der elektronischen Identität zugeordneten Schlüsselbund 294. Der Schlüsselbund 294 stellt der Applikation 108 für die von ihr verwaltete elektronische Identität identitätsindividuelle kryptographische Schlüssel zur Verfügung zu stellen. Ferner umfassen das entfernte Sicherheitselement 292 beispielsweise weitere kryptographische Mittel, wie etwa kryptographische Funktionen und/oder kryptographische Protokolle, welche das entfernte Sicherheitselement der Applikation bzw. der elektronischen Identität zur Nutzung zur Verfügung stellt. Der Schlüsselbund 294 wird beispielsweise mittels eines Key Stores bzw. Schlüsselspeichers zum Speichern von kryptographischen Schlüsseln für die individuellen elektronischen Identität bereitgestellt, wie etwa symmetrische, öffentliche und/oder private kryptographischer Schlüssel, und von Zertifikaten, wie beispielsweise Public-Key-Zertifikaten und/oder Attributzertifikaten. Die von dem entfernten Sicherheitselement 292 bereitgestellten kryptographischen Mittel versetzten die Applikation 108 unter Verwendung des Schlüsselbunds 294 mit den identitätsindividuellen kryptographischen Schlüsseln beispielsweise dazu in die Lage Daten, für die von der Applikation 108 verwalteten elektronischen Identität zu verschlüsseln und/oder zu entschlüsseln, sowie Signaturen zu erstellen und/oder zu prüfen. Beispielsweise versetzen die von dem entfernten Sicherheitselement 292 bereitgestellten kryptographischen Mittel die Applikation 108 dazu in die Lage, für die von ihr verwaltete elektronische Identität ein Challenge Response-Verfahren auszuführen bzw. an diesem teilzunehmen. Das Sicherheitselemente 292 kann beispielsweise als ein Hardware-Sicherheitsmodul implementiert sein. Ein Hardware-Sicherheitsmodul bezeichnet ein internes oder externes Peripheriegerät, welches eine effiziente und sichere Ausführung kryptographischer Operationen und/oder Applikationen ermöglicht. Von dem Sicherheitsmodul verwendete kryptographischen Schlüssel sind auf diesem beispielsweise sowohl softwaretechnisch als auch gegen physische Angriffe oder Seitenkanalangriffe geschützt gespeichert.

Beispielsweise umfasst der Server 280 ferner ein Sicherheitsverwaltungsprogrammmodul 290 eines das Sicherheitselement 292 verwaltenden Sicherheitsverwaltungsdienstes. Beispielsweise handelt es sich bei dem Server 280 um einen Server des Sicherheitsverwaltungsdienstes oder um einen eigenständigen Server. Der Sicherheitsverwaltungsdienst stellt beispielsweise das Applet 294 zum Installieren in dem Sicherheitselement 294 bereit. Beispielsweise umfasst der Server 280 eine Mehrzahl von Sicherheitselementen 292, welche jeweils von einem individuellen Sicherheitsverwaltungsdienst verwaltet werde. Für jedes der Sicherheitselemente 292 ist beispielsweise ein Sicherheitsverwaltungsprogrammmodul 290 auf dem Server 280 installiert. Beispielsweise umfasst der Server 280 genau ein Sicherheitselementen 292 oder ausschließlich Sicherheitselemente 292, welche von demselben Sicherheitsverwaltungsdienst verwaltet werden. Beispielsweise wird eine Mehrzahl von Server 280 bereitgestellt, welche unterschiedlichen Sicherheitsverwaltungsdiensten zugeordnet sind und ausschließlich Sicherheitselemente 292 umfassten, welche von demselben Sicherheitsverwaltungsdienst verwaltet werden, welchem der entsprechende Server 280 zugeordnet ist.

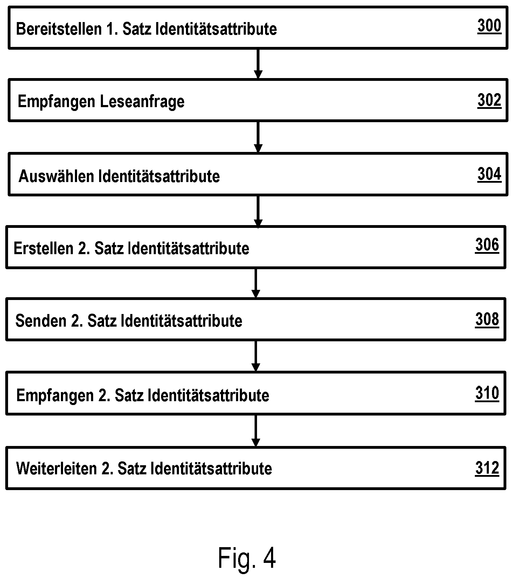

Figur 4 zeigt ein exemplarisches Verfahren zum Auslesen von Identitätsattribute einer elektronischen Identität. Die elektronische Identität ist auf einem mobilen Endgerät gespeichert und wird von einer auf dem mobilen Endgerät installierten Applikation verwaltet. Für die elektronische Identität wird auf einem Server ein entferntes Sicherheitselement bereitstellt. Der Server kommuniziert mit dem mobilen Endgerät über ein Netzwerk. In Block 300 wird auf dem mobilen Endgerät ein erster Satz Identitätsattribute bereitgestellt, welcher ein oder mehrere Identitätsattribute umfasst. Die elektronische Identität umfasst den entsprechenden ersten Satz Identitätsattribute, welcher auf dem mobilen Endgerät gespeichert ist. Die Identitätsattribute in dem ersten Satz Identitätsattribute sind jeweils individuell unter Verwendung eines ersten kryptographischen Schlüssels des entfernten Sicherheitselements verschlüsselt. Den Identitätsattributen in dem ersten Satz Identitätsattribute ist jeweils ein Attributsidentifikator zugeordnet. Die unter Verwendung des ersten kryptographischen Schlüssels verschlüsselten Identitätsattribute des ersten Satzes Identitätsattribute sind ferner unter Verwendung eines zweiten kryptographischen Schlüssels des mobilen Endgeräts verschlüsselt. In Block 302 empfängt die Applikation auf dem mobilen Endgerät über das eine Leseanfrage eines auslesenden Computersystems nach auszulesenden Identitätsattributen, welche die auszulesenden Identitätsattribute unter Verwendung von deren Attributsidentifikatoren identifiziert. In Block 304 wählt das mobile Endgerät die auszulesenden Identitätsattribute aus dem ersten Satz Identitätsattribute. Im Zuge des Auswählens wird die unter Verwendung des zweiten kryptographischen Schlüssels erstellte Verschlüsselung zumindest teilweise entschlüsselt, während die unter Verwendung des ersten kryptographischen Schlüssels erstellte Verschlüsslung aufrechterhalten wird. Eine Identifikation der auszulesenden Identitätsattribute, welche nach wie vor verschlüsselt sind, erfolgt dabei unter Verwendung der Attributsidentifikatoren. In Block 306 wird ein zweiter Satz Identitätsattribute erstellt, welcher die ausgewählten auszulesenden Identitätsattribute umfasst, die unter Verwendung des ersten kryptographischen Schlüssels verschlüsselt sind. In Block 308 sendet die Applikation die auszulesenden Identitätsattribute in ihrer verschlüsselten Form, d.h. in Form des zweiten Satzes Identitätsattribute über das Netzwerk an den Server. Die gesendeten Identitätsattribute sind unter Verwendung eines der elektronischen Identität zugeordneten kryptographischen Schlüssels verschlüsselt. Bei dem entsprechenden Schlüssel kann es sich beispielsweise um einen symmetrischen kryptographischen Schlüssel oder einen öffentlichen kryptographischen Schlüssel eines asymmetrischen Schlüsselpaars handeln. Das entfernte Sicherheitselement des Servers verfügt über einen kryptographischen Schlüssel zum Entschlüsseln der Identitätsattribute, d.h. beispielsweise den entsprechenden symmetrischen kryptographischen Schlüssel oder einen dem öffentlichen kryptographischen Schlüssel zugeordneten privaten kryptographischen Schlüssel. In Block 310 empfängt die Applikation des mobilen Endgeräts, in Antwort auf das Senden der auszulesenden Identitätsattribute den von dem Sicherheitselement des Servers umverschlüsselten zweiten Satz Identitätsattribute. Der umverschlüsselte zweite Satz Identitätsattribute ist unter Verwendung eines dritten kryptographischen Schlüssels des auslesenden Computersystems verschlüsselt. Dabei wurden die unter Verwendung des ersten kryptographischen Schlüssels erstellte Verschlüsselung der ausgewählten auszulesenden Identitätsattribute in dem umverschlüsselten zweiten Satz Identitätsattribute durch das entfernte Sicherheitselement vor dem Verschlüsseln mit dem dritten kryptographischen Schlüssel entschlüsselt. Die Identitätsattribute des umverschlüsselten zweiten Satzes Identitätsattribute sind mithin nichtmehr mit dem ersten kryptographischen Schlüssel verschlüsselt. In Block 312 leitet die Applikation den umverschlüsselten zweiten Satz Identitätsattribute in Antwort auf die in Block 300 empfangene Leseanfrage an das auslesende Computersystem weiter.

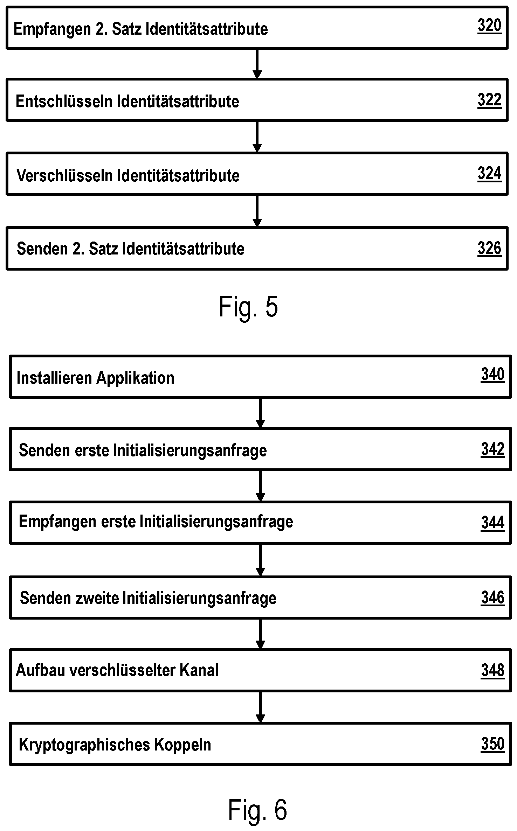

Figur 5 zeigt ein exemplarisches Verfahren zum Auslesen von Identitätsattribute einer auf einem mobilen Endgerät gespeicherten und von einer auf dem mobilen Endgerät installierten Applikation verwalteten elektronischen Identität unter Verwendung eines Servers. Der Server stellt ein entferntes Sicherheitselement für die elektronische Identität bereitstellt. Die auszulesenden Identitätsattribute sind in verschlüsselter Form auf dem mobilen Endgerät gespeichert. Der Server kommuniziert mit dem mobilen Endgerät über ein Netzwerk. In Block 320 empfängt der Server über das Netzwerk auszulesenden Identitätsattribute von der die entsprechende elektronische Identität verwaltenden Applikation des mobilen Endgeräts. Die empfangenen Identitätsattribute sind unter Verwendung eines der elektronischen Identität zugeordneten ersten kryptographischen Schlüssels verschlüsselt. Bei dem entsprechenden Schlüssel kann es sich beispielsweise um einen symmetrischen kryptographischen Schlüssel oder einen öffentlichen kryptographischen Schlüssel eines asymmetrischen Schlüsselpaars handeln. Das entfernte Sicherheitelement des Servers verfügt über einen kryptographischen Schlüssel zum Entschlüsseln der Identitätsattribute, d.h. beispielsweise den entsprechenden symmetrischen kryptographischen Schlüssel oder einen dem öffentlichen kryptographischen Schlüssel zugeordneten privaten kryptographischen Schlüssel. In Block 322 entschlüsselt das entfernte Sicherheitselement die auszulesenden Identitätsattribute unter Verwendung des in dem Sicherheitselement gespeicherten kryptographischen Schlüssels. In Block 324 verschlüsselt das entfernte Sicherheitselement die entschlüsselten auszulesenden Identitätsattribute unter Verwendung eines in dem entfernten Sicherheitselement gespeicherten dritten kryptographischen Schlüssels, wie beispielsweise eines ephemeren symmetrischen kryptographischen Schlüssels. Diesen ephemeren symmetrischen kryptographischen Schlüssel teilt sich das entfernte Sicherheitselement beispielsweise mit dem auslesenden Computersystem zur Kommunikationsverschlüsselung. In Block 326 sendet der Server die wieder verschlüsselten auszulesenden Identitätsattribute über das Netzwerk an das auszulesende Computersystem. Beispielsweise sendet der Server die wieder verschlüsselten auszulesenden Identitätsattribute an das mobile Endgerät zum Weiterleiten an das auszulesende Computersystem.

Figur 6 zeigt ein exemplarisches Verfahren zum Initialisieren applikationsspezifischer kryptographischer Sicherheitsfunktionen auf einem entfernten Sicherheitselement eines Servers für eine Applikation eines mobilen Endgeräts. In Block 340 wird eine mobile Applikation auf dem mobilen Endgerät installiert. In Block 342 wird eine Initialisierungsanfrage von der installierten Applikation beispielsweise über ein Netzwerk an ein das auf dem Server installierte Sicherheitsverwaltungsprogrammmodul des Sicherheitsverwaltungsdienstes gesendet, welcher das entfernte Sicherheitselement des Servers verwaltet. Die Initialisierungsanfrage fragt ein Implementieren applikationsspezifischer kryptographischer Sicherheitsfunktionen für die Applikation in dem entfernten Sicherheitselement an, welches der entsprechende Sicherheitsverwaltungsdienst verwaltet. In Block 344 empfängt das Sicherheitsverwaltungsprogrammmodul des Servers die Initialisierungsanfrage der Applikation. In Block 346 wird von dem Sicherheitsverwaltungsprogrammmodul eine Initialisierungsanfrage an einen Server des ausgewählten Sicherheitsverwaltungsdienstes gesendet und ein Implementieren der applikationsspezifischen kryptographischen Sicherheitsfunktionen für die installierte Applikation auf dem entfernten Sicherheitselement durch den Sicherheitsverwaltungsdienst angefragt. Alternativ kann es sich bei dem Server mit dem entfernten Sicherheitselement um einen Server des Sicherheitsverwaltungsdienstes handeln, womit die zweite Initialisierungsanfrage wegfallen könnte. In Block 348 wird beispielsweise ein verschlüsselter Kanal zwischen dem entfernten Sicherheitselement und dem Server des ausgewählten Sicherheitsverwaltungsdienstes aufgebaut. Hierzu wird beispielsweise ein kryptographischer Schlüssel des Sicherheitsverwaltungsdienstes verwendet. Dieser kryptographische Schlüssel des Sicherheitsverwaltungsdienstes weist beispielsweise einen dem Sicherheitsverwaltungsdienst vorbehaltenen Schreibzugriff auf das von dem Sicherheitsverwaltungsdienst verwaltete Sicherheitselement nach. In Block 350 wird die Applikation mit dem entfernten Sicherheitselement kryptographisch gekoppelt, wodurch eine Nutzung der von dem entfernten Sicherheitselement bereitgestellten applikationsspezifischen kryptographischen Sicherheitsfunktionen für die Applikation freigeschaltet wird. Hierbei wird in dem entfernten Sicherheitselement beispielsweise ein der von der Applikation verwalteten elektronischen Identität zugeordneter kryptographischer Schlüssel gespeichert. Bei dem entsprechenden kryptographischen Schlüssel kann es sich beispielsweise um einen symmetrischen kryptographischen Schlüssel oder einen kryptographischen Schlüssel eines asymmetrischen Schlüsselpaars handeln, welches in dem entfernten Sicherheitselement gespeichert wird. Der gespeicherte kryptographische Schlüssel kann beispielsweise durch das entfernte Sicherheitselement erzeugt werden oder von dem das entfernte Sicherheitselement verwaltenden Sicherheitsverwaltungsdienst empfangen. Beispielsweise wird der kryptographische Schlüssel von einem Server des Sicherheitsverwaltungsdienstes in das entfernte Sicherheitselement über einen verschlüsselten Kanal eingebracht. Im Falle eines von dem entfernten Sicherheitselement erzeugten asymmetrischen Schlüsselpaars, wird beispielsweise ein öffentlicher kryptographischer Schlüssel des entsprechenden asymmetrischen Schlüsselpaars dem Server des ausgewählten Sicherheitsverwaltungsdienstes über das Sicherheitsverwaltungsprogrammmodul des entsprechenden Sicherheitsverwaltungsdienstes zur Verfügung gestellt.

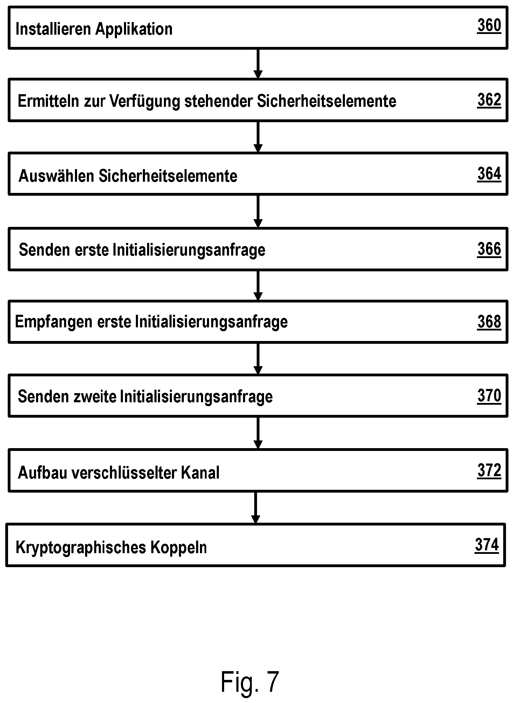

Figur 7 zeigt ein weiteres exemplarisches Verfahren zum Initialisieren applikationsspezifischer kryptographischer Sicherheitsfunktionen für eine mobile Applikation auf einem entfernten Sicherheitselement eines Servers für eine Applikation eins mobilen Endgeräts. In Block 360 wird die mobile Applikation auf dem mobilen Endgerät installiert. In Block 362 ermittelt die installierte Applikation, welche entfernten Sicherheitselemente auf Servern dem mobilen Endgerät zur Verfügung stehen und zum Bereitstellen applikationsspezifischer kryptographischer Sicherheitsfunktionen für die mobile Applikation verwendbar sind. In Block 364 wird zumindest einer der Server mit einem ermittelten entfernten Sicherheitselemente ausgewählt. Beispielsweise werden mehrere Server mit einem ermittelten Sicherheitselement ausgewählt. Die Auswahl kann automatisch erfolgen. Beispielsweise kann auch ein Auswahlvorschlag erstellt und dem Nutzer des mobilen Endgeräts angezeigt werden. Der Nutzer kann dem Vorschlag beispielsweise zustimmen oder diesen ändern. Nach Ausführungsformen ist ein Teil des Vorschlags obligatorisch und kann von dem Nutzer nicht geändert werden, während ein anderer Teil fakultativ ist und von dem Nutzer geändert werden kann. Die ausgewählten entfernten Sicherheitselemente werden jeweils von einem Sicherheitsverwaltungsdienst verwaltet. Für jeden dieser Sicherheitsverwaltungsdienste ist beispielsweise jeweils ein Sicherheitsverwaltungsprogrammmodul auf dem das entsprechende entfernte Sicherheitselement bereitstellenden Server installiert. Falls für einen der Sicherheitsverwaltungsdienste ein Sicherheitsverwaltungsprogrammmodul fehlt, kann dieses im Zuge des Verfahrens beispielsweise auf dem Server installiert werden. Für jedes der ausgewählten entfernten Sicherheitselemente werden die Blöcke 366 bis 374 ausgeführt, welche identisch sind mit den Blöcken 344 bis 350 der Figur 6.

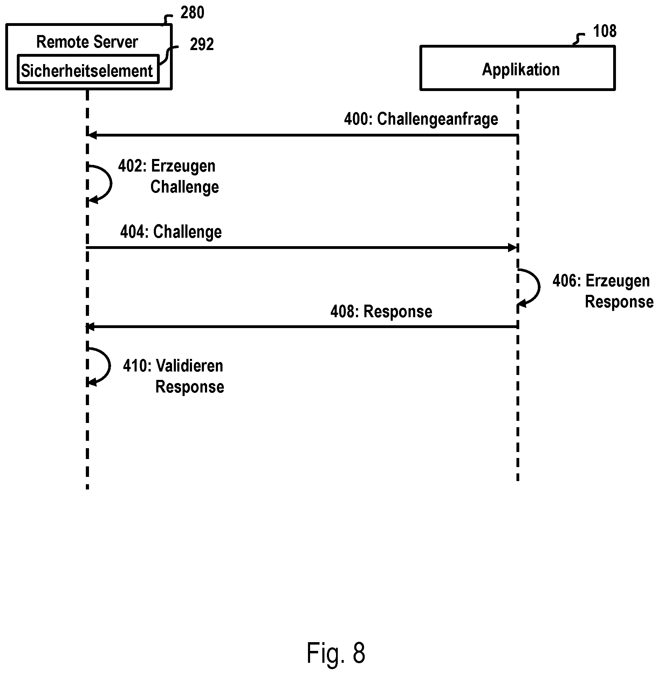

Figur 8 zeigt ein exemplarisches Verfahren zum Authentifizieren der Applikation 108 des mobilen Endgerätes durch den Server 280 unter Verwendung des entfernten Sicherheitselements 292. In Schritt 400 empfängt der Server eine von der Applikation über ein Netzwerk gesendete Challengeanfrage. In Schritt 402 erzeugt beispielsweise das Sicherheitselements 292 eine Challenge für die Applikation, bei welcher es sich beispielsweise um eine Zufallszahl handelt. In Schritt 404 sendet der Server 280 die Challenge über das Netzwerk an die Applikation, welche unter Verwendung der Challenge in Schritt 406 eine Response erzeugt. Beispielsweise erzeugt die Applikation die Response unter Verwendung eines der elektronischen Identität zugeordneten symmetrischen kryptographischen Schlüssels. Bei der Response handelt es sich beispielsweise um eine Signatur der Challenge. Der zum Erstellen der Challenge verwendete kryptographische Schlüssel, beispielsweise ein symmetrischer kryptographischer Schlüssel, wird von einem Sicherheitselement des Betriebssystems des mobilen Endgeräts bereitgestellt. Eine Verwendung des entsprechenden kryptographischen Schlüssels und damit die Erzeugung der Response setzt beispielsweise ein erfolgreiches Authentifizieren des Nutzers durch das mobile Endgerät voraussetzt. Hierzu werden beispielsweise biometrische Merkmale des Nutzers erfasst und d mit Referenzmerkmalen verglichen, welche beispielsweise in dem Sicherheitselement des Betriebssystems hinterlegt sind. Eine erfolgreiche Authentifizierung des Nutzers stellt beispielsweise zugleich eine Einverständniserklärung des Nutzers zum Auslesen der Identitätsattribute dar. In Schritt 408 empfängt der Server 280 die Response der Applikation und validiert diese in Schritt 410. Beispielsweise wird die Signatur mit einem in dem entfernten Sicherheitselement gespeicherten kryptographischen Schlüssel als Signaturprüfschlüssel geprüft. Ist die Signaturprüfung erfolgreich, gilt die Applikation und gegebenenfalls der Nutzer als authentifiziert. Ferner stellt eine erfolgreiche Signaturprüfung beispielsweise eine Bestätigung des Einverständnisses des Nutzers zum Auslesen der Identitätsattribut dar.

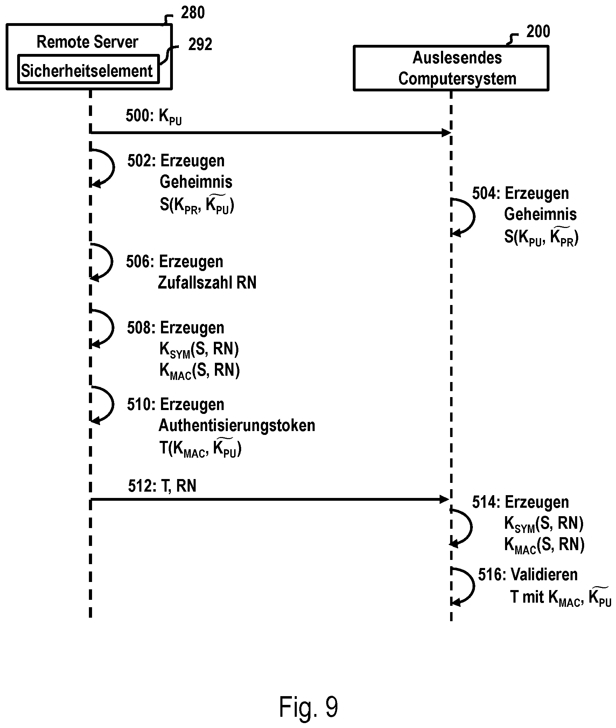

Figur 9 zeigt ein Verfahren zum Authentisieren einer von einer Applikation auf einem mobilen Endgerät verwalteten elektronischen Identität gegenüber einem Identitätsattribute der entsprechenden Identität auslesenden Computersystem unter Verwendung eines von einem Server über ein Netzwerk bereitgestellten entfernten Sicherheitselements. In Schritt 500 sendet der Server 280 bzw. das entfernte Sicherheitselement einen öffentlichen kryptographischen Schlüssels $K_{PU}$ eines der elektronischen Identität zugeordneten asymmetrischen Schlüsselpaars an das auslesende Computersystem 200. In Schritt 502 berechnet das entfernte Sicherheitselement 292 ein mit dem auslesenden Computersystem 200 geteilten Geheimnisses S unter Verwendung eines privaten kryptographischen Schlüssels $K_{PR}$ des der elektronischen Identität zugeordneten asymmetrischen Schlüsselpaars und einem von dem auslesenden Computersystem 200 empfangenen ephemeren öffentlichen kryptographischen Schlüssel $\widetilde{K_{PU}}$ des auslesenden Computersystems 200. Der entsprechende öffentlichen kryptographischen Schlüssel $\widetilde{K_{PU}}$ des auslesenden Computersystems 200 wird beispielsweise im Zuge des Authentifizierens des auslesenden Computersystems 200 von der Applikation empfangen und an das entfernte Sicherheitselement weitergeleitet. Beispielsweise wird im Zuge des Authentisierens der Applikationen eine zweite Kopie des ephemeren öffentlichen kryptographischen Schlüssels $\widetilde{K_{PU}}$ empfangen, welche mit der im Zuge des Authentifizierens des auslesenden Computersystems 200 empfangen Kopie des ephemeren öffentlichen kryptographischen Schlüssels $\widetilde{K_{PU}}$ verglichen wird. In Schritt 504 berechnet das auslesende Computersystem 200 ebenfalls das geteilten Geheimnis S. Hierzu verwendet das auslesende Computersystem 200 beispielsweise den in Schritt 500 gesendeten öffentlichen kryptographischen Schlüssels $K_{PU}$ sowie den zu dem ephemeren öffentlichen kryptographischen Schlüssel $\widetilde{K_{PU}}$ gehörenden ephemeren privaten kryptographischen Schlüssel $\widetilde{K_{PR}}$. In Schritt 506 erzeugt das entfernte Sicherheitselement 292 eine Zufallszahl RN. In Schritt 508 erzeugt das entfernte Sicherheitselement 292 einen Authentisierungsschlüssel $K_{MAC}$, z.B. einen Schlüssel zum Erzeugen eines MAC-Codes, sowie einen symmetrischen kryptographischen Schlüssel $K_{SYM}$. Die Schlüssel $K_{SYM}$ und $K_{MAC}$ dienen beispielsweise dazu von dem entfernten Sicherheitselement 292 für die Applikation an das auslesende Computersystem 200 gesendete Daten, wie etwa Identitätsattribute, zu verschlüsseln und deren Authentizität nachzuweisen, etwa unter Verwendung eines MAC-Codes. In Schritt 510 erzeugt das entfernte Sicherheitselement 292 einen Authentisierungstoken T unter Verwendung des Authentisierungsschlüssels $K_{MAC}$ und des ephemeren öffentlichen kryptographischen Schlüssels $\widetilde{K_{PU}}$. In Schritt 512 wird der Authentisierungstoken T zusammen mit der in Schritt 506 erzeugten Zufallszahl RN an das auslesende Computersystem 200 gesendet. In Schritt 514 verwendet das auslesende Computersystem 200 die empfangene Zufallszahl RN zusammen mit dem in Schritt 504 berechneten geteilten Geheimnis S zum Berechnen des Authentisierungsschlüssels $K_{MAC}$, z.B. eines Schlüssels zum Erzeugen eines MAC-Codes, sowie des symmetrischen kryptographischen Schlüssels $K_{SYM}$. In Schritt 516 wird schließlich der empfangene Authentisierungstoken T von dem auslesenden Computersystem 200 unter Verwendung des Schlüssels $K_{MAC}$ und des ephemeren öffentlichen kryptographischen Schlüssels $\widetilde{K_{PU}}$ validiert. Beispielsweise berechnet das auslesende Computersystem 200 ebenfalls den Authentisierungstoken T und vergleicht das Ergebnis mit dem empfangenen Authentisierungstoken T. Falls beide übereinstimmen ist die Applikation bzw. die von ihr verwaltete elektronische Identität erfolgreich authentisiert.

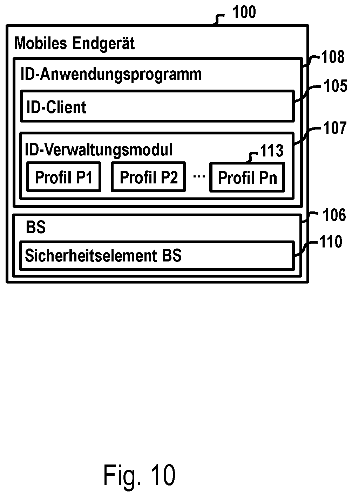

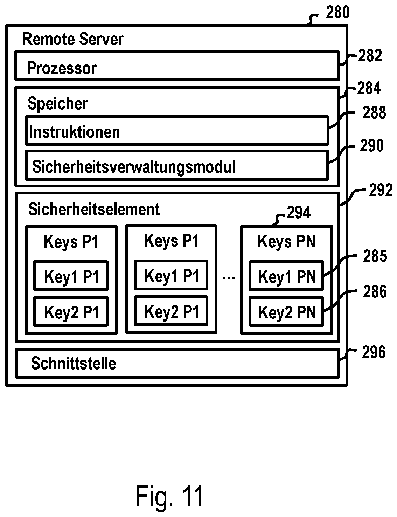

Figur 10 zeigt ein exemplarisches mobiles Endgerät 100, auf welchem ein oder mehrere Anwendungsprogramme 108 gespeichert sind, bei denen es sich beispielsweise um ein ID-Anwendungsprogramme handelt. Ein ID-Anwendungsprogramm 108 verwaltet beispielsweise ein oder mehrere dem Nutzer zugeordnete elektronische Identitäten mit Identitätsattributen. Hierzu umfasst es beispielsweise ein ID-Verwaltungsmodul 107 mit ein oder mehreren Identitäten bzw. ID-Profilen 113. Jeder der elektronischen Identitäten 113 ist beispielsweise jeweils ein Schlüsselbund 294 mit ein oder mehreren der elektronischen Identitäten 113 in einem entfernten Sicherheitselement 292 eines Servers 280, wie beispielsweise dem in Figur 11 gezeigten Server 280, zugeordnet. Jeder der elektronischen Identitäten 113 ist jeweils ein Satz von ein oder mehreren Identitätsattributen zugeordnet. Diese Identitätsattribute sind verschlüsselt in einem Speicher des mobilen Endgeräts 100 gespeichert. Die kryptographischen Schlüssel zum Entschlüsseln der verschlüsselten Identitätsattribute sind in diesem Fall beispielswese jeweils in den entsprechenden Schlüsselbünden 294 in einem entfernten Sicherheitselement 292 gespeichert sind. Das ID-Anwendungsprogramm 108 umfasst ferner beispielsweise ein ID-Clientmodul 105, über welches das ID-Anwendungsprogramm 108 beispielsweise Anfragen nach Identitätsattributen eines der ID-Profile 113 von einem auslesenden Computersystem empfangen kann. In Antwort auf die Anfrage, beispielsweise durch einen ID-Provider-Service über ein Netzwerk, kann das ID-Anwendungsprogramm 108 nach einer erfolgreichen zentralen Authentifizierung des auslesenden Computersystems die angefragten Identitätsattribute unter der Voraussetzung einer Zustimmung des Nutzers zur Verfügung stellen. Hierfür kann eine Nutzerauthentifizierung gegenüber dem ID-Anwendungsprogramm 108 notwendig sein bzw. kann ein Nachweis einer erfolgreichen Nutzerauthentifizierung durch das ID-Anwendungsprogramm 108 mittels eines Challenge-Response-Verfahrens notwendig sein. Hierzu wird ein dem Betriebssystem 106 zugeordnetes Sicherheitselement 110 verwendet. Dieses führt beispielsweise eine Nutzerauthentifizierung mit einem Authentifizierungssensor des mobilen Endgeräts 100 aus und bestätigt dem entfernten Sicherheitselement 292 die erfolgreiche Nutzerauthentifizierung. Die Bestätigung erfolgt beispielsweise ebenfalls unter Verwendung eines Challenge-Response-Verfahrens. Eine erfolgreiche Nutzerauthentifizierung gilt beispielsweise zugleich als Zustimmung des Nutzers zu einem Auslesen der angefragten Identitätsattribute. Beispielsweise kann der Nutzer die Möglichkeit haben über eine Nutzerschnittstelle die Auswahl der zum Auslesen zur Verfügung gestellten Identitätsattribute zu beeinflussen, z.B. zu ändern.

Figur 11 zeigt einen exemplarischen Server 290, welcher ein entferntes Sicherheitselement 292 umfasst, in welchem Schlüsselbünde 294 für ein oder mehrere elektronische Identitäten, wie beispielsweise die Identitäten der Profile 113 der Figur 10, gespeichert sind. Die elektronischen Identitäten werden beispielsweise von ein oder mehreren mobilen Endgeräten, wie dem mobilen Endgerät 100 in Figur 10, bereitgestellt. Die Identitätsattribute der entsprechenden elektronischen Identitäten sind beispielsweise in verschlüsselter Form auf den mobilen Endgeräten gespeichert. Das entfernte Sicherheitselement 292 bzw. die Schlüsselbünde 294 umfassen jeweils einen kryptographischen Schlüssel zum Entschlüsseln der verschlüsselten Identitätsattribute. Ferner umfassen das entfernte Sicherheitselement 292 bzw. die Schlüsselbünde 294 jeweils einen kryptographischen Schlüssel 286 zum Verschlüsseln der entschlüsselten Identitätsattribute für ein auslesendes Computersystem, d.h. in einer Weise, dass das auslesende Computersystem die Identitätsattribute entschlüsseln kann.

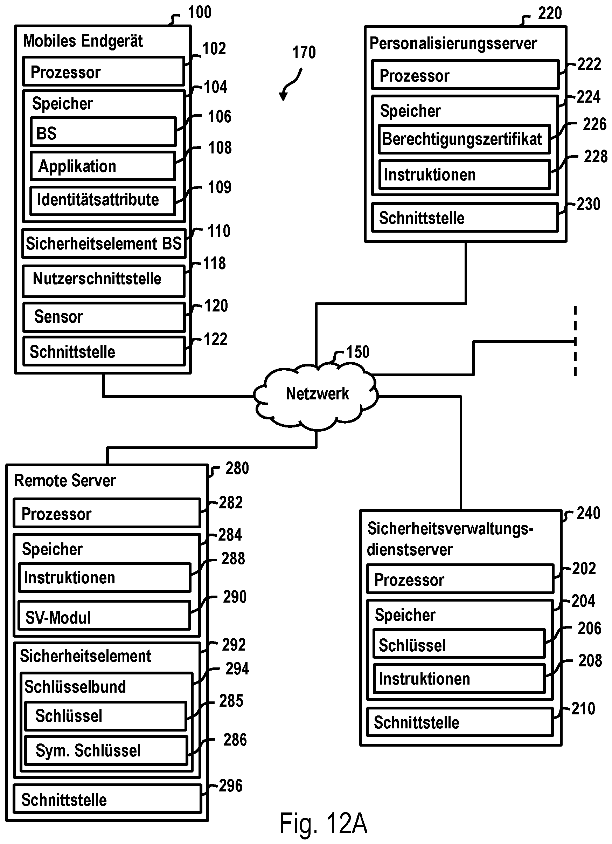

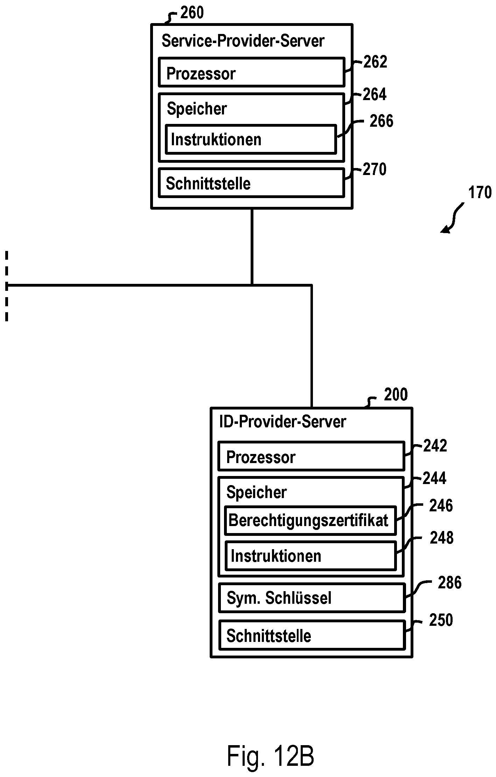

Figur 12 zeigt ein exemplarisches System 170, welches beispielsweise ein mobiles Endgerät 100 umfasst, das über ein Netzwerk 150, beispielsweise das Internet, mit einem Server 280, welcher ein entferntes Sicherheitselement 292 bereitstellt verbunden ist. Ferner sind über das Netzwerk 150 beispielsweise ein Sicherheitsverwaltungsdienstserver 240, ein Personalisierungsserver 220, einem ID-Provider-Server 200 und/oder einem Service-Provider-Server 260 verbunden.

Der Sicherheitsverwaltungsdienstserver 240 verwaltet beispielsweise das von dem Server 280 bereitgestellte Sicherheitselement 292. Alternativer Weise kann auch der Server 280 als Sicherheitsverwaltungsdienstserver 240 konfiguriert sein. Beispielsweise ist dem Sicherheitsverwaltungsdienstserver 240 ein Sicherheitsverwaltungsprogrammmodul 290 des Servers 280 zugeordnet. Soll ein Schlüsselbund für die Applikation 108 des mobilen Endgerätes 100 in dem Sicherheitselemente 292 initialisiert werden, wird dies beispielsweise über das Sicherheitsverwaltungsprogrammmodul 290 unter Verwendung des Sicherheitsverwaltungsdienstserver 240 ausgeführt. Der Sicherheitsverwaltungsdienstserver 240 umfasst beispielsweise einen Prozessor 202, einen Speicher 204 und eine Kommunikationsschnittstelle 210. In dem Speicher 204 sind Programminstruktionen 208 gespeichert, bei deren Ausführung der Prozessor 202 den Sicherheitsverwaltungsdienstserver 240 zum Initialisieren des Schlüsselbunds 294 in dem entfernten Sicherheitselement 292 des Servers 280 steuert, welches der entsprechende Sicherheitsverwaltungsdienst verwaltet. Der Schlüsselbund 294 ist beispielsweise der Applikation 108 des mobilen Endgeräts 100 bzw. einer von der entsprechenden Applikation verwaltenden elektronischen Identität zugeordnet. Zum Nachweis einer Schreibberechtigung zum Installieren des Schlüsselbunds 294 verwendet der Sicherheitsverwaltungsdienstserver 240 beispielsweise einen sicherheitsverwaltungsdienstspezifischen kryptographischen Schlüssel 206.

Der Personalisierungsserver 220 umfasst beispielsweise einen Prozessor 222, einen Speicher 224 und eine Kommunikationsschnittstelle 230. In dem Speicher 224 sind Programminstruktionen 228 gespeichert, bei deren Ausführung der Prozessor 222 den Personalisierungsserver 220 zum Bereitstellen eines symmetrischen Schlüssels für ein Challenge-Response-Verfahren zwischen den Sicherheitselementen 110, 292 des mobile Endgerät 100 und des Servers 280 steuert. Somit kann der initialisierte Schlüsselbund 294 an das eine Nutzerauthentifizierung unter Verwendung des Sensors 120 ausführende Sicherheitselement 110 und damit an den Nutzer des mobilen Endgeräts 100 gekoppelt werden. Zum Nachweis einer Schreibberechtigung zum Hinzufügen des symmetrischen Schlüssels zu dem Schlüsselbund 294 zugeordneten Speicherbereich des entfernten Sicherheitselements 292 des Servers 280 verwendet der Personalisierungsserver 220 beispielsweise das Berechtigungszertifikat 226.

Der Service-Provider-Server 260 umfasst beispielsweise einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 150 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Server 260 durch das mobile Endgerät 100 sendet dar Service-Provider-Servers 260 eine Identitätsattributsanfrage zum Auslesen von Identitätsattributen des Nutzers des mobilen Endgeräts 100 an einen ID-Provider-Server 200. Die Identitätsattributsanfrage kann von dem Service-Provider-Servers 260 beispielsweise direkt oder über das mobile Endgerät 100 an den ID-Provider-Server 200 gesendet werden. Bei den auszulesenden Identitätsattributen handelt es sich beispielsweise um Identitätsattribute verschiedener auf dem mobilen Endgerät 100 gespeicherter elektronischer Identitäten.

Der ID-Provider-Server 200 umfasst beispielsweise einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 260 zum Auslesen der in der Identitätsattributsanfrage spezifizierten Identitätsattribute aus einem Speicher des mobilen Endgeräts 100. Hierzu baut der ID-Provider-Server 200 einen kryptographisch gesicherten Kommunikationskanal über das mobile Endgerät 100 bzw. die Applikation 108 mit dem entfernten Sicherheitselement 292 des Servers 280 auf. Bei dem kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von dem ID-Provider-Server 200 als auslesendem Computersystem und der die elektronischen Identitäten verwaltenden Applikationen 108 bzw. den entsprechenden elektronischen Identitäten durch das entfernte Sicherheitselement 292 des Servers 280 voraus. Für einen Lesezugriff auf die auszulesenden Identitätsattribute verwendet der ID-Provider-Server 200 die Applikationen 108 auf dem mobilen Endgerät 100, welches die elektronischen Identitäten mit den auszulesenden Identitätsattribute verwalten. Zur sichern Übertragung werden die auszulesenden Identitätsattribute von dem entfernte Sicherheitselement 292 des Servers 280 für das auslesende Computersystem 200 unverschlüsselt. Der ID-Provider-Server 200 als auslesendes Computersystem sendet eine entsprechende Zugriffsanfrage an das mobile Endgerät 100. Eine Leseberechtigung zum Auslesen der in der Identitätsattributsanfrage spezifizierten Identitätsattribute weist der ID-Provider-Server 200 beispielsweise mit dem Berechtigungszertifikat 246 nach. Das Berechtigungszertifikat 246 sendet der ID-Provider-Server 200 beispielsweise zusammen mit der Zugriffsanfrage. Das empfangene Berechtigungszertifikat 246 wird von dem mobilen Endgerät 100 beispielsweise im Zuge einer zentralen Authentifizierung validiert. Ferner setzt ein Lesezugriff des ID-Provider-Server 200 auf die in der Identitätsattributsanfrage spezifizierten Identitätsattribute beispielsweise eine Zustimmung des Nutzers des mobilen Endgeräts 100 voraus. Hierzu muss sich der Nutzer gegenüber dem ID-Anwendungsprogramm 108 erfolgreich authentisieren. Das mobile Endgerät 100 authentifiziert den Nutzer beispielsweise unter Verwendung des Sensors 120 und des Sicherheitselements 110 des Betriebssystems 106. Das Sicherheitselements 110 bestätigt dem entfernten Sicherheitselement 292 bzw. dem von diesem umfassten Schlüsselbund 294 die erfolgreiche Authentifizierung des Nutzers. Dies kann beispielsweise unter Verwendung eines Challenge-Response-Verfahrens erfolgen. Beispielsweise wird dem Nutzer über eine Anzeigevorrichtung der Nutzerschnittstelle 118 angezeigt, welche Identitätsattribut an den ID-Provider-Server 200 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung bzw. Authentifizierung des ID-Provider-Server 200 und eine erfolgreiche Nutzerauthentifizierung werden dem ID-Provider-Server 200 die freigegebenen Identitätsattribute unter Verwendung des entfernten Sicherheitselement 292 bereitgestellt bzw. zugesendet. Der ID-Provider-Server 200 signiert beispielsweise die empfangenen Identitätsattribute und sendet diese an den Service-Provider-Server 260.

Bezugszeichenliste

| 100 | mobiles Endgerät |
|---|---|
| 102 | Prozessor |
| 103 | Spalte |
| 104 | Speicher |
| 105 | Spalte |
| 105 | ID-Client |
| 106 | Betriebssystem |
| 107 | ID-Verwaltungsmodul |
| 108 | Applikation |
| 109 | Satz Identitätsattribute |
| 110 | Sicherheitselement |
| 113 | elektronische Identität |
| 118 | Nutzerschnittstelle |
| 120 | Authentifizierungssensor |
| 122 | Kommunikationsschnittstelle |
| 150 | Netzwerk |
| 170 | System |
| 200 | ID-Provider-Server |
| 202 | Prozessor |
| 204 | Speicher |
| 206 | kryptographischer Schlüssel |
| 208 | Programminstruktionen |
| 210 | Kommunikationsschnittstelle |
| 220 | Personalisierungsserver |
| 222 | Prozessor |
| 224 | Speicher |
| 226 | Berechtigungszertifikat |
| 228 | Programminstruktionen |
| 230 | Kommunikationsschnittstelle |
| 240 | Sicherheitsverwaltungsdienstserver |
| 242 | Prozessor |
| 244 | Speicher |
| 246 | Berechtigungszertifikat |
| 248 | Programminstruktionen |
| 250 | Kommunikationsschnittstelle |
| 260 | Service-Provider-Server |
| 262 | Prozessor |

| | |
|---|---|
| 264 | Speicher |
| 266 | Programminstruktionen |
| 270 | Kommunikationsschnittstelle |
| 280 | Server |
| 282 | Prozessor |
| 284 | Speicher |
| 285 | kryptographischer Schlüssel |
| 286 | symmetrischer Schlüssel |
| 288 | Programminstruktionen |
| 290 | Sicherheitsverwaltungsprogrammmodul |
| 292 | Sicherheitselement |
| 294 | Schlüsselbund |
| 296 | Kommunikationsschnittstelle |

**Patentansprüche**

1. Verfahren zum Auslesen ein oder mehrerer Identitätsattribute einer elektronischen Identität, wobei die elektronische Identität (113) auf einem mobilen Endgerät (100) gespeichert ist und von einer auf dem mobilen Endgerät (100) installierten Applikation (108) verwaltet wird, wobei für die elektronische Identität (113) auf einem Server (280) ein entferntes Sicherheitselement (292) bereitstellt wird, wobei der Server (280) mit dem mobilen Endgerät (100) über ein Netzwerk kommuniziert,

   wobei die elektronische Identität (113) einen auf dem mobilen Endgerät (100) gespeicherten ersten Satz Identitätsattribute (109) umfasst, welcher ein oder mehrere Identitätsattribute umfasst, wobei die Identitätsattribute in dem ersten Satz Identitätsattribute (109) jeweils individuell unter Verwendung eines ersten kryptographischen Schlüssels des entfernten Sicherheitselements (292) verschlüsselt sind, wobei den Identitätsattributen in dem ersten Satz Identitätsattribute (109) jeweils ein Attributsidentifikator zugeordnet ist, wobei die unter Verwendung des ersten kryptographischen Schlüssels verschlüsselten Identitätsattribute des ersten Satzes Identitätsattribute (109) ferner unter Verwendung eines zweiten kryptographischen Schlüssels des mobilen Endgeräts (100) verschlüsselt sind,
   wobei das Verfahren durch die Applikation (108) auf dem mobilen Endgerät (100) umfasst:

   • Empfangen einer Leseanfrage eines auslesenden Computersystems (200), welche Attributsidentifikatoren ein oder mehrere auszulesende Identitätsattribute umfasst,
   • Auswählen der auszulesenden Identitätsattribute aus dem ersten Satz Identitätsattribute (109), wobei im Zuge des Auswählens die unter Verwendung des zweiten kryptographischen Schlüssels erstellte Verschlüsselung zumindest teilweise entschlüsselt wird, während die unter Verwendung des ersten kryptographischen Schlüssels erstellte Verschlüsslung aufrechterhalten wird,
   • Erstellen eines zweiten Satzes Identitätsattribute, welcher die ausgewählten auszulesenden Identitätsattribute umfasst, die unter Verwendung des ersten kryptographischen Schlüssels verschlüsselt sind,
   • Senden des zweiten Satzes Identitätsattribute an den Server (280),
   • in Antwort auf das Senden des zweiten Satzes Identitätsattribute, Empfangen des unter Verwendung eines dritten kryptographischen Schlüssels des auslesenden Computersystems (200) verschlüsselten zweiten Satzes Identitätsattribute von dem Server (280), wobei die unter Verwendung des ersten kryptographischen Schlüssels erstellte Verschlüsselung der ausgewählten auszulesenden Identitätsattribute in dem empfangenen zweiten Satz Identitätsattribute durch das entfernte Sicherheitselement (292) vor dem Verschlüsseln mit dritten kryptographischen Schlüssel entschlüsselt wurde,
   • Weiterleiten des unter Verwendung des dritten kryptographischen Schlüssels verschlüsselten zweiten Satzes Identitätsattribute an das auslesende Computersystem (200).

2. Verfahren nach Anspruch 1, wobei es sich bei dem ersten kryptographischen Schlüssel des Sicherheitselements (292) um einen der elektronischen Identität (113) zugeordneten symmetrischen kryptographischen Schlüssel handelt, welcher in dem entfernten Sicherheitselement (292) gespeichert ist, oder

   wobei es sich bei dem ersten kryptographischen Schlüssel des Sicherheitselements (292) um einen der elektronischen Identität (113) zugeordneten öffentlichen kryptographischen Schlüssel handelt, welchem ein in dem entfernten Sicherheitselement (292) gespeicherter privater kryptographischer Schlüssel der elektronischen Identität (113) zugeordnet ist.

3. Verfahren nach einem der vorangehenden Ansprüche, wobei die Verschlüsselung der unter Verwendung des ersten kryptographischen Schlüssels verschlüsselten Identitätsattribute des ersten Satzes Identitätsattribute (109), welche unter Verwendung des zweiten kryptographischen Schlüssels erstellt ist, eine individuelle Verschlüsselung jeweils der einzelnen Identitätsattribute ist und wobei das Entschlüsseln im Zuge des Auswählens ein selektives Entschlüsseln der unter Verwendung des zweiten kryptographischen Schlüssels erstellten Verschlüsselungen der ausgewählten Identitätsattribute umfasst, oder

wobei die Verschlüsselung der unter Verwendung des ersten kryptographischen Schlüssels verschlüsselten Identitätsattribute des ersten Satzes Identitätsattribute (109), welche unter Verwendung des zweiten kryptographischen Schlüssels erstellt ist, eine Verschlüsselung des ersten Satzes Identitätsattribute (109) als Ganzes ist und wobei das Entschlüsseln im Zuge des Auswählens ein Entschlüsseln der unter Verwendung des zweiten kryptographischen Schlüssels erstellten Verschlüsselung des ersten Satzes Identitätsattribute (109) als Ganzes umfasst, wobei die Auswahl der Identitätsattribute unter Verwendung des resultierenden entschlüsselten ersten Satzes Identitätsattribute (109) erfolgt.

4. Verfahren nach einem der vorangehenden Ansprüche, wobei es sich bei dem zweiten kryptographischen Schlüssel des mobilen Endgeräts (100) um einen privaten kryptographischen Schlüssel des mobilen Endgeräts (100) handelt, welchen das mobile Endgerät (100)zusammen mit einem öffentlichen kryptographischen Schlüssel des entfernten Sicherheitselements (292) oder einem öffentlichen kryptographischen Schlüssel eines Servers (220) eines Personalisierungsdienstes zum Berechnen eines symmetrischen kryptographischen Schlüssels verwendet, mit welchem das mobile Endgerät (100) die unter Verwendung des zweiten kryptographischen Schlüssels erstellte Verschlüsselung der Identitätsattribute des ersten Satzes Identitätsattribute (109) entschlüsselt, oder

wobei es sich bei dem zweiten kryptographischen Schlüssel des mobilen Endgeräts (100) um einen öffentlichen kryptographischen Schlüssel des mobilen Endgeräts (100) handelt, wobei das mobile Endgerät (100) zur Entschlüsselung der unter Verwendung des zweiten kryptographischen Schlüssels erstellten Verschlüsselung der Identitätsattribute des ersten Satzes Identitätsattribute (109) den privaten kryptographischen Schlüssel des mobilen Endgeräts (100) verwendet.

5. Verfahren nach Anspruch 4, wobei eine Verwendung des privaten kryptographischen Schlüssels des mobilen Endgeräts (100) zum Entschlüsseln der unter Verwendung des zweiten kryptographischen Schlüssels erstellten Verschlüsselung im Zuge des Auswählens eine Freigabe durch einen autorisierten Nutzer des mobilen Endgeräts (100) voraussetzt, welche eine erfolgreiche Authentifizierung des autorisierten Nutzers durch das mobile Endgerät (100) erfordert,

wobei dem Nutzer des mobilen Endgeräts (100) die von der Leseanfrage umfassten Attributsidentifikatoren der auszulesende Identitätsattribute vorzugsweise als Auswahlvorschlag auf einer Anzeigevorrichtung des mobilen Endgeräts (100) zur Bestätigung angezeigt werden und die Bestätigung ein Authentisieren des Nutzers gegenüber dem mobilen Endgerät (100) zur Freigabe der Verwendung des privaten kryptographischen Schlüssels des mobilen Endgeräts (100) umfasst.

6. Verfahren nach einem der vorangehenden Ansprüche, wobei es sich bei dem dritten kryptographischen Schlüssel des auslesenden Computersystems (200) um einen ephemeren öffentlichen kryptographischen Schlüssel des auslesenden Computersystems (200) handelt,

wobei der zweite Satz Identitätsattribute mit dem ephemeren öffentlichen kryptographischen Schlüssel des auslesenden Computersystems (200) verschlüsselt ist, welchem ein ephemerer privater kryptographischer Schlüssel des auslesenden Computersystems (200) zum Entschlüsseln zugeordnet ist, oder

wobei der zweite Satz Identitätsattribute mit einem ersten ephemeren symmetrischen kryptographischen Schlüssel verschlüsselt ist, welcher unter Verwendung des in dem entfernten Sicherheitselement (292) gespeicherten privaten kryptographischen Schlüssel des Sicherheitselements (292) in Verbindung mit dem ephemeren öffentlichen kryptographischen Schlüssel des auslesenden Computersystems (200) berechenbar ist, wobei der erste ephemere symmetrische kryptographische Schlüssel zum Entschlüsseln ferner unter Verwendung des ephemeren privaten kryptographischen Schlüssels des auslesenden Computersystems (200) in Verbindung mit dem öffentlichen kryptographischen Schlüssel des Sicherheitselements (292) berechenbar ist.

7. Verfahren nach einem der vorangehenden Ansprüche, wobei der zweite Satz Identitätsattribute von dem mobilen Endgerät (100) vor dem Senden an den Server (280) unter Verwendung eines vierten kryptographischen Schlüssels verschlüsselt wird.

8. Verfahren nach Anspruch 7, wobei es sich bei dem vierten kryptographischen Schlüssel um den der elektronischen Identität (113) zugeordneten öffentlichen kryptographischen Schlüssel des Sicherheitselements (292) handelt, welchem der in dem entfernten Sicherheitselement (292) gespeicherte private kryptographische Schlüssel des Sicherheitselements (292) zum Entschlüsseln zugeordnet ist, oder

wobei es sich bei dem vierten kryptographischen Schlüssel um einen zweiten ephemeren symmetrischen kryptographischen Schlüssel handelt, welchen das mobile Endgerät (100) unter Verwendung des privaten kryptographischen Schlüssels des mobilen Endgeräts (100) und dem der elektronischen Identität (113) zugeordneten öffentlichen kryptographischen Schlüssel des Sicherheitselements (292) berechnet, wobei der zweite ephemere symmetrische kryptographische Schlüssel zum Entschlüsseln ferner unter Verwendung des öffentlichen kryptographischen Schlüssels des mobilen Endgeräts (100) und des der elektronischen Identität (113) zugeordneten privaten kryptographischen Schlüssels des Sicherheitselements (292) berechenbar ist.

9.  Verfahren nach einem der vorangehenden Ansprüche, wobei der erste Satz Identitätsattribute (109) ferner den öffentlichen kryptographischen Schlüssel des mobilen Endgeräts (100) umfasst, welcher unter Verwendung des ersten kryptographischen Schlüssels verschlüsselt ist, wobei der unter Verwendung des ersten kryptographischen Schlüssels verschlüsselte öffentliche kryptographische Schlüssel des mobilen Endgeräts (100) zu dem zweiten Satz Identitätsattribute hinzugefügt wird zum Nachweis eines Zugriffs des mobilen Endgeräts (100) auf den ersten Satz Identitätsattribute (109), und/oder wobei das mobile Endgerät (100) den ersten Satz Identitätsattribute (109) im Zuge einer Personalisierung durch den Server (220) des Personalisierungsdienstes von dem entfernten Sicherheitselement (292) empfängt, wobei die Verschlüsselung der Identitätsattribute des ersten Satzes (109) unter Verwendung des ersten und des zweiten kryptographischen Schlüssels durch den Server (220) des Personalisierungsdienstes und/oder durch das entfernte Sicherheitselement (292) erfolgt.

10. Verfahren nach einem der vorangehenden Ansprüche, wobei das Verfahren ferner ein Authentifizieren des auslesenden Computersystems (200) durch die Applikation (108) umfasst, wobei die Applikation (108) im Zuge des Authentifizierens des auslesenden Computersystems (200) den ephemeren öffentlichen kryptographischen Schlüssel des auslesenden Computersystems (200) empfängt und an den Server (280) weiterleitet.

11. Verfahren nach Anspruch 10, wobei das Verfahren ferner ein Authentisieren der elektronischen Identität (113) gegenüber dem auslesenden Computersystem (200) umfasst, wobei das Authentisieren der elektronischen Identität (113) ein Empfangen des der elektronischen Identität (113) zugeordneten öffentlichen kryptographischen Schlüssels des entfernten Sicherheitselements (292) von dem Server (280) durch die Applikation (108) umfasst, welche den empfangenen öffentlichen kryptographischen Schlüssel des entfernten Sicherheitselements (292) an das auslesende Computersystem (200) weiterleitet,

wobei das Authentisieren der elektronischen Identität (113) vorzugsweise ferner ein Empfangen einer ersten von dem entfernten Sicherheitselement (292) erzeugten Zufallszahl zusammen mit einem von dem entfernten Sicherheitselement (292) erzeugten Authentisierungstoken von dem Server (280) durch die Applikation (108) umfasst, welche die empfangenen Zufallszahl zusammen mit dem Authentifizierungstoken an das auslesende Computersystem (200) weiterleitet, und/oder wobei die Applikation (108) auf das Weiterleiten des öffentlichen kryptographischen Schlüssels des Sicherheitselements (292) von dem auslesenden Computersystem (200) eine zweite Kopie des ephemeren öffentlichen kryptographischen Schlüssels des auslesenden Computersystems (200) empfängt, welche die Applikation (108) zum Vergleichen mit der ersten Kopie des ephemeren öffentlichen kryptographischen Schlüssels des auslesenden Computersystems (200) an den Server (280) weiterleitet, und/oder wobei das Authentisieren der elektronischen Identität (113) gegenüber dem auslesenden Computersystem (200) ferner ein erfolgreiches Authentisieren der Applikation (108) gegenüber dem Server (280) voraussetzt.

12. Mobiles Endgerät, wobei auf dem mobilen Endgerät (100) eine elektronische Identität (113) gespeichert ist, die von einer auf dem mobilen Endgerät (100) installierten Applikation (108) verwaltet wird, wobei das mobile Endgerät (100) einen Prozessor (102), einen Speicher (104) mit ausführbaren Programminstruktionen und eine Kommunikationsschnittstelle (122) zur Kommunikation mit einem Server (280) über ein Netzwerk (150) umfasst, welcher ein entferntes Sicherheitselement (292) für die elektronische Identität (113) bereitstellt,

wobei die elektronische Identität (113) einen auf dem mobilen Endgerät (100) gespeicherten ersten Satz Identitätsattribute (109) umfasst, welcher ein oder mehrere Identitätsattribute umfasst, wobei die Identitätsattribute in dem ersten Satz Identitätsattribute (109) jeweils individuell unter Verwendung eines ersten kryptographischen Schlüssels des entfernten Sicherheitselements (292) verschlüsselt sind, wobei den Identitätsattributen in dem ersten Satz Identitätsattribute (109) jeweils ein Attributsidentifikator zugeordnet ist, wobei die unter Verwendung des ersten kryptographischen Schlüssels verschlüsselten Identitätsattribute des ersten Satzes Identitätsattribute (109) ferner unter Verwendung eines zweiten kryptographischen Schlüssels des mobilen Endgeräts (100) verschlüsselt sind,

wobei der Prozessor (102) dazu konfiguriert ist, auf ein Ausführen der Programminstruktionen das mobile Endgerät (100) zum Ausführen eines Verfahrens zum Auslesen ein oder mehrerer Identitätsattribute der elektronischen Identität (113) zu steuern,

wobei das Verfahren durch die Applikation (108) auf dem mobilen Endgerät (100) umfasst:

• Empfangen einer Leseanfrage eines auslesenden Computersystems (200), welche Attributsidentifikatoren ein oder mehrere auszulesende Identitätsattribute umfasst,
• Auswählen der auszulesenden Identitätsattribute aus dem ersten Satz Identitätsattribute (109), wobei im Zuge des Auswählens die unter Verwendung des zweiten kryptographischen Schlüssels erstellte Verschlüsselung zumindest teilweise entschlüsselt wird, während die unter Verwendung des ersten kryptographischen Schlüssels erstellte Verschlüsslung aufrechterhalten wird,
• Erstellen eines zweiten Satzes Identitätsattribute, welcher die ausgewählten auszulesenden Identitätsattribute umfasst, die unter Verwendung des ersten kryptographischen Schlüssels verschlüsselt sind,
• Senden des zweiten Satzes Identitätsattribute an den Server (280),
• in Antwort auf das Senden des zweiten Satzes Identitätsattribute, Empfangen des unter Verwendung eines dritten kryptographischen Schlüssels des auslesenden Computersystems (200) verschlüsselten zweiten Satzes Identitätsattribute von dem Server (280), wobei die unter Verwendung des ersten kryptographischen Schlüssels erstellte Verschlüsselung der ausgewählten auszulesenden Identitätsattribute in dem empfangenen zweiten Satz Identitätsattribute durch das entfernte Sicherheitselement (292) vor dem Verschlüsseln mit dritten kryptographischen Schlüssel entschlüsselt wurde,
• Weiterleiten des unter Verwendung des dritten kryptographischen Schlüssels verschlüsselten zweiten Satzes Identitätsattribute an das auslesende Computersystem (200).

13. Verteiltes System (170), welches ein mobiles Endgeräts (100) nach Anspruch 12 umfasst, wobei das verteilte System (170) ferner einen Server (280) umfasst, welcher das entfernte Sicherheitselement (292) für die elektronische Identität (113) bereitstellt, welche auf einem mobilen Endgerät (100) gespeichert ist und von der auf dem mobilen Endgerät (100) installierten Applikation (108) verwaltet wird, wobei der Server (280) ferner einen Prozessor (282), einen Speicher (284) mit ausführbaren Programminstruktionen (288) und eine Kommunikationsschnittstelle (296) zur Kommunikation mit dem mobilen Endgerät (100) über ein Netzwerk umfasst,

wobei der Prozessor (282) dazu konfiguriert ist, auf ein Ausführen der Programminstruktionen (288) den Server (280) zum Ausführen eines Verfahrens zum Auslesen ein oder mehrerer Identitätsattribute der elektronischen Identität (113) zu steuern,

wobei das Verfahren umfasst:

• Empfangen des zweiten Satzes Identitätsattribute von der Applikation (108),
• Entschlüsseln der unter Verwendung des ersten kryptographischen Schlüssels erstellten Verschlüsselung der ausgewählten auszulesenden Identitätsattribute in dem empfangenen zweiten Satz Identitätsattribute durch das entfernte Sicherheitselement,
• Verschlüsseln des zweiten Satzes Identitätsattribute mit den entschlüsselten auszulesenden Identitätsattribute unter Verwendung des dritten kryptographischen Schlüssels durch das entfernte Sicherheitselement,
• Senden des unter Verwendung des dritten kryptographischen Schlüssels verschlüsselten zweiten Satzes Identitätsattribute an das mobile Endgerät (100) zum Weiterleiten an das auslesende Computersystem (200).

14. Verteiltes System (170) nach Anspruch 13, wobei das verteilte System (170) ferner einen Server (220) eines Personalisierungsdienstes umfasst, wobei der Server (220) des Personalisierungsdienstes ferner einen Prozessor (222), einen Speicher (224) mit ausführbaren Programminstruktionen (228) und eine Kommunikationsschnittstelle (230) zur Kommunikation über das Netzwerk (150) mit dem Server (280), welcher das entfernte Sicherheitselement (292) für die elektronische Identität (113) bereitstellt, umfasst,

wobei der Prozessor (222) dazu konfiguriert ist, auf ein Ausführen der Programminstruktionen (228) den Server (220) des Personalisierungsdienstes zum Einbringen des ersten Satzes Identitätsattribute (109) in das mobile Endgerät (100) zu steuern, wobei das Einbringen umfasst:

• Bereitstellen der Identitätsattribute des erste Satzes Identitätsattribute (109) mit den Attributsidentifikatoren zur Personalisierung des mobilen Endgeräts,

• Nachweisen einer Berechtigung zum Einbringen von Identitätsattributen in das mobile Endgerät,

• Senden der bereitgestellten Identitätsattribute über das mobile Endgerät (100) an den Server (280) mit dem entfernten Sicherheitselement (292) zum Weiterleiten an das mobile Endgerät (100).

15. Verteiltes System (170) nach Anspruch 14, wobei der Server (220) des Personalisierungsdienstes den ersten Satz Identitätsattribute (109) unter Verwendung der bereitgestellten Identitätsattribute mit den Attributsidentifikatoren erstellt, wobei das Erstellen des ersten Satz Identitätsattribute (109) ein Verschlüsseln der bereitgestellten Identitätsattribute unter Verwendung des ersten und/oder des zweiten kryptographischen Schlüssels umfasst, wobei die Identitätsattribute in Form des ersten Satz Identitätsattribute (109) an den Server (280) mit dem entfernten Sicherheitselement (292) gesendet werden, oder

wobei das Sicherheitselement (292) den ersten Satz Identitätsattribute (109) unter Verwendung der von dem Server (220) des Personalisierungsdienstes empfangenen Identitätsattribute mit den Attributsidentifikatoren erstellt, wobei das Erstellen des ersten Satz Identitätsattribute (109) ein Verschlüsseln der bereitgestellten Identitätsattribute unter Verwendung des ersten und/oder des zweiten kryptographischen Schlüssels umfasst, wobei die Identitätsattribute in Form des ersten Satz Identitätsattribute (109) an das mobile Endgerät (100) weitergeleitet werden.

**Claims**

1. A method for personalising a security applet (114) installed on a first security element (112) of a mobile terminal (100), using a first ID token (200) and a personalisation server (220), wherein an ID application program (108) is installed on the mobile terminal (100), to which the security applet (114) is assigned, wherein first attributes (206) of a user are stored in the first ID token (200),

   wherein the personalisation comprises:

   • establishing an encrypted communication channel (160) between the mobile terminal (100) and the personalisation server (220) via a network (150), wherein the ID application program (108) is used to establish the encrypted communication channel (160),

   • establishing a first encrypted subchannel (162) between the first ID token (200) and the personalisation server (220) within the encrypted communication channel (160) via the mobile terminal (100), wherein the ID application program (108) is used to establish the first encrypted subchannel (162),

• reading out one or more of the first attributes (206) from the first ID token (200) by the personalisation server (220) via the first encrypted subchannel (162) within the encrypted communication channel (160),

• establishing a second encrypted subchannel (164) between the security applet (114) of the first security element (112) and the personalisation server (220) within the encrypted communication channel (160), wherein the ID application program (108) is used to establish the second encrypted subchannel (164),

• receiving, by the security applet (114) of the first security element (112), the read-out first attributes (206) from the personalisation server (220) via the second encrypted subchannel (164) within the encrypted communication channel (160),

• storing the received first attributes (206) by the security applet (114), wherein the ID application program (108) is configured to use the first attributes (206) to prove an identity of the user to another computer system.

2. The method according to claim 1, wherein the encrypted communication channel (160) is encrypted with a first channel-specific ephemeral symmetric cryptographic session key, wherein the first encrypted subchannel (162) is encrypted with a second channel-specific ephemeral symmetric cryptographic session key, wherein the second encrypted subchannel (162) is encrypted with a third channel-specific ephemeral symmetric cryptographic session key.

3. The method according to any one of the preceding claims, wherein the encryption of the encrypted communication channel (160) is an end-to-end encryption between the mobile terminal (100) and the personalisation server (220), and/or

   wherein the encryption of the first encrypted subchannel (162) is an end-to-end encryption between the first ID token (200) and the personalisation server (220), and/or
   wherein the encryption of the second encrypted subchannel (164) is an end-to-end encryption between the security applet (114) and the personalisation server (220).

4. The method according to any one of the preceding claims, wherein the personalisation further comprises:

• generating an asymmetric cryptographic key pair associated with the ID application program (108) by the security applet (114) of the first security element (112) comprising a private cryptographic key and a public cryptographic key of the ID application program (108), wherein the asymmetric key pair is used to authenticate the ID application program (108) in the course of using the first attributes (206), and/or
wherein the personalisation further comprises:

• receiving one or more root signature verification keys by the security applet (114) of the first security element (112) from the personalisation server (220) via the second encrypted subchannel (164) within the encrypted communication channel (160), wherein the received root signature verification keys are for verifying certificate signatures of one or more root instances having certificates each used in the course of a readout of the first attributes (206) for authenticating a reading computer system to the ID application program (108),
• storing the received root signature verification keys by the security applet (114) in the first security element (112), and/or

wherein the personalisation further comprises:

• receiving a signature of the first attributes (206) from the personalisation server (220) by the security applet (114) of the first security element (112) via the second encrypted subchannel (164) within the encrypted communication channel (160), wherein the signature serves as proof of authenticity of the first attributes (206),
• storing the received signature of the first attributes (206) by the security applet (114) in the first security element (112).

5. The method according to any one of claims 2 to 4, wherein establishing the encrypted communication channel (160) comprises negotiating the first channel-specific ephemeral symmetric cryptographic session key.

6. The method according to claim 5, wherein negotiating the first channel-specific ephemeral symmetric cryptographic session key comprises:

• generating a first random value by the mobile terminal (100),
• generating the first channel-specific ephemeral symmetric cryptographic session key using the first random value by the mobile terminal (100),

• receiving a first certificate (226) of the personalisation server (220) with a first public cryptographic key of a first asymmetric cryptographic key pair of the personalisation server (220) by the mobile terminal (100) from the personalisation server (220),
• encrypting the first random value using the received first public cryptographic key of the personalisation server (220) by the mobile terminal (100),
• sending the encrypted first random value to the personalisation server (220) by the mobile terminal (100) to generate the first channel-specific ephemeral symmetric cryptographic session key by the personalisation server (220).

7. The method according to claim 6, wherein establishing the encrypted communication channel (160) further comprises a mutual authentication of the ID application program (108) and/or the mobile terminal (100) and the personalisation server (220).

8. The method according to claim 7, wherein the mobile terminal (100) further comprises a second security element (110), wherein the second security element (110) comprises a first initial private cryptographic key of a first initial asymmetric cryptographic key pair of the ID application program (108), wherein the mobile terminal (100) also comprises an initial certificate of the ID application program (108), which comprises the initial public cryptographic key of the initial asymmetric cryptographic key pair of the ID application program (108),
wherein, for authentication to the personalisation server (220), the mobile terminal (100) sends, for example, the initial certificate of the ID application program (108) to the personalisation server (220) as well as a message signed by the second security element (110) with the first initial private cryptographic key of the ID application program.

9. The method according to claim 8, wherein the mobile terminal (100) further comprises one or more authentication sensors (118) for detecting one or more authentication factors of the user, wherein an operating system (106) installed on the mobile terminal (100) is configured to control the authentication sensor (118), wherein the second security element (110) is assigned to the operating system (106), wherein the prerequisite for signing with the first initial private cryptographic key of the ID application program (108) is successful authentication of the user to the second security element (110), wherein the user is registered on the mobile terminal (100) and at least one reference value of the registered user is stored in the second security element (110) for verifying at least one detected authentication factor.

**10.** The method according to any one of the preceding claims, wherein establishing the first encrypted subchannel (162) comprises authenticating the user to the ID token (200) via the mobile terminal (100),

wherein authenticating the user to the ID token (200) in particular comprises:

• receiving, by the ID application program (108), a further authentication factor of the user detected by the one or more authentication sensors (118),
• generating a symmetric cryptographic key by the second security element (110) using the received further authentication factor,
• receiving an encrypted second random value by the ID application program (108) from the ID token (200), wherein the encrypted second random value is encrypted using the symmetric cryptographic key generated by the ID token (200) using a further reference value of the registered user stored in the ID token (200) for verifying the further authentication factor,
• decrypting the received encrypted second random value by the second security element (110) using the generated symmetric cryptographic key,
• generating a first ephemeral asymmetric cryptographic key pair of the ID application program (108) by the second security element (110), which comprises a first ephemeral private cryptographic key and a first ephemeral public cryptographic key of the ID application program (108),
• sending the first ephemeral public cryptographic key of the ID application program (108) to the ID token (200),
• receiving an ephemeral public cryptographic key of the ID token (200),
• generating a first secret shared with the ID token (200) using the decrypted second random value, the first ephemeral private cryptographic key of the ID application program (108) and the ephemeral public cryptographic key of the ID token (200),
• generating a first shared authentication key for mutual authentication of the ID application program (108) and ID token (200) by the second security element (110) using the shared first secret,
• generating a first authentication token using the first authentication key and the ephemeral public cryptographic key of the ID token (200) by the second security element (110),
• sending the first authentication token to the ID token (200) by the second security element (110),

• receiving a second authentication token from the ID token (200) by the second security element (110),
• verifying the received second authentication token using the first authentication key and the first ephemeral public cryptographic key of the ID application program (108), and/or

wherein establishing the first encrypted subchannel (162) comprises authenticating the personalisation server (220) by the ID token (200) via the mobile terminal (100),
wherein authenticating the personalisation server (220) by the ID token (200) in particular comprises:

• receiving a second certificate (226) of the personalisation server (220), which comprises a second public cryptographic key of a second asymmetric cryptographic key pair of the personalisation server (220), via the encrypted communication channel (160),
• verifying a signature of the received second certificate (226) of the personalisation server (220),
• generating a third random value by the ID token (200),
• sending the third random value as a challenge to the personalisation server (220) via the encrypted communication channel (160),
• receiving a first signature of the challenge as a response from the personalisation server (220) via the encrypted communication channel (160), wherein the challenge is signed using a second private cryptographic key of the personalisation server (220),
• verifying the received first signature using the second public cryptographic key of the personalisation server (220) and the sent third random value, and/or

wherein establishing the first encrypted subchannel (162) comprises authenticating the ID token (200) to the personalisation server (220) via the mobile terminal (100),
wherein authenticating the ID token (200) to the personalisation server (220) in particular comprises:

• sending the public cryptographic key of the ID token (200) from the ID token (200) to the personalisation server (220) via the encrypted communication channel (160),

• receiving the second ephemeral public cryptographic key of the personalisation server (220) by the ID token (200) from the personalisation server (220) via the encrypted communication channel (160),

• generating a second secret shared with the personalisation server (220) by the ID token (200) using the private cryptographic key of the ID token (200) and the second ephemeral public cryptographic key of the personalisation server (220),

• generating a fourth random value by the ID token (200),

• generating a second common authentication key for authenticating data sent over the first encrypted subchannel (162) by the ID token (200), wherein the second common authentication key is generated using the shared second secret and the fourth random value,

• generating a third authentication token by the ID token (200) using the second authentication key and the second ephemeral public cryptographic key of the personalisation server (220) to authenticate the ID token (200) to the personalisation server (220),

• sending the fourth random value together with the third authentication token to authenticate the ID token (200) by the ID token (200) via the encrypted communication channel (160) to the personalisation server (220), and/or

wherein establishing the second encrypted subchannel (164) comprises authenticating the user by the second security element (110), wherein establishing the second encrypted subchannel (164) further comprises executing a challenge-response procedure between the second security element (110) and the first security element (112), wherein a successful execution of the challenge-response procedure confirms a successful authentication of the user by the second security element (110), and/or wherein establishing the second encrypted subchannel (164) further comprises authenticating the personalisation server (220) by the security applet (114) of the first security element (112), wherein authenticating the personalisation server (220) by the security applet (114) of the first security element (112) in particular comprises:

• receiving a third certificate (226) of the personalisation server (220), which comprises a third public cryptographic key of the personalisation server (220), by the security applet (114) of the first security element (112) via the encrypted communication channel (160),

• verifying a signature of the received third certificate (226) of the personalisation server (220) by the security applet (114) of the first security element (112),

• receiving a third ephemeral public cryptographic key of the personalisation server (220) by the security applet (114) of the first security element (112),

• generating a fifth random value as a challenge by the security applet (114) of the first security element (112),

• sending the fifth random value by the security applet (114) of the first security element (112) to the personalisation server (220) via the encrypted communication channel (160),

• receiving a second signature of the challenge as a response from the personalisation server (220), wherein the challenge is signed using a third ephemeral private cryptographic key of the personalisation server (220),

• verifying the received second signature using the third public cryptographic key of the personalisation server (220) and the sent fifth random value.

**11.** The method according to any one of the preceding claims, wherein establishing the second encrypted subchannel (164) further comprises authenticating the security applet (114) of the first security element (112) to the personalisation server (220),

wherein authenticating the security applet (114) of the first security element (112) to the personalisation server (220) in particular comprises:

• receiving the third ephemeral public cryptographic key of the personalisation server (220) by the security applet (114) of the first security element (112) from the personalisation server (220) via the encrypted communication channel (160),

• generating a third secret shared with the personalisation server (220) by the security applet (114) of the first security element (112) using the private cryptographic key of the security applet (114) of the first security element (112) and the ephemeral public cryptographic key of the personalisation server (220),

• generating a sixth random value by the security applet (114) of the first security element (112),

• generating a third common authentication key for authenticating data sent over the second encrypted subchannel (164), wherein the third common authentication key is generated using the shared third secret and the sixth random value,

• generating a fourth authentication token by the security applet (114) of the first security element (112) using the third authentication key and the third ephemeral public cryptographic key of the personalisation server (220) to authenticate the security applet (114) of the first security element (112) to the personalisation server (220),

• sending the sixth random value together with the fourth authentication token to authenticate the security applet (114) of the first security element (112) by the security applet (114) of the first security element (112) via the encrypted communication channel (160) to the personalisation server (220), or

wherein the third channel-specific ephemeral symmetric cryptographic session key for encrypting the second encrypted subchannel (164) between the security applet (114) of the first security element (112) and the personalisation server (220) is stored in the first security element (112) and in the personalisation server (220) as an initial key for use by the security applet (114),

wherein furthermore in particular a channel-specific ephemeral symmetric cryptographic authentication key for authenticating data transmitted via the corresponding second encrypted subchannel (164) is stored in the first security element (112) for use by the security applet (114) and in the personalisation server (220).

12. The method according to any one of the preceding claims, wherein a second ID token is further used for the personalisation, wherein the personalisation further comprises:

• establishing a third encrypted subchannel between the second ID token and the personalisation server (220) within the encrypted communication channel (160) via the mobile terminal (100), wherein the ID application program (108) is used to establish the third encrypted subchannel,

• reading out one or more of the second attributes from the second ID token by the personalisation server (220) via the third encrypted subchannel within the encrypted communication channel (160),

• establishing a fourth encrypted subchannel between the security applet (114) of the first security element (112) and the personalisation server (220) within the encrypted communication channel (160), wherein the ID application program (108) is used to establish the fourth encrypted subchannel,

• receiving the read-out second attributes by the security applet (114) of the first security element (112) from the personalisation server (220) via the fourth encrypted subchannel within the encrypted communication channel (160),

• storing the received second attributes by the security applet (114), wherein the ID application program (108) is configured to use the second attributes to prove an identity of the user to another computer system.

13. A mobile terminal (100), wherein the mobile terminal (100) comprises a processor (102) and a memory (104), wherein the memory (104) stores an ID application program (108), wherein the mobile terminal (100) further comprises a security element (112) having a security applet (114) associated with the ID application program (108), wherein the processor (102) is configured to carry out a method for personalising the security applet (114) using an ID token (200) and a personalisation server (220), wherein the mobile terminal (100) further comprises a communication interface (120) for contactless communication with the ID token (200) and for communication via a network (150) with the personalisation server (220),

wherein the personalisation comprises:

• establishing an encrypted communication channel (160) between the mobile terminal (100) and the personalisation server (220) via a network (150), wherein the ID application program (108) is used to establish the encrypted communication channel (160),

• establishing a first encrypted subchannel (162) between the first ID token (200) and the personalisation server (220) within the encrypted communication channel (160) via the mobile terminal (100), wherein the ID application program (108) is used to establish the first encrypted subchannel (162),

• reading out one or more of the first attributes (206) from the ID token (200) by the personalisation server (220) via the first encrypted subchannel (162) within the encrypted communication channel (160),

• establishing a second encrypted subchannel (164) between the security applet (114) of the security element (112) and the personalisation server (220) within the encrypted communication channel (160), wherein the ID application program (108) is used to establish the second encrypted subchannel (164),

• receiving the read-out attributes (206) by the security applet (114) of the security element (112) from the personalisation server (220) via the second encrypted subchannel (164) within the encrypted communication channel (160),
• storing the received attributes (206) by the security applet (114), wherein the ID application program (108) is configured to use the attributes (206) to prove an identity of the user to another computer system.

14. A system (170), wherein the system (170) comprises a mobile terminal (100) according to claim 13 and a personalisation server (220), wherein the personalisation server (220) is configured to read out attributes (206) from an ID token (200) via the mobile terminal (100) and to personalise the security applet (114) of the mobile terminal (100).

15. The system (170) according to claim 14, wherein the system (170) further comprises the ID token (200) in which the attributes (206) to be read out are stored.


**Revendications**

1. Procédé de personnalisation d'une applet de sécurité (114) installée sur un premier élément de sécurité (112) d'un terminal mobile (100), en utilisant un premier jeton d'ID (200) et un serveur de personnalisation (220), dans lequel un programme d'application d'ID (108) est installé sur le terminal mobile (100), auquel l'applet de sécurité (114) est attribuée, dans lequel des premiers attributs (206) d'un utilisateur sont stockés dans le premier jeton d'ID (200), dans lequel la personnalisation comprend les étapes consistant à :

   • établir un canal de communication chiffré (160) entre le terminal mobile (100) et le serveur de personnalisation (220) par l'intermédiaire d'un réseau (150), dans lequel le programme d'application d'ID (108) est utilisé pour établir le canal de communication chiffré (160),
   • établir un premier sous-canal chiffré (162) entre le premier jeton d'ID (200) et le serveur de personnalisation (220) au sein du canal de communication chiffré (160) par l'intermédiaire du terminal mobile (100), dans lequel le programme d'application d'ID (108) est utilisé pour établir le premier sous-canal chiffré (162),
   • faire lire un ou plusieurs des premiers attributs (206) depuis le premier jeton d'ID (200) par le serveur de personnalisation (220) par l'intermédiaire du premier sous-canal chiffré (162) au sein du canal de communication chiffré (160),
   • établir un deuxième sous-canal chiffré (164) entre l'applet de sécurité (114) du premier élément de sécurité (112) et le serveur de personnalisation (220) au sein du canal de communication chiffré (160), dans lequel le programme d'application d'ID (108) est utilisé pour établir le deuxième sous-canal chiffré (164),
   • faire recevoir, par l'applet de sécurité (114) du premier élément de sécurité (112), les premiers attributs (206) lus depuis le serveur de personnalisation (220) par l'intermédiaire du deuxième sous-canal chiffré (164) au sein du canal de communication chiffré (160),
   • faire stocker les premiers attributs (206) reçus par l'applet de sécurité (114), dans lequel le programme d'application d'ID (108) est configuré pour utiliser les premiers attributs (206) afin de prouver une identité de l'utilisateur à un autre système informatique.

2. Procédé selon la revendication 1, dans lequel le canal de communication chiffré (160) est chiffré avec une première clé de session cryptographique symétrique éphémère spécifique d'un canal, dans lequel le premier sous-canal chiffré (162) est chiffré avec une deuxième clé de session cryptographique symétrique éphémère spécifique d'un canal, dans lequel le deuxième sous-canal chiffré (162) est chiffré avec une troisième clé de session cryptographique symétrique éphémère spécifique d'un canal.

3. Procédé selon l'une quelconque des revendications précédentes, dans lequel le chiffrage du canal de communication chiffré (160) est un chiffrage de bout en bout entre le terminal mobile (100) et le serveur de personnalisation (220), et/ou

   dans lequel le chiffrage du premier sous-canal chiffré (162) est un chiffrage de bout en bout entre le premier jeton d'ID (200) et le serveur de personnalisation (220), et/ou
   dans lequel le chiffrage du deuxième sous-canal chiffré (164) est un chiffrage de bout en bout entre l'applet de sécurité (114) et le serveur de personnalisation (220).

4. Procédé selon l'une quelconque des revendications précédentes, dans lequel la personnalisation comprend en outre les étapes consistant à :

   • faire générer une paire de clés cryptographiques asymétriques associée au programme d'application d'ID (108) par l'applet de sécurité (114) du premier élément de sécurité (112) comprenant une clé cryptographique privée et une clé cryptographique publique du programme d'application d'ID (108), dans lequel la paire de clés asymétriques est utilisée pour authentifier le programme d'application d'ID (108) en cours d'utilisation des premiers attributs (206), et/ou
   dans lequel la personnalisation comprend en outre les étapes consistant à :

> • recevoir une ou plusieurs clés de vérification de signature racine par l'applet de sécurité (114) du premier élément de sécurité (112) depuis le serveur de personnalisation (220) par l'intermédiaire du deuxième sous-canal chiffré (164) au sein du canal de communication chiffré (160), dans lequel les clés de vérification de signature racine reçues sont destinées à vérifier les signatures de certificat d'une ou plusieurs instances racines ayant des certificats utilisés chacun au cours d'une lecture des premiers attributs (206) pour authentifier un système informatique de lecture vis-à-vis du programme d'application d'ID (108),
> • faire stocker les clés de vérification de signature racine reçues par l'applet de sécurité (114) dans le premier élément de sécurité (112), et/ou

dans lequel la personnalisation comprend en outre les étapes consistant à :

> • faire recevoir une signature des premiers attributs (206) depuis le serveur de personnalisation (220) par l'applet de sécurité (114) du premier élément de sécurité (112) par l'intermédiaire du deuxième sous-canal chiffré (164) au sein du canal de communication chiffré (160), dans lequel la signature sert de preuve d'authenticité des premiers attributs (206),
> • faire stocker la signature reçue des premiers attributs (206) par l'applet de sécurité (114) dans le premier élément de sécurité (112).

5. Procédé selon l'une quelconque des revendications 2 à 4, dans lequel l'étape consistant à établir le canal de communication chiffré (160) comprend une étape consistant à négocier la première clé de session cryptographique symétrique éphémère spécifique d'un canal.

6. Procédé selon la revendication 5, dans lequel l'étape consistant à négocier la première clé de session cryptographique symétrique éphémère spécifique d'un canal comprend les étapes consistant à :

> • faire générer une première valeur aléatoire par le terminal mobile (100),
> • faire générer la première clé de session cryptographique symétrique éphémère spécifique d'un canal en utilisant la première valeur aléatoire par le terminal mobile (100),
> • faire recevoir un premier certificat (226) du serveur de personnalisation (220) avec une première clé cryptographique publique d'une première paire de clés cryptographiques asymétriques du serveur de personnalisation (220) par le terminal mobile (100) depuis le serveur de personnalisation (220),
> • faire chiffrer la première valeur aléatoire en utilisant la première clé cryptographique publique reçue du serveur de personnalisation (220) par le terminal mobile (100),
> • faire envoyer la première valeur aléatoire chiffrée au serveur de personnalisation (220) par le terminal mobile (100) pour faire générer la première clé de session cryptographique symétrique éphémère spécifique d'un canal par le serveur de personnalisation (220).

7. Procédé selon la revendication 6, dans lequel l'étape consistant à établir le canal de communication chiffré (160) comprend en outre une authentification mutuelle du programme d'application d'ID (108) et/ou du terminal mobile (100) et du serveur de personnalisation (220).

8. Procédé selon la revendication 7, dans lequel le terminal mobile (100) comprend en outre un second élément de sécurité (110), dans lequel le second élément de sécurité (110) comprend une première clé cryptographique privée initiale d'une première paire de clés cryptographiques asymétriques initiales du programme d'application d'ID (108), dans lequel le terminal mobile (100) comprend également un certificat initial du programme d'application d'ID (108), qui comprend la clé cryptographique publique initiale de la paire de clés cryptographiques asymétriques initiales du programme d'application d'ID (108),
dans lequel, pour l'authentification vis-à-vis du serveur de personnalisation (220), le terminal mobile (100) envoie, par exemple, le certificat initial du programme d'application d'ID (108) au serveur de personnalisation (220) ainsi qu'un message signé par le second élément de sécurité (110) avec la première clé cryptographique privée initiale du programme d'application d'ID.

9. Procédé selon la revendication 8, dans lequel le terminal mobile (100) comprend en outre un ou plusieurs capteurs d'authentification (118) destinés à détecter un ou plusieurs facteurs d'authentification de l'utilisateur, dans lequel un système d'exploitation (106) installé sur le terminal mobile (100) est configuré pour commander le capteur d'authentification (118), dans lequel le second élément de sécurité (110) est attribué au système d'exploitation (106), dans lequel le prérequis pour signer avec la première clé cryptographique privée initiale du programme d'application d'ID (108) est l'authentification réussie de l'utilisateur vis-à-vis du second élément de sécurité (110), dans lequel l'utilisateur est enregistré sur le terminal mobile (100) et au moins une valeur de référence de l'utilisateur enregistré est stockée dans le second élément de sécurité (110) pour vérifier au moins un facteur d'authentification détecté.

10. Procédé selon l'une quelconque des revendications précédentes, dans lequel l'étape consistant à établir le premier sous-canal chiffré (162) comprend une étape consistant à authentifier l'utilisateur vis-à-vis du jeton d'ID (200) par l'intermédiaire du terminal mobile (100),

dans lequel l'étape consistant à authentifier l'utilisateur vis-à-vis du jeton d'ID (200) comprend en particulier les étapes consistant à :

• faire recevoir, par le programme d'application d'ID (108), un facteur d'authentification supplémentaire de l'utilisateur détecté par le ou les capteurs d'authentification (118),
• faire générer une clé cryptographique symétrique par le second élément de sécurité (110) en utilisant le facteur d'authentification supplémentaire reçu,
• faire recevoir une deuxième valeur aléatoire chiffrée par le programme d'application d'ID (108) depuis le jeton d'ID (200), dans lequel la deuxième valeur aléatoire chiffrée est chiffrée en utilisant la clé cryptographique symétrique générée par le jeton d'ID (200) en utilisant une valeur de référence supplémentaire de l'utilisateur enregistré stockée dans le jeton d'ID (200) pour vérifier le facteur d'authentification supplémentaire,
• faire déchiffrer la deuxième valeur aléatoire chiffrée reçue par le second élément de sécurité (110) en utilisant la clé cryptographique symétrique générée,
• faire générer une première paire de clés cryptographiques asymétriques éphémères du programme d'application d'ID (108) par le second élément de sécurité (110), qui comprend une première clé cryptographique privée éphémère et une première clé cryptographique publique éphémère du programme d'application d'ID (108),
• envoyer la première clé cryptographique publique éphémère du programme d'application d'ID (108) au jeton d'ID (200),
• recevoir une clé cryptographique publique éphémère du jeton d'ID (200),
• générer un premier secret partagé avec le jeton d'ID (200) en utilisant la deuxième valeur aléatoire déchiffrée, la première clé cryptographique privée éphémère du programme d'application d'ID (108) et la clé cryptographique publique éphémère du jeton d'ID (200),
• faire générer une première clé d'authentification partagée pour authentification mutuelle du programme d'application d'ID (108) et du jeton d'ID (200) par le second élément de sécurité (110) en utilisant le premier secret partagé,
• faire générer un premier jeton d'authentification en utilisant la première clé d'authentification et la clé cryptographique publique éphémère du jeton d'ID (200) par le second élément de sécurité (110),
• faire envoyer le premier jeton d'authentification au jeton d'ID (200) par le second élément de sécurité (110),
• faire recevoir un deuxième jeton d'authentification depuis le jeton d'ID (200) par le second élément de sécurité (110),
• vérifier le deuxième jeton d'authentification reçu en utilisant la première clé d'authentification et la première clé cryptographique publique éphémère du programme d'application d'ID (108), et/ou

dans lequel l'étape consistant à établir le premier sous-canal chiffré (162) comprend une étape consistant à faire authentifier le serveur de personnalisation (220) par le jeton d'ID (200) par l'intermédiaire du terminal mobile (100), dans lequel l'étape consistant à faire authentifier le serveur de personnalisation (220) par le jeton d'ID (200) comprend en particulier les étapes consistant à :

• faire recevoir un deuxième certificat (226) du serveur de personnalisation (220), qui comprend une seconde clé cryptographique publique d'une seconde paire de clés cryptographiques asymétriques du serveur de personnalisation (220), par l'intermédiaire du canal de communication chiffré (160),
• vérifier une signature du deuxième certificat (226) reçu du serveur de personnalisation (220),
• faire générer une troisième valeur aléatoire par le jeton d'ID (200),
• envoyer la troisième valeur aléatoire en tant que question au serveur de personnalisation (220) par l'intermédiaire du canal de communication chiffré (160),
• recevoir une première signature de la question en tant que réponse depuis le serveur de personnalisation (220) par l'intermédiaire du canal de communication chiffré (160), dans lequel la question est signée en utilisant une deuxième clé cryptographique privée du serveur de personnalisation (220),
• vérifier la première signature reçue en utilisant la deuxième clé cryptographique publique du serveur de personnalisation (220) et la troisième valeur aléatoire envoyée, et/ou

dans lequel l'étape consistant à établir le premier sous-canal chiffré (162) comprend une étape consistant à authentifier le jeton d'ID (200) vis-à-vis du serveur de personnalisation (220) par l'intermédiaire du terminal mobile (100),
dans lequel l'étape consistant à authentifier le jeton d'ID (200) vis-à-vis du serveur de personnalisation (220) comprend en particulier les étapes consistant à :

• envoyer la clé cryptographique publique du jeton d'ID (200) depuis le jeton d'ID (200) au serveur de personnalisation (220) par l'intermédiaire du canal de communication chiffré (160),
• faire recevoir la deuxième clé cryptographique publique éphémère du serveur de personnalisation (220) par le jeton d'ID (200) depuis le serveur de personnalisation (220) par l'intermédiaire du canal de communication chiffré (160),
• faire générer un deuxième secret partagé avec le serveur de personnalisation (220) par le jeton d'ID (200) en utilisant la clé cryptographique privée du jeton d'ID (200) et la deuxième clé cryptographique publique éphémère du serveur de personnalisation (220),
• faire générer une quatrième valeur aléatoire par le jeton d'ID (200),
• faire générer une deuxième clé d'authentification commune pour authentifier les données envoyées sur le premier sous-canal chiffré (162) par le jeton d'ID (200), dans lequel la deuxième clé d'authentification commune est générée en utilisant le deuxième secret partagé et la quatrième valeur aléatoire,
• faire générer un troisième jeton d'authentification par le jeton d'ID (200) en utilisant la deuxième clé d'authentification et la deuxième clé cryptographique publique éphémère du serveur de personnalisation (220) pour authentifier le jeton d'ID (200) vis-à-vis du serveur de personnalisation (220),
• faire envoyer la quatrième valeur aléatoire conjointement au troisième jeton d'authentification pour authentifier le jeton d'ID (200) par le jeton d'ID (200) par l'intermédiaire du canal de communication chiffré (160) au serveur de personnalisation (220), et/ou

dans lequel l'étape consistant à établir le deuxième sous-canal chiffré (164) comprend une étape consistant à faire authentifier l'utilisateur par le second élément de sécurité (110), dans lequel l'étape consistant à établir le deuxième sous-canal chiffré (164) comprend en outre une étape consistant à exécuter une procédure de question-réponse entre le second élément de sécurité (110) et le premier élément de sécurité (112), dans lequel une exécution réussie de la procédure de question-réponse confirme une authentification réussie de l'utilisateur par le second élément de sécurité (110), et/ou
dans lequel l'étape consistant à établir le deuxième sous-canal chiffré (164) comprend en outre une étape consistant à faire authentifier le serveur de personnalisation (220) par l'applet de sécurité (114) du premier élément de sécurité (112),
dans lequel l'étape consistant à authentifier le serveur de personnalisation (220) par l'applet de sécurité (114) du premier élément de sécurité (112) comprend en particulier les étapes consistant à :

• faire recevoir un troisième certificat (226) du serveur de personnalisation (220), qui comprend une troisième clé cryptographique publique du serveur de personnalisation (220), par l'applet de sécurité (114) du premier élément de sécurité (112) par l'intermédiaire du canal de communication chiffré (160),
• faire vérifier une signature du troisième certificat (226) reçu du serveur de personnalisation (220) par l'applet de sécurité (114) du premier élément de sécurité (112),
• faire recevoir une troisième clé cryptographique publique éphémère du serveur de personnalisation (220) par l'applet de sécurité (114) du premier élément de sécurité (112),
• faire générer une cinquième valeur aléatoire en tant que question par l'applet de sécurité (114) du premier élément de sécurité (112),
• faire envoyer la cinquième valeur aléatoire par l'applet de sécurité (114) du premier élément de sécurité (112) au serveur de personnalisation (220) par l'intermédiaire du canal de communication chiffré (160),
• recevoir une seconde signature de la question en tant que réponse depuis le serveur de personnalisation (220), dans lequel la question est signée en utilisant une troisième clé cryptographique privée éphémère du serveur de personnalisation (220),
• vérifier la seconde signature reçue en utilisant la troisième clé cryptographique publique du serveur de personnalisation (220) et la cinquième valeur aléatoire envoyée.

11. Procédé selon l'une quelconque des revendications précédentes, dans lequel l'étape consistant à établir le deuxième sous-canal chiffré (164) comprend en outre une étape consistant à authentifier l'applet de sécurité (114) du premier élément de sécurité (112) vis-à-vis du serveur de personnalisation (220),

dans lequel l'étape consistant à authentifier l'applet de sécurité (114) du premier élément de sécurité (112) vis-à-vis du serveur de personnalisation (220), comprend en particulier les étapes consistant à :

• faire recevoir la troisième clé cryptographique publique éphémère du serveur de personnalisation (220) par l'applet de sécurité (114) du premier élément de sécurité (112) depuis le serveur de personnalisation (220) par l'intermédiaire du canal de communication chiffré (160),
• faire générer un troisième secret partagé avec le serveur de personnalisation (220) par l'applet de sécurité (114) du premier élément de sécurité (112) en utilisant la clé cryptographique privée de l'applet de sécurité (114) du premier élément de sécurité (112) et la clé cryptographique publique éphémère du serveur de personnalisation (220),
• faire générer une sixième valeur aléatoire par l'applet de sécurité (114) du premier élément de sécurité (112),
• générer une troisième clé d'authentification commune pour authentifier les données envoyées sur le deuxième sous-canal chiffré (164), dans lequel la troisième clé d'authentification commune est générée en utilisant le troisième secret partagé et la sixième valeur aléatoire,
• faire générer un quatrième jeton d'authentification par l'applet de sécurité (114) du premier élément de sécurité (112) en utilisant la troisième clé d'authentification et la troisième clé cryptographique publique éphémère du serveur de personnalisation (220) afin d'authentifier l'applet de sécurité (114) du premier élément de sécurité (112) vis-à-vis du serveur de personnalisation (220),

• faire envoyer la sixième valeur aléatoire conjointement au quatrième jeton d'authentification pour authentifier l'applet de sécurité (114) du premier élément de sécurité (112) par l'applet de sécurité (114) du premier élément de sécurité (112) par l'intermédiaire du canal de communication chiffré (160) vis-à-vis du serveur de personnalisation (220), ou

dans lequel la troisième clé de session cryptographique symétrique éphémère spécifique d'un canal destinée à chiffrer le deuxième sous-canal chiffré (164) entre l'applet de sécurité (114) du premier élément de sécurité (112) et le serveur de personnalisation (220) est stockée dans le premier élément de sécurité (112) et dans le serveur de personnalisation (220) en tant que clé initiale pour utilisation par l'applet de sécurité (114),
dans lequel en outre en particulier une clé d'authentification cryptographique symétrique éphémère spécifique d'un canal destinée à authentifier des données transmises par l'intermédiaire du second sous-canal chiffré (164) correspondant est stockée dans le premier élément de sécurité (112) pour utilisation par l'applet de sécurité (114) et dans le serveur de personnalisation (220).

12. Procédé selon l'une quelconque des revendications précédentes, dans lequel un second jeton d'ID est en outre utilisé pour la personnalisation, dans lequel la personnalisation comprend en outre les étapes consistant à :

• établir un troisième sous-canal chiffré entre le second jeton d'ID et le serveur de personnalisation (220) au sein du canal de communication chiffré (160) par l'intermédiaire du terminal mobile (100), dans lequel le programme d'application d'ID (108) est utilisé pour établir le troisième sous-canal chiffré,
• faire lire un ou plusieurs des seconds attributs depuis le second jeton d'ID par le serveur de personnalisation (220) par l'intermédiaire du troisième sous-canal chiffré au sein du canal de communication chiffré (160),
• établir un quatrième sous-canal chiffré entre l'applet de sécurité (114) du premier élément de sécurité (112) et le serveur de personnalisation (220) au sein du canal de communication chiffré (160), dans lequel le programme d'application d'ID (108) est utilisé pour établir le quatrième sous-canal chiffré,
• faire recevoir les seconds attributs lus par l'applet de sécurité (114) du premier élément de sécurité (112) depuis le serveur de personnalisation (220) par l'intermédiaire du quatrième sous-canal chiffré au sein du canal de communication chiffré (160),

• faire stocker les seconds attributs reçus par l'applet de sécurité (114), dans lequel le programme d'application d'ID (108) est configuré pour utiliser les seconds attributs afin de prouver une identité de l'utilisateur à un autre système informatique.

13. Terminal mobile (100), dans lequel le terminal mobile (100) comprend un processeur (102) et une mémoire (104), dans lequel la mémoire (104) stocke un programme d'application d'ID (108), dans lequel le terminal mobile (100) comprend en outre un élément de sécurité (112) ayant une applet de sécurité (114) associée au programme d'application d'ID (108), dans lequel le processeur (102) est configuré pour mettre en œuvre un procédé de personnalisation de l'applet de sécurité (114) en utilisant un jeton d'ID (200) et un serveur de personnalisation (220), dans lequel le terminal mobile (100) comprend en outre une interface de communication (120) pour la communication sans contact avec le jeton d'ID (200) et pour la communication par l'intermédiaire d'un réseau (150) avec le serveur de personnalisation (220),

dans lequel la personnalisation comprend les étapes consistant à :

• établir un canal de communication chiffré (160) entre le terminal mobile (100) et le serveur de personnalisation (220) par l'intermédiaire d'un réseau (150), dans lequel le programme d'application d'ID (108) est utilisé pour établir le canal de communication chiffré (160),
• établir un premier sous-canal chiffré (162) entre le premier jeton d'ID (200) et le serveur de personnalisation (220) au sein du canal de communication chiffré (160) par l'intermédiaire du terminal mobile (100), dans lequel le programme d'application d'ID (108) est utilisé pour établir le premier sous-canal chiffré (162),
• faire lire un ou plusieurs des premiers attributs (206) depuis le jeton d'ID (200) par le serveur de personnalisation (220) par l'intermédiaire du premier sous-canal chiffré (162) au sein du canal de communication chiffré (160),
• établir un second sous-canal chiffré (164) entre l'applet de sécurité (114) de l'élément de sécurité (112) et le serveur de personnalisation (220) au sein du canal de communication chiffré (160), dans lequel le programme d'application d'ID (108) est utilisé pour établir le deuxième sous-canal chiffré (164),
• faire recevoir les attributs (206) lus par l'applet de sécurité (114) de l'élément de sécurité (112) depuis le serveur de personnalisation (220) par l'intermédiaire du deuxième sous-canal chiffré (164) au sein du canal de communication chiffré (160),

• faire stocker les attributs (206) reçus par l'applet de sécurité (114), dans lequel le programme d'application d'ID (108) est configuré pour utiliser les attributs (206) afin de prouver une identité de l'utilisateur à un autre système informatique.

14. Système (170), dans lequel le système (170) comprend un terminal mobile (100) selon la revendication 13 et un serveur de personnalisation (220), dans lequel le serveur de personnalisation (220) est configuré pour lire les attributs (206) depuis un jeton d'ID (200) par l'intermédiaire du terminal mobile (100) et pour personnaliser l'applet de sécurité (114) du terminal mobile (100).

15. Système (170) selon la revendication 14, dans lequel le système (170) comprend en outre le jeton d'ID (200) dans lequel les attributs (206) à lire sont stockés.

Fig. 1

Fig. 2

280

| Remote Server |
|---|
| Prozessor |
| Speicher |
| Instruktionen |
| Sicherheitsverwaltungsmodul |
| Sicherheitselement |
| Schlüsselbund |
| Schlüssel |
| Sym. Schlüssel |
| Schnittstelle |

282
284
288
290
292
294
285
286
296

Fig. 3

| Bereitstellen 1. Satz Identitätsattribute | 300 |
|---|---|

| Empfangen Leseanfrage | 302 |
|---|---|

| Auswählen Identitätsattribute | 304 |
|---|---|

| Erstellen 2. Satz Identitätsattribute | 306 |
|---|---|

| Senden 2. Satz Identitätsattribute | 308 |
|---|---|

| Empfangen 2. Satz Identitätsattribute | 310 |
|---|---|

| Weiterleiten 2. Satz Identitätsattribute | 312 |
|---|---|

Fig. 4

| Empfangen 2. Satz Identitätsattribute | 320 |

↓

| Entschlüsseln Identitätsattribute | 322 |

↓

| Verschlüsseln Identitätsattribute | 324 |

↓

| Senden 2. Satz Identitätsattribute | 326 |

Fig. 5

| Installieren Applikation | 340 |

↓

| Senden erste Initialisierungsanfrage | 342 |

↓

| Empfangen erste Initialisierungsanfrage | 344 |

↓

| Senden zweite Initialisierungsanfrage | 346 |

↓

| Aufbau verschlüsselter Kanal | 348 |

↓

| Kryptographisches Koppeln | 350 |

Fig. 6

| | |
|---|---|
| Installieren Applikation | 360 |

↓

| | |
|---|---|
| Ermitteln zur Verfügung stehender Sicherheitselemente | 362 |

↓

| | |
|---|---|
| Auswählen Sicherheitselemente | 364 |

↓

| | |
|---|---|
| Senden erste Initialisierungsanfrage | 366 |

↓

| | |
|---|---|
| Empfangen erste Initialisierungsanfrage | 368 |

↓

| | |
|---|---|
| Senden zweite Initialisierungsanfrage | 370 |

↓

| | |
|---|---|
| Aufbau verschlüsselter Kanal | 372 |

↓

| | |
|---|---|
| Kryptographisches Koppeln | 374 |

Fig. 7

Fig. 8

**280**

Remote Server

**292**

Sicherheitselement

**200**

Auslesendes Computersystem

500: $K_{PU}$

502: Erzeugen
Geheimnis
$S(K_{PR}, \widetilde{K_{PU}})$

504: Erzeugen
Geheimnis
$S(K_{PU}, \widetilde{K_{PR}})$

506: Erzeugen
Zufallszahl RN

508: Erzeugen
$K_{SYM}(S, RN)$
$K_{MAC}(S, RN)$

510: Erzeugen
Authentisierungstoken
$T(K_{MAC}, \widetilde{K_{PU}})$

512: T, RN

514: Erzeugen
$K_{SYM}(S, RN)$
$K_{MAC}(S, RN)$

516: Validieren
T mit $K_{MAC}, \widetilde{K_{PU}}$

Fig. 9

Fig. 10

Fig. 11

Fig. 12A

Fig. 12B

**EP 4 295 536 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019100335 A1

55